(19) **Europäisches Patentamt**
**European Patent Office**
**Office européen des brevets**

(11) **EP 4 487 678 A1**

(12) **EUROPÄISCHE PATENTANMELDUNG**

(43) Veröffentlichungstag:
08.01.2025 Patentblatt 2025/02

(21) Anmeldenummer: 24186266.3

(22) Anmeldetag: 03.07.2024

(51) Internationale Patentklassifikation (IPC):
**A01G 13/02** (2006.01)

(52) Gemeinsame Patentklassifikation (CPC):
**A01G 13/0243**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: 03.07.2023 DE 102023117480

(71) Anmelder:
• **Meyerhuber, Alfred**
**91522 Ansbach (DE)**

• **Walther, Hans**
**91622 Rügland (DE)**

(72) Erfinder:
• **Meyerhuber, Alfred, Dr.**
**91522 Ansbach (DE)**
• **Walther, Hans, Dr.**
**91622 Rügland (DE)**

(74) Vertreter: **Manitz Finsterwald**
**Patent- und Rechtsanwaltspartnerschaft mbB**
**Martin-Greif-Strasse 1**
**80336 München (DE)**

(54) **AUFHALTER, VERBUNDMATERIAL, FLACHMATERIAL FÜR EINE VERBISSSCHUTZVORRICHTUNG, VERBISSSCHUTZVORRICHTUNG, VERBINDEVORRICHTUNG, FERTIGUNGSVORRICHTUNG**

(57) Ein Aufhalter 211, 270 für eine Verbissschutzvorrichtung, die mehrere im Verbau senkrecht und nebeneinander stehende längliche Holzelemente 131, 134, 141 oder Schindeln aufweist, die mit einem oder mehreren quer zur Längsrichtung der Schindeln laufenden biegsamen Streifen 132, 142 rohrähnlich zusammengehalten werden, hat einen Körper mit einer steifen oder elastisch verformbaren Form, die so gestaltet ist, dass der Körper im verbauten Zustand in Umfangsrichtung betrachtet an zwei oder drei oder vier oder mehreren oder allen Holzelementen oder Schindeln der Verbissschutzvorrichtung anliegt

EP 4 487 678 A1

**Beschreibung**

Die Erfindung betrifft Aufhalter, Verbund- und Flachmaterialien für eine Verbissschutzvorrichtung und eine damit gefertigte Verbissschutzvorrichtung.

Verbissschutzvorrichtungen dienen dazu, Setzlinge, Schösslinge oder Triebe junger Pflanzen, insbesondere junger Bäume, vor dem Verbiss durch Wild und anderen Tieren und gegen das Fegen zu schützen. In einer Bauart sind sie hüllenartige Strukturen, die den Schössling umgeben. Die Hülle kann Öffnungen aufweisen bzw. ist ein gitter- oder netzartiges Material. Die Verbissschutzvorrichtung soll in der Regel nicht das Mikroklima um die Pflanze herum beeinflussen und soll diese nur gering beschatten. Die Hülle wird über den verpflanzten Schössling gestülpt, umgibt ihn dann und wird an einem weiteren Stützpfosten, der in die Erde eingerammt ist, befestigt. Die Höhe des hüllenartigen Gebildes entspricht der Höhe, bis zu der erfahrungsgemäß eine Pflanze vor Verbiss geschützt werden muss. Sie kann z. B. 120 cm sein. Aus dieser Maßgabe ergibt sich dann auch das Erfordernis der nötigen Standzeit dahingehend, dass die Verbissschutzvorrichtung so lange bei der Pflanze wirksam sein muss, bis diese aus sich selbst heraus Wildverbiss entweder wegen ihrer zwischenzeitlichen Wuchshöhe vermeidet oder tolerieren kann. Faktisch führt dies zu Zeitdauern von einigen Jahren, während derer die Schösslinge von beispielsweise 20 cm oder 50 cm auf beispielsweise über 1 m oder 1,5 m Höhe wachsen. Für diese Zeitdauer soll die Pflanze vor Verbiss und ggf. dem Fegen geschützt sein, und dementsprechend lang soll die Verbissschutzvorrichtung ihre Funktion erfüllen. In der Praxis werden Forderungen nach fünf Jahren Standzeit erhoben.

Bisher bekannte Verbissschutzvorrichtungen der oben beschriebenen Art sind aus Kunststoffen gefertigt, die beispielsweise ein netzartiges Material bilden. Es kann schon schlauchartig/hüllenartig als sehr langes ("Endlos-") Vorprodukt gefertigt und aufgerollt sein. Von der Rolle wird es bei Verwendung abgerollt und entsprechend der gewünschten Höhe abgeschnitten.

Die DE 202019106087 U1 beschreibt eine aus vielen Einzelteilen aufgebaute Matte, die für den Verbissschutz verwendet wird und aus Holzzellulose gebaut ist.

Die DE 10025679 A1 beschreibt ein Verbissschutzelement mit einer Vielzahl von stabförmigen Elementen und quer dazu verlaufenden Bindeelementen.

Die FR 2769794 A1 und die US 2005/172550 A1 beschreiben einen Schutz für junge Pflanzen mit einer Aneinanderreihung von Stäben aus biologisch abbaubarem pflanzlichem Material, die durch ebenfalls biologisch abbaubare Schnürmittel miteinander verbunden sind.

Die EP 3957163 A1 zeigt den Gehalt betreffend Figuren 1 bis 26 dieser Anmeldung. Weitere relevante Veröffentlichungen sind FR 2850242 A1, WO 03/061369 A1, US 8745920 B1, DE 10 2010 017773 A1.

Ein Nachteil bekannter Verbissschutzvorrichtungen ist es, dass sie nach ihrem Verbau, also nach der Aufstellung an der zu schützenden Pflanze, verdrückt werden können. Dies kann durch Windkräfte geschehen oder durch angreifendes Wild. Verbissschutzvorrichtungen können dadurch womöglich flachgedrückt werden und behindern dann den Wuchs der geschützten Pflanze. Aufgabe der Erfindung ist es, eine Vorrichtung für eine Verbissschutzvorrichtung anzugeben, die dafür sorgt, dass eine damit versehene Verbissschutzvorrichtung nach dem Aufstellen vergleichsweise formstabil steht.

Diese Aufgabe wird mit den Merkmalen der unabhängigen Ansprüche gelöst.

Für eine Verbissschutzvorrichtung, die mehrere im Verbau senkrecht und nebeneinander stehende längliche Holzelemente oder Schindeln aufweist, die mit einem oder mehreren quer zur Längsrichtung der Schindeln laufenden biegsamen Streifen rohrähnlich zusammengehalten werden, ist ein an eine Verbissschutzvorrichtung anbaubarer Aufhalter vorgesehen. Der Aufhalter weist einen Körper mit einer steifen oder elastisch verformbaren Form auf, die so gestaltet ist, dass der Körper im verbauten Zustand in Umfangsrichtung betrachtet an zwei oder drei oder vier oder mehreren oder allen Holzelementen oder Schindeln der Verbissschutzvorrichtung anliegt.

Statt Schindeln kann die Verbissschutzvorrichtung auch ein schlauchartig zusammengefasstes Flachmaterial aufweisen, das von dem Aufhalter offengehalten wird.

Eine Verbissschutzvorrichtung im Sinne dieses Texts kann auch dem Fegeschutz dienen und kann dementsprechend auch als Fegeschutzeinrichtung angesehen bzw. bezeichnet werden.

Der Aufhalter behindert das Verdrücken der einmal gewählten Aufstellung der Verbissschutzvorrichtung an der Pflanze, indem er elastisch resilient oder mehr oder minder steif gegenhaltende Kräfte gegen verformende Kräfte bewirkt, die einer Verformung der Aufstellung einer Verbissschutzvorrichtung entgegenwirken.

Die beschriebenen Aufhalter können separate Handelsware sein und können zu Baumaterialien für sonst hier beschriebene oder andere Verbissschutzvorrichtungen zukaufbar sein. Sie können aber auch Teil von Bausätzen für solche Verbissschutzvorrichtungen sein.

Der Aufhalter kann aus einem oder mehreren natürlich und/oder biologisch abbaubaren Materialien gefertigt sein. Sein Körper kann C- oder O- oder L-förmig sein. Er kann mehrere längliche Holzleisten aufweisen, von denen je zwei an ihren Endbereichen unter einem Winkel aneinander befestigt sind, der größer als 45 oder 60 oder 80° und/oder kleiner als 135 oder 120 oder 100° sein kann. Zwei Holzleisten können mit einem vorzugsweise aus natürlich und/oder biologisch abbaubaren Materialien gefertigten Verbindungsmittel aneinander befestigt sein, vorzugsweise mit einer Klammer oder Schraube oder mit einem Holzdübel. Zwei zu verbindende Endbereiche zweier Holzleisten weisen zueinander komplementäre Formgebungen auf, vorzugsweise konkav-konvexe Bereiche.

Der Körper des Aufhalters kann einen oder mehrere vorzugsweise miteinander verbundene und vorzugsweise C- oder O- oder L-förmig gebogene Drähte oder Blechstreifen aufweisen. Solche Drähte oder Blechstreifen können aus rostendem Eisen gefertigt und so dimensioniert sein, dass sie hinreichend lange - einige Jahre - ausreichend kräftig Gegenkräfte gegen Verformungskräfte erzeugen, bevor das Rosten so weit fortgeschritten ist, dass Gegenkräfte nachlassen bzw. das Material bricht.

Der Körper des Aufhalters kann auch einen oder mehrere womöglich miteinander verbundene C-förmig gebogene Holzspäne aufweisen. Auch sie sind so dimensioniert, dass sie hinreichend lange - einige Jahre - ausreichend kräftig Gegenkräfte gegen Verformungskräfte erzeugen, bevor der biologische Abbau so weit fortgeschritten ist, dass Gegenkräfte nachlassen bzw. das Material bricht.

Der Körper des Aufhalters kann so geformt ist, dass er an der Innenseite einiger oder aller Holzelemente anliegen kann. Er kann sich nach dem Verbau elastisch von innen nach außen drückend einspreizen oder kann starr so eingespreizt sein.

Der Körper des Aufhalters kann auch so geformt ist, dass er an der Außenseite einiger Holzelemente anliegen kann.

Der Körper des Aufhalters kann auch so geformt ist, dass er im Verbau von einer schlauchartig zusammengefassten Matte umgeben ist oder dass der Aufhalter im Verbau die schlauchartig zusammengefasste Matte umgibt.

Eine Verbissschutzvorrichtung weist Schindeln oder eine schlauchartig zusammengefasste Matte sowie mindestens einen Aufhalter auf, der im Verbau die Schindeln oder die Matte offenhält.

Eine Verbissschutzvorrichtung hat mehrere im Verbau senkrecht und nebeneinander stehende längliche Holzelemente oder Schindeln, die mit einem oder mehreren quer zur Längsrichtung der Schindeln laufenden Haltebändern rohrähnlich zusammengehalten werden. Ein Aufhalter für eine solche Verbissschutzvorrichtung weist einen Körper mit steifer oder elastisch verformbarer Form auf, die so gestaltet ist, dass der Körper im verbauten Zustand in Umfangsrichtung betrachtet an zwei oder drei oder vier oder mehreren oder allen Schindeln der Verbissschutzvorrichtung anliegt. "Rohrähnlich" bedeutet, dass die Verbissschutzvorrichtung eine längliche Form, die im Verbau senkrecht steht, und eine in Umfangsrichtung umlaufend verbundene bzw. geschlossene Struktur hat. Es sollen damit aber keine völlig geschlossenen Wandungen angesprochen sein.

Eine Verbissschutzvorrichtung hat ein Verbundmaterial, das mehrere längliche, nebeneinander angeordnete Holzelemente aufweist, mindestens einen Streifen Fasermaterial, der wenigstens zwischen zwei Holzelementen und diese zwei Holzelemente wenigstens teilweise überdeckend angeordnet ist, Verbindungen an den Überdeckungen der Holzelemente und des Fasermaterials, wobei die Holzelemente und das Fasermaterial und die Verbindungen natürlich und/oder biologisch abbaubar sind und als Verbundmaterial zu einer Verbissschutzvorrichtung aufstellbar oder aufgestellt sind. Die Verbissschutzvorrichtung weist außerdem wenigstens einen in den Boden einschlagbaren Stützpfosten auf, an dem das Verbundmaterial befestigt oder befestigbar ist, und eine ein- oder mehrteilige Haltevorrichtung, die eine Verschiebung des Grundrisses der Aufstellung der Verbissschutzvorrichtung behindert bzw. den einmal hergestellten Grundriss der Aufstellung stabilisiert.

Die Haltevorrichtung bewirkt, dass äußere mechanische Einflüsse wie etwa Wind oder vorbeistreichendes Wild die aufgestellte Verbissschutzvorrichtung nicht oder nur schwer oder nur reversibel flach drücken können. Vielmehr wird das Verdrücken der Verbissschutzvorrichtung behindert, sie bleibt im Wesentlichen wie ursprünglich aufgestellt stehen. die Aufstellung wird so stabilisiert.

Die Aufstellung der Verbissschutzvorrichtung umfasst das in den Boden Einschlagen eines Stützpfosten, davor oder danach die Befestigung des Verbundmaterials an dem Stützpfosten und die Ausrichtung des befestigten Verbundmaterials in einem gewünschten Grundriss, etwa viereckig bei vier Holzelementen oder allgemein n-eckig bei n Holzelementen.

Die Haltevorrichtung kann ein sich in den Innenumfang der Verbissschutzvorrichtung einspreizendes und etwa in Umfangsrichtung laufendes Halteelement aufweisen, vorzugsweise ein elastisches Holzelement. Das Einspreizen drückt die Holzelemente nach außen, was von dem haltenden Fasermaterial begrenzt wird. Auf diese Weise wird der offene Grundriss der Aufstellung elastisch offen gehalten.

Die Haltevorrichtung kann auch eine oder zwei oder mehrere Leisten vorzugsweise aus Holz aufweist, deren jeweilige Außenseite in der Aufstellung an der Innenseite eines jeweiligen Holzelements anliegt und deren jeweilige innenseite an den vertikalen Kanten der jeweiligen benachbarten Holzelemente anliegt.

Vorzugsweise sind zwei solcher Leisten in der Höhe mehr oder minder gegeneinander versetzt an benachbarten Holzelementen angebracht, so dass sie in Draufsicht über Kreuz liegen und auf diese Weise das dauerhafte Verdrücken der einmal vorgenommenen Aufstellung behindern oder verhindern.

In Höhenrichtung betrachtet können die Leisten in der Nähe von Fasermaterialstreifen angebracht sein, also z. B. knapp darüber oder knapp darunter.

Die Verbissschutzvorrichtung kann mindestens vier oder mehr schindelartigen Holzelemente aufweisen, von denen die zwei Äußeren an einem einschlagbaren Stützpfosten befestigt oder befestigbar sind, wobei die jeweils eine Seite der Leisten an der Innenseite eines jeweiligen Holzelements anliegt, das nicht an einem einschlagbaren Stützpfosten befestigt ist. Die an einem einschlagbaren Stützpfosten befestigten Holzelemente werden durch diese Befestigung in etwa in dem aufgestellten Grundriss gehalten. Die anderen Holzelemente werden dann untereinander und gegen die befestigten mHolzelemente mit den Leisten ausgesteift.

Die Leiste kann an dem Holzelement befestigt sein, vorzugsweise mit einer oder mehreren Klammern, z. B. durch Tackern, vorzugsweise nach der Aufstellung.

Eine Verbissschutzvorrichtung kann wie oben beschrieben ausgebildet sein. Sie weist das beschriebene Verbundmaterial und wenigstens einen bei der Aufstellung der Verbissschutzvorrichtung in den Boden einschlagbaren Stützpfosten auf, an dem das Verbundmaterial befestigt oder befestigbar ist. Die Dimensionierung ist so, dass in der Aufstellung eines oder mehrere oder alle der Holzelemente einen Abstand vom Boden haben, der größer als 5 oder 10 oder 15 oder 20 cm ist und der kleiner als 50 oder 30 oder 20 cm ist. Durch den Abstand vom Boden wird verhindert, dass Feuchtigkeit aus dem Boden von unten in die Holzelemente dringt und zu deren schnellerem Verfall beiträgt.

In der Aufstellung können die Holzelemente 131 gleiche oder unterschiedliche Abstände vom Boden haben, und wenn sie unterschiedlichen sind dann insbesondere so, dass wenigstens ein Holzelement weniger als 5 oder 2 cm vom Boden beabstandet ist oder auf ihm aufsteht. Ein solches aufstehendes Holzelement kann der weiteren Stabilisierung der Aufstellung dienen und kann über den Umfang betrachtet dem Stützpfosten weitestmöglich gegenüber liegen.

Ein Verbundmaterial für eine Verbissschutzvorrichtung kann mehrere längliche, nebeneinander angeordnete Holzelementen, mindestens einen Streifen Fasermaterial, der benachbarte Holzelemente wenigstens teilweise überdeckt, und Verbindungen an den Überdeckungen der Holzelemente und des Fasermaterials aufweisen. Die Holzelemente und das Fasermaterial und die Verbindungen sind natürlich (z. B. verrosten) und/oder biologisch (z. B. verrotten) abbaubar.

Ein Streifen des Fasermaterial kann mehrere Holzelemente kreuzend angeordnet sein, um diese zusammenzuhalten. Es kann aber auch je ein Streifen Fasermaterial den Freiraum zwischen zwei benachbarten Holzelementen überbrücken und diese Holzelemente selbst an ihren Rändern, aber nicht über ihre gesamte Breite überdecken, wo er befestigt wird.

Mit dem Verbundmaterial kann eine Verbissschutzvorrichtung gebaut werden. Die Holzelemente geben ihr die nötige Steifheit und Schutzfunktion. Das verbundene Fasermaterial hält die Holzelemente flexibel zusammen, so dass sie vor dem Verbau platzsparend gehandhabt werden können. Wegen der natürlichen und/oder biologischen Abbaubarkeit muss die Verbissschutzvorrichtung nicht aus dem Wald entfernt werden. Vorzugsweise enthalten das Verbundmaterial und die Verbissschutzvorrichtung keine Komponenten, die nicht natürlich und/oder biologisch abbaubar sind.

Die Holzelemente können flach ausgebildet sein und eine mittlere oder maximale Dicke haben, die unter 10 oder 5 oder 4 oder 3 oder 2 oder 1 mm liegt und die über 0,5 oder 1 oder 2 mm liegen kann, und können rechteckigen Grundriss haben. Die Holzelemente können Holzbretter und/oder Spankistenholz und/oder Schindelholz und/oder Spanplatten und/oder Schwartenteile und/oder Produktionsabfälle sein oder aufweisen. Als Schindelholz können Bretter verstanden werden, deren Holzstärke (Mittelwert oder Maximalwert) wie oben als Dicke definiert ist und vorzugsweise zwischen 1 und 5 mm liegt. Sie können im Herstellungsprozess gesägt oder gemessert oder gespalten sein und können entsprechend dem Holzfaserverlauf uneben bzw. wellig sein.

Die Holzelemente können auch Holzstäbe oder Holzruten sein oder aufweisen, deren größter Durchmesser unter 20 oder 15 oder 10 mm liegt und über 5 oder 10 mm liegen kann. Es können Weidenruten und/oder Haselruten und/oder Astwerk sein.

Die Holzelemente können unterschiedliche Längen haben. Relativ kurze können im Verbau oben liegen, so dass über den Umfang ein Schössling eher oben von vielen Holzelementen umgeben und dadurch gut geschützt ist. Längere Holzelemente können von oben bis zum Boden reichen und dort aufstehen. Womöglich noch längere Holzelemente können in den Boden eingeschlagen werden und dann also von oben bis in den Boden hinein reichen. Die Holzelemente können voneinander einen Abstand haben, der wenigstens 2 oder 5 oder 10 oder 20 oder 50 mm ist und der höchstens das Fünffache oder Dreifache oder das Doppelte der Breite eines Holzelements sein kann.

Das Fasermaterial kann Naturfasern sein oder aufweisen, insbesondere Fasern von Jute und/oder Sisal und/oder Kokos und/oder Hanf und/oder Bast und/oder Wolle und/oder Rindenstreifen und/oder Produktionsabfällen. Das Fasermaterial kann verwoben und/oder versponnen und/oder verknotet sein, insbesondere zu einem Seil und/oder zu einem Gewebe, insbesondere einem Netz. Das Fasermaterial kann aber auch wenigstens teilweise unversponnen und/oder verfilzt verwendet werden. Es kann als Matte vorliegen, an die ein oder mehrere Holzelemente angebracht sind.

Es können mehreren Streifen eines mehrere oder alle Holzelemente einer Verbissschutzvorrichtung kreuzenden Fasermaterials vorgesehen sein, die in y-Richtung beabstandet voneinander liegen und jeweils eine Breite kleiner als die Länge L eines Holzelements haben.

Es können auch mehrere in x-Richtung beabstandete Streifen Fasermaterial vorgesehen sein, die den Freiraum zwischen zwei benachbarten Holzelementen überbrücken und diese Holzelemente selbst an ihren Rändern, aber nicht über ihre gesamte Breite überdecken. Am Rand wird die Befestigung durchgeführt. Solche Streifen können sich über die gesamte Länge L (in y-Richtung) oder nur über einen Teil davon erstrecken.

Die Verbindungen zwischen Holzelemente und das Fasermaterial kann ein Klebstoff sein oder ihn aufweisen, etwa ein Leim und/oder ein Harzmaterial. Die Verbindungen kann aber auch ergänzend oder ausschließlich mechanisch sein und das Einschieben der Holzelemente zwischen Fasern des Fasermaterials sein oder aufweisen. Die Verbindung kann ergänzend oder ausschließlich mechanische Befestigungselemente aufweisen. Diese können Metallklammern aufweisen und ggf. Konter-Holzstücke. Die Klammern können Eisen aufweisen oder vollständig daraus bestehen und können unverzinkt sein.

Ein oder mehrere Holzelemente und/oder das Fasermaterial und/oder eine Verbindung können mit einem die Verwitterung beeinflussenden, insbesondere verlangsamenden Stoff und/oder mit einem Vergrämungsmittel bearbeitet und/oder bestrichen und/oder getränkt sein. Diese Stoffe sind vorzugsweise natürliche oder naturidentische Stoffe und/oder sind natürlich und/oder biologisch abbaubar. Das Fasermaterial kann mit einem seine Steifheit beeinflussenden, insbesondere erhöhenden Stoff bearbeitet und/oder bestrichen und/oder getränkt sein. Dieser Stoff ist vorzugsweise ein natürlicher oder naturidentischer Stoff oder Stoffgemisch und/oder ist natürlich und/oder biologisch abbaubar.

Eine Matte für eine Verbissschutzvorrichtung weist ein Fasermaterial auf, das natürlich und/oder biologisch abbaubar ist. Eine Matte für eine Verbissschutzvorrichtung kann auch ein metallisches Gewebe oder Gestrick aufweisen, das natürlich rostet. Sie kann ohne daran angebrachte weitere Elemente bzw. Holzelemente Handelsware sein. Sie kann zu einer Rolle aufgerollt sein. Oder es können an der Matte in regelmäßigen Abständen Holzelemente angebracht sein, die die Mattenkante überragen und im Einsatz nach unten zeigen und in den Boden eingeschlagen werden können. Der Abstand ergibt sich dann aus der gewünschten Anzahl dieser Einschlagtützen pro Verbissschutzvorrichtung.

Das Material der Matte kann versponnen und/oder verwebt und/oder verknotet und/oder verstrickt sein, oder es kann unversponnen und/oder verfilzt sein.

Die Matte kann schlauchartig zusammengefasst sein, wobei der Innenumfang des Schlauchs dem Innenumfang der zu fertigenden Verbissschutzvorrichtung entspricht.

Eine Verbissschutzvorrichtung weist ein Verbundmaterial und/oder eine schlauchartig zusammengefasste Matte wie oben beschrieben auf und hat wenigstens einen einschlagbaren Stützpfosten. Sie kann außerdem einen oder mehrere Aufhalter wie in diesem Text beschrieben oder Stützringe aufweisen, die eine schlauchartig zusammengefasste Matte offen halten. Auch die Aufhalter bzw. Stützringe können natürlich (z. B. durch Rosten) und/oder biologisch (z. B. durchVverrotten) abbaubar sein. Sie können natürliche Ruten und/oder Holzleisten und/oder einen Draht und/oder einen Blechstreifen aufweisen.

Ein Flachmaterial für eine Verbissschutzvorrichtung ist vollflächig oder netz- oder gitterartig oder als Gestrick oder Gewebe ausgebildet und weist dann zahlreiche regelmäßig und/oder unregelmäßig geformte und/oder angeordnete Öffnungen auf. Das Material ist natürlich (z. B. durch Rosten) und/oder biologisch (z. B. Verwesung u. ä.) abbaubar. Es kann Fasermaterial oder metallische Fasern bzw. Drähte aufweisen.

Wegen seiner natürlichen bzw. biologischen Abbaubarkeit zersetzt sich das Material allmählich während seines Verbleibs im Wald bzw. am geschützten Schössling. Da es auf diese Weise abgebaut wird, ist ein nachträgliches Entfernen nicht nötig. Vorzugsweise enthalten das Flachmaterial und eine damit gebaute Verbissschutzvorrichtung keine Komponenten, die nicht natürlich und/oder biologisch abbaubar sind.

Das Flachmaterial kann bis zum vollständigen Abbau zum Verbleib an der mit ihm verbissgeschützten Pflanze geeignet sein und kann auch dafür bestimmt sein. Unter Eignung werden hier die technischen Parameter verstanden, insbesondere die Zeit hinreichender Festigkeit, um den gewünschten Verbissschutz zu gewährleisten. Unter "Bestimmtheit" des Flachmaterials wird hier die Tatsache angesprochen, dass das Material unter rechtlichen Vorgaben bis zu seiner vollständigen Zersetzung an der geschützten Pflanze verbleiben kann, soweit Bestimmungen gelten und einzuhalten sind. Gleiches kann für das beschriebene Verbundmaterial gelten.

Das Flachmaterial weist zu einem großen Teil nachwachsende Rohstoffe und/oder rostendes Metall auf. Es kann sich hier um Holzmaterial oder um Bambusmaterial handeln. Es können hier Schälschindelholz und/oder Sägeschindelholz dieser Materialien verwendet werden und/oder Holzfeinspäne (entsprechend MDF-Platten) oder Holzspäne (entsprechend Pressspanplatten) und/oder Holzgrobspäne (entsprechend OSB-Platten). Es kann auch Holzwolle aufweisen oder Sisal oder Flachs oder ein Gemisch aus diesen Materialien. Gleiches kann für das beschriebene Verbundmaterial gelten.

Das Flachmaterial kann miteinander verbundene, insbesondere miteinander verleimte und/oder verklebte Einzelteile aufweisen. Die Einzelteile können Holzspänen einschließlich Holzfeinspänen oder Holzgrobspänen, vergleichsweise klein sein und zu einer größeren Fläche des Flachmaterials verklebt sein. Es können aber auch größere Flächen einstückig gebildet sein, etwa aus Schindelholzplatten, die ihrerseits wieder zu größeren Strukturen verklebt sind.

Das Flachmaterial kann Nadelholz und/oder Laubholz und/oder Bambusmaterial aufweisen, insbesondere als Schindelholz und/oder Spanmaterial. Vorzugsweise weist es Nadelholz (Kiefer, Fichte, Lärche, Tanne oder Gemisch daraus) auf, da deren Harzgehalt der Standzeit zuträglich ist. Vorzugsweise weist es nicht Buche auf. Diese Hölzer haben eine vergleichsweise geringe Witterungsbeständigkeit. Gleiches kann für das beschriebene Verbundmaterial gelten.

Das Flachmaterial kann auch Fasermaterial aufweisen, etwa Flachs und/oder Sisal und/oder Hanf und/oder Holzwolle, das geeignet und insbesondere in die gewünschte Geometrie verfilzt oder verwoben und darin geeignet fixiert ist. Es kann auch kombiniert mit den genannten Spänen oder Schindelholzen verarbeitet sein.

Das Flachmaterial kann ganz oder bereichsweise mit einem die biologische Abbaubarkeit beeinflussenden Material getränkt oder bestrichen (einseitig oder beidseitig) sein. Dieses Material kann seinerseits biologisch und/oder natürlich abbaubar sein. Es kann sich um einen natürlichen Werkstoff handeln. Es kann Harz und/oder Leinölfirnis oder Ähnliches umfassen. Gleiches kann für das beschriebene Verbundmaterial gelten.

Die Dicke des Flachmaterials kann kleiner 5 mm oder kleiner 4 mm oder kleiner 3 mm oder kleiner 2 mm sein. Sie kann größer 1 mm oder größer 2 mm sein. Die Breite des Flachmaterials kann größer 200 oder größer 300 oder größer 400 oder größer 500 mm sein und kann kleiner 1500 mm oder kleiner 1000 mm sein. Die Länge kann größer oder gleich der Breite des Flachmaterials sein. Die Breite des Flachmaterials kann so sein, dass sie der Höhe einer damit zu bildenden Verbissschutzvorrichtung entspricht. Aber auch die Länge kann so dimensioniert sein.

Das Flachmaterial kann zweilagig gefertigt sein, wobei die zwei Lagen längs zweier paralleler Kanten der Einzellagen miteinander verbunden sind. Es entsteht auf diese Weise ein schlauchartiges Gebilde, das in Verwendung aufgespreizt und dann um die zu schützende Pflanze herum aufgestellt werden kann.

Das Flachmaterial kann auch flächig verstrickte oder verwebte Naturfasern oder rostende Drähte aufweisen. Die Fläche ist so dimensioniert, dass sie für die Hülle wenigstens einer Verbissschutzvorrichtung ausreicht oder dass mehrere Hüllen daraus abgelängt bzw. herausgeschnitten werden können. Auch gewebtes oder gestricktes Flachmaterial kann schlauchartig zusammengefasst sein und als aufgerolltes Material für viele Verbissschutzvorrichtungen vorliegen.

Die Länge des Flachmaterials kann größer 2 m oder größer 5 m oder größer 10 m oder größer 20 m sein. Es kann längs der Längsrichtung aufgerollt sein. Dementsprechend ist es von der Rolle abrollbar und kann dann ablängbar bzw. abschneidbar sein. Das Abschneiden kann beispielsweise mittels eines Messers oder einer Schere oder einer Säge erfolgen. Gleiches kann für das beschriebene Verbundmaterial gelten.

Das Flachmaterial ist so ausgelegt, dass es unter durchschnittlichen klimatischen Bedingungen am Einsatzort eine Standzeit von über zwei oder über drei oder über vier Jahren hat, die aber unter zehn Jahren oder unter sieben Jahren oder unter fünf Jahren liegt. Die Parametrisierung des Materials kann so sein, dass es nach einem oder nach zwei Jahren Zeit am Einsatzort unter durchschnittlichen klimatischen Bedingungen am Einsatzort mindestens 5 % oder mindestens 10 % oder mindestens 20 % und vorzugsweise höchstens 60 % oder höchstens 50 % oder höchstens 40 % seines ursprünglichen Materialgewichts und/oder seiner ursprünglichen Standfestigkeit und/oder Scherfestigkeit und/oder Zugfestigkeit und/oder Biegefestigkeit aufgrund biologischen bzw. natürlichen Abbaus verloren hat. Regelmäßig wird die Abbaugeschwindigkeit so sein, dass zum Ende der nominellen Verbissschutzzeit (z. B. fünf Jahre) noch Material vorhanden ist, das dann weiter verfällt. Gleiches kann für das beschriebene Verbundmaterial gelten.

Das Flachmaterial kann zu mindestens 70 % oder 80 % oder 90 % (Volumen) aus nachwachsenden Rohstoffen bestehen, insbesondere Holzmaterial und/oder Bambusmaterial. Der Rest kann Verleimungsmaterial und/oder Verbindungsmaterial sein, das seinerseits wieder biologisch/natürlich abbaubar sein kann, sowie Zuschlagstoffe. Gleiches kann für das beschriebene Verbundmaterial gelten. Es kann auch rostende Drähte mit oder aus Metall, insbesondere Eisen, etwa aufweisen.

Das Flachmaterial kann so beschaffen sein, dass es, wenn es zur Verbissschutzvorrichtung verbaut ist, die Funktion des Fegeschutzes hat. Zur Gewährleistung des Fegeschutzes ist das Flachmaterial so ausgelegt, dass es eine Barriere für das Wild darstellt, so dass das Fegen an anderen Pflanzen stattfindet. Gleiches kann für das beschriebene Verbundmaterial gelten.

Die Öffnungen des Flachmaterials nehmen jeweils mindestens 20 oder 40 oder 50 oder 60 oder 70 oder 80 oder 90 % der Gesamtfläche des Materials, wie sie durch seine Außenkanten definiert ist, ein. Sie kann zwischen 45% und 55% liegen.

Wenn Öffnungen im Flachmaterial vorgesehen sind, können diese schon anfänglich in das Flachmaterial eingeformt sein, oder können nachträglich aus einem vollflächig gefertigten Material herausgestanzt oder herausgeschnitten oder herausgebrannt sein.

Eine Verbissschutzvorrichtung für Pflanzen, insbesondere für Setzlinge oder Schösslinge eines Baums, ist mit dem Flachmaterial wie oben beschrieben gebildet und kann einen Aufhalter wie beschrieben aufweisen. Insbesondere wird sie dadurch gebildet, dass das flächige Material röhrenartig oder hüllenartig längs zweier paralleler Kanten zusammengefasst wird, sodass eine die Pflanze umgebende und anfänglich vorzugsweise auch nach oben überragende Struktur entsteht, die um die Pflanze herum ausgebracht werden und dort verbleiben kann. Gleiches kann für die Verwendung des beschriebenen Verbundmaterials gelten.

Der Grundriss kann rundlich oder ovalartig sein und sich durch die Materialsteifigkeit von selbst einstellen. Es können aber auch Sollknickstellen in das Flachmaterial eingearbeitet sein (etwa Linien geringerer Materialstärke), so dass beim Zusammenfassen der parallelen Kanten Knicke entstehen. Der Grundriss kann dann eckiger erscheinen, z. B. mit drei oder vier oder fünf oder sechs oder mehr Ecken. Gleiches kann für die Verwendung des beschriebenen Verbundmaterials gelten.

Der Durchmesser einer so gebildeten Struktur bzw. der Durchmesser eines flächengleichen Kreises dazu kann über 8 cm oder über 10 cm oder über 15 cm liegen. Er kann unter 50 cm oder unter 20 cm liegen. Die Höhe kann der Breite des Flachmaterials entsprechen. Sie kann größer als 40 cm oder größer als 60 cm oder größer als 100 cm sein. Sie kann unter 150 cm liegen. Gleiches kann für die Verwendung des beschriebenen Verbundmaterials gelten.

Das Zusammenfassen des Flachmaterials kann mit Überlapp längs der zusammengefassten Kanten oder "auf Kante" ohne Überlapp erfolgen. Durch geeignete Einrichtungen werden die Kanten beieinander gehalten. Es kann sich hierbei um Schnüre, Klammern, Stifte, Rödeldraht oder Ähnliches handeln. Vorzugsweise sind auch diese Halteeinrichtungen biologisch bzw. natürlich (Rost) abbaubar. Gleiches kann für das beschriebene Verbundmaterial gelten.

Die Verbissschutzvorrichtung kann neben der rohrartigen Struktur einen Stützpfosten aufweisen, der in den Boden einrammbar oder einschlagbar ist, also wenigstens an einem Ende beispielsweise angespitzt sein kann. Auch dieser Stützpfosten kann aus biologisch/natürlich abbaubarem Material bestehen, insbesondere aus unbehandeltem Holz. Die aus dem Flachmaterial gebildete rohrförmige oder hüllenartige Struktur wird auch an dem Stützpfosten befestigt. Dies geschieht vorzugsweise mit der gleichen Befestigungsvorrichtung, mit der auch die Kanten des Flachmaterials zusammengehalten werden. Gleiches kann für die Verwendung des beschriebenen Verbundmaterials gelten.

Die biologische bzw. natürliche Abbaubarkeit des Gesamtaufbaus kann 100% der verwendeten Materialien binnen einer bestimmten Zeit, etwa 15 oder 10 oder 8 Jahre ab dem Ausbringen, bedeuten. Sie kann, muss aber nicht alle erfassten Materialien (100 %) erfassen. Soweit Materialien verbleiben bzw. langsamer als genannt abgebaut werden, sind sie zum Verbleib an der Pflanze unkritisch und bestimmt und geeignet. Gleiches kann für das beschriebene Verbundmaterial gelten.

Eine Verbindevorrichtung hat mehrere Köpfe, die dazu ausgelegt sind, in eine Kreuzung von Holzelement und Fasermaterial und ggf. Konterholz gleichzeitig je einen Verbinder einzutreiben.

Eine Fertigungsvorrichtung für ein Verbundmaterial wie beschrieben hat eine erste Zuführvorrichtungen zum Zuführen länglicher Holzelemente zu einer Arbeitsstelle derart, dass die Holzelemente in Querrichtung quer zu ihrer Längsrichtung voneinander beabstandet sind, eine zweite Zuführvorrichtung zum Zuführen mehrerer Streifen Fasermaterials zu der Arbeitsstelle derart, dass sie sich in Querrichtung erstrecken und in Längsrichtung voneinander beabstandet sind und die zugeführten Holzelemente kreuzen, an der Arbeitsstelle eine Verbindevorrichtung zum Verbinden von Holzelement und Fasermaterial an ihrer Kreuzungsstelle, vorzugsweise wie oben beschrieben, und eine Transportvorrichtung zum Transportieren der zugeführten Holzelemente und Fasermaterialstreifen über die Arbeitsstelle hinweg und von ihr fort.

Nachfolgend werden Ausführungsformen der Erfindung bezugnehmend auf die Zeichnungen beschrieben, es zeigen:

Fig. 1          ein Flachmaterial,
Fig. 2 und 3    aufgerolltes Flachmaterial,
Fig. 4 bis 7    Ausführungsformen des Flachmaterials,
Fig. 8 und 9    eine Verbissschutzvorrichtung perspektivisch und in Schnittdarstellung,
Fig. 10 bis 12  Einzelheiten zu Verbissschutzvorrichtungen,
Fig. 13a bis c  ein Verbundmaterial,
Fig. 14a und b  ein Verbundmaterial,
Fig. 15 bis 17  Einzelheiten des Verbundmaterials,
Fig. 18 und 19  Verbissschutzvorrichtungen mit dem Verbundmaterial oder einer Matte, Merkmale zum Verbau einer Matte,
Fig. 20

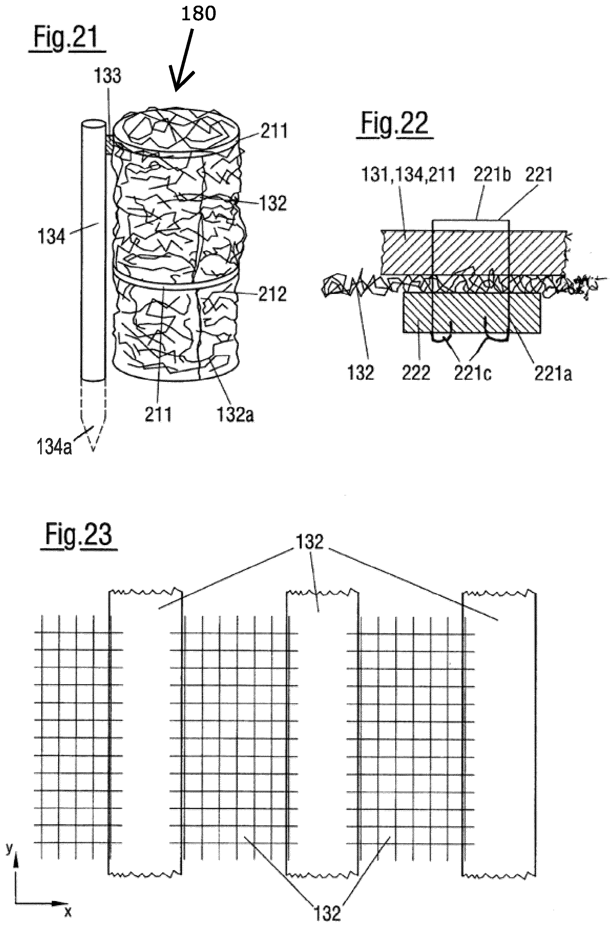

Fig. 21         eine Verbissschutzvorrichtung perspektivisch,
Fig. 22         eine Verbindung,
Fig. 23         ein Flachmaterial,

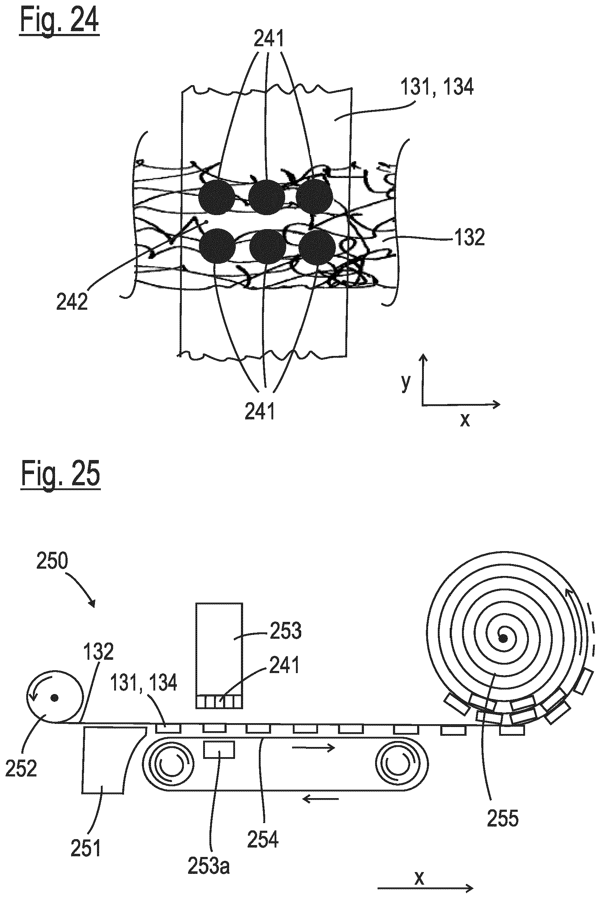

Fig. 24         Merkmale einer Verbindevorrichtung,
Fig. 25         schematisch eine Fertigungsvorrichtung,

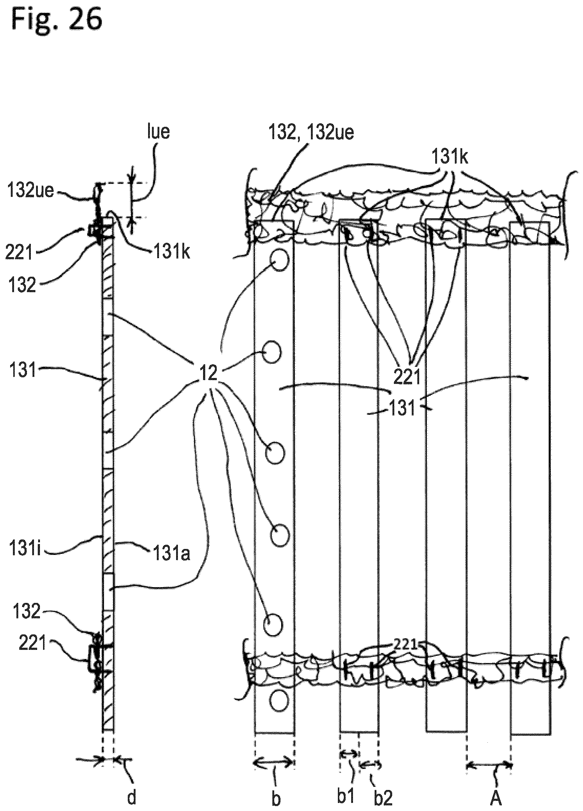

Fig. 26         weitere Merkmale des Verbundmaterials,

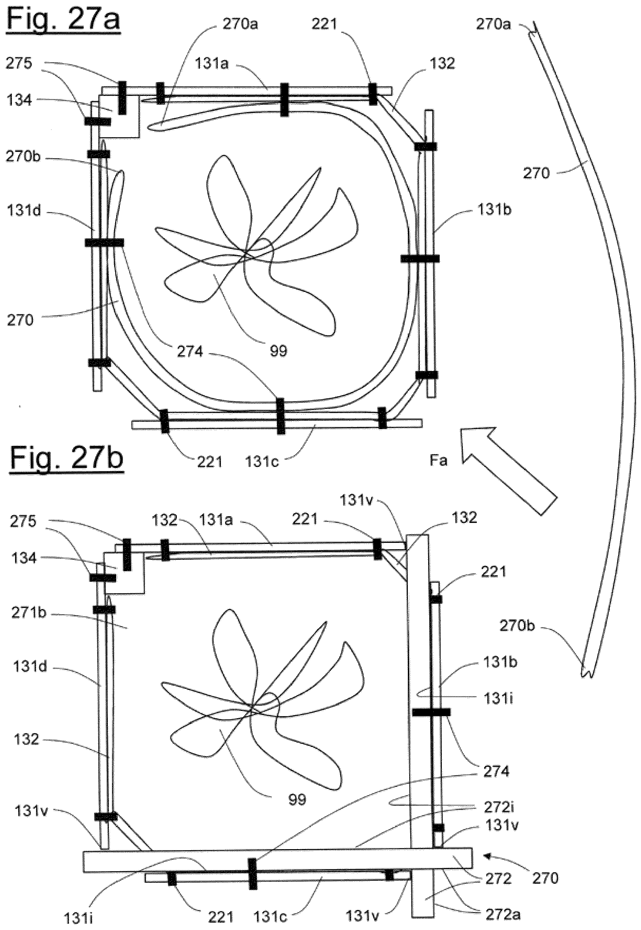

Fig. 27a bis n  Verbissschutzvorrichtungen mit Aufhaltern oder Merkmale von Aufhaltern alleine,

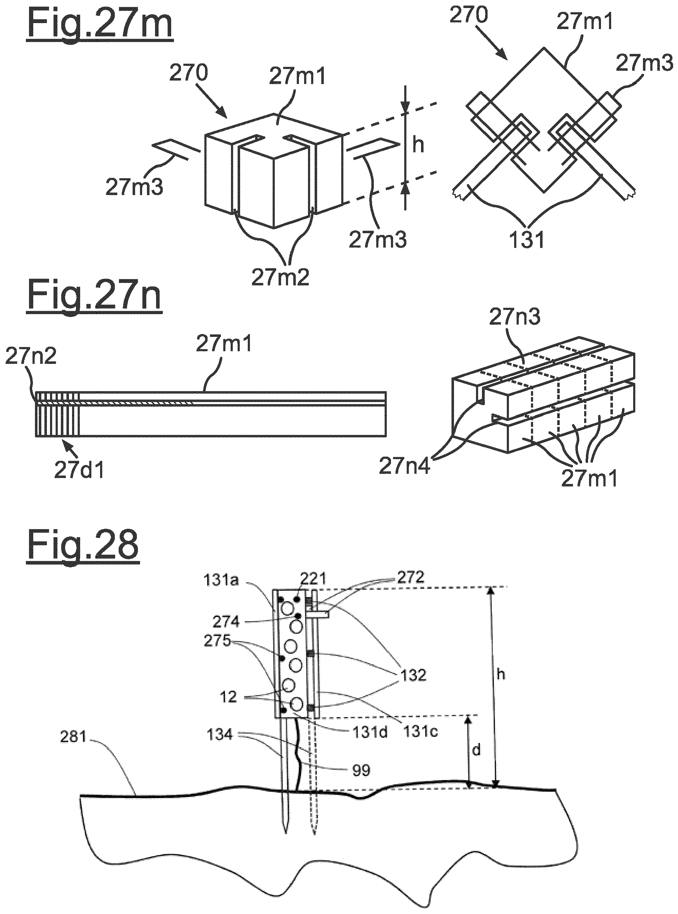

Fig. 28         eine Aufstellung einer Verbissschutzvorrichtung,

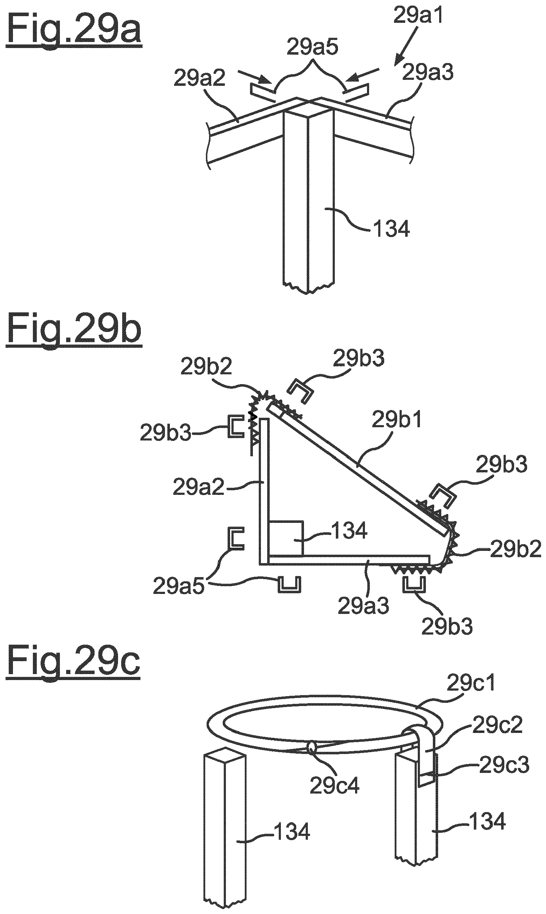

Fig. 29a bis h  Ausführungsformen von Verbissschutzvorrichtungen,

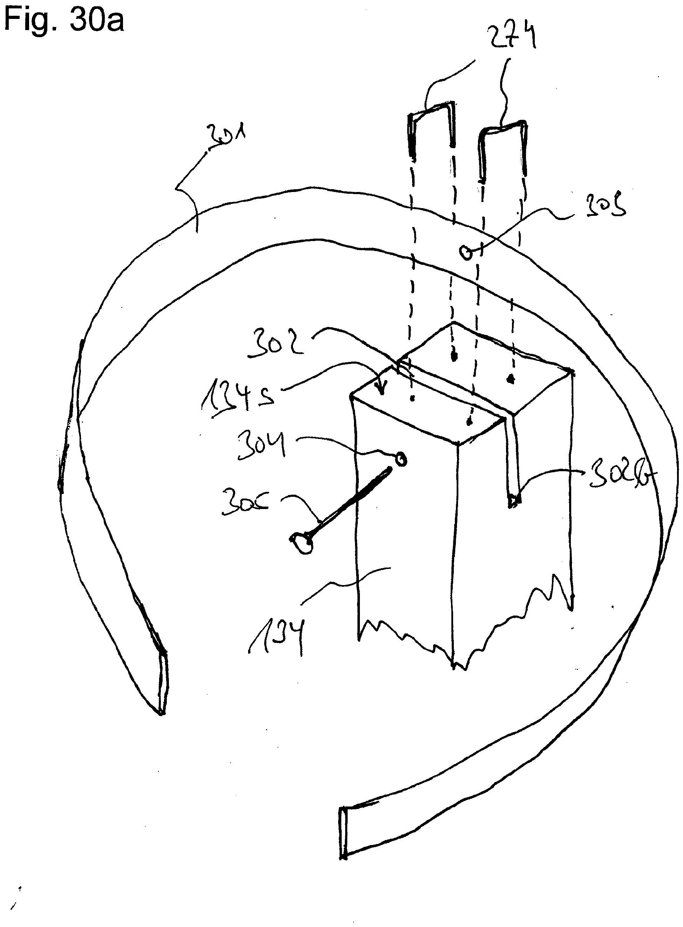

Fig. 30a bis e  weitere Bauarten von Aufhaltern,

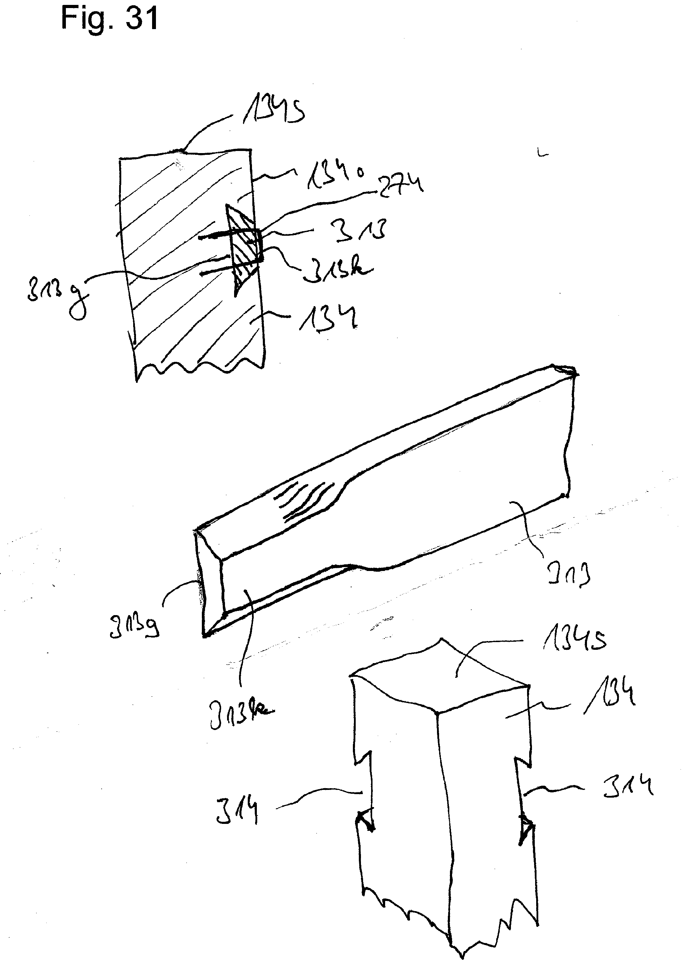

Fig. 31         eine weitere Bauart von Aufhaltern, und

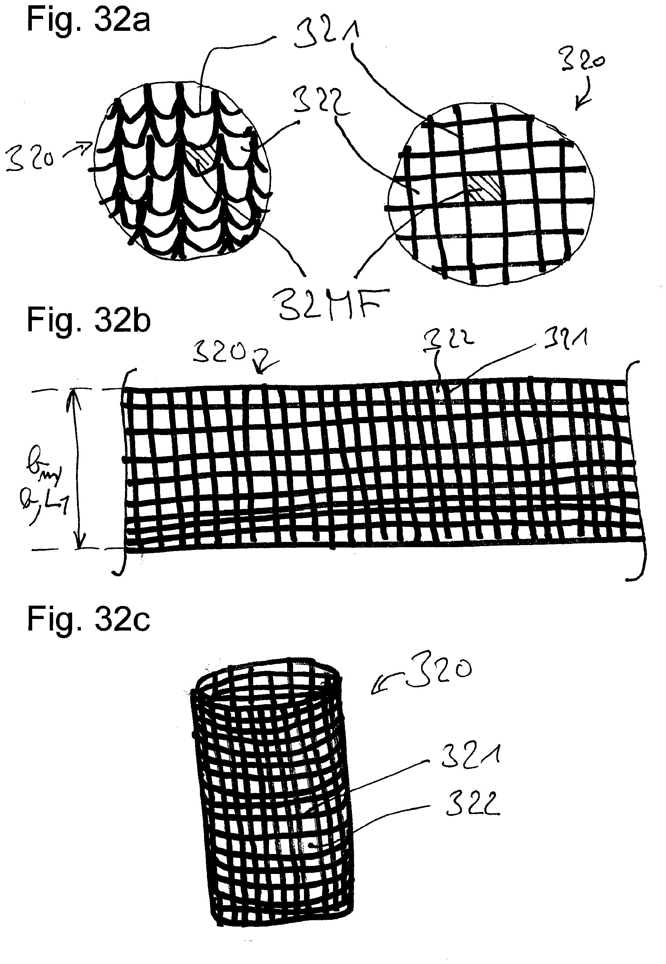

Fig. 32         Merkmale von Matten.

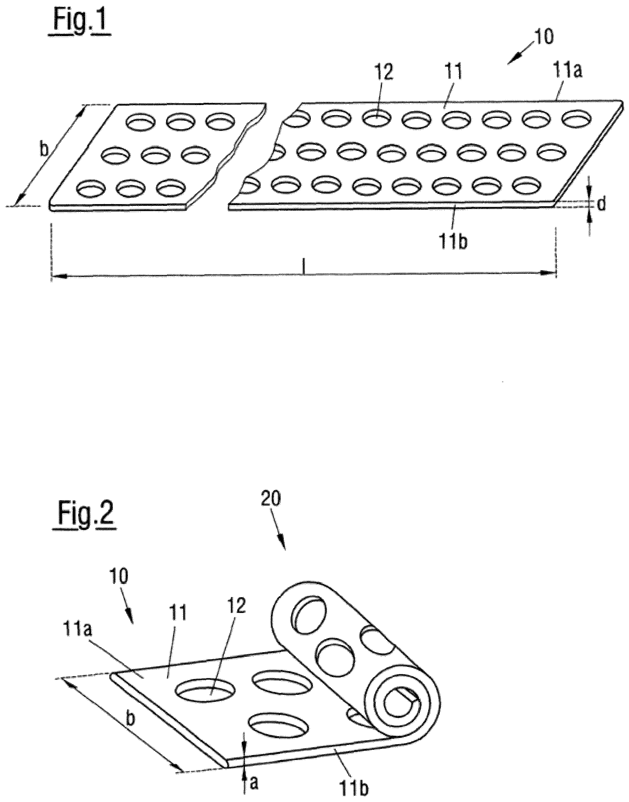

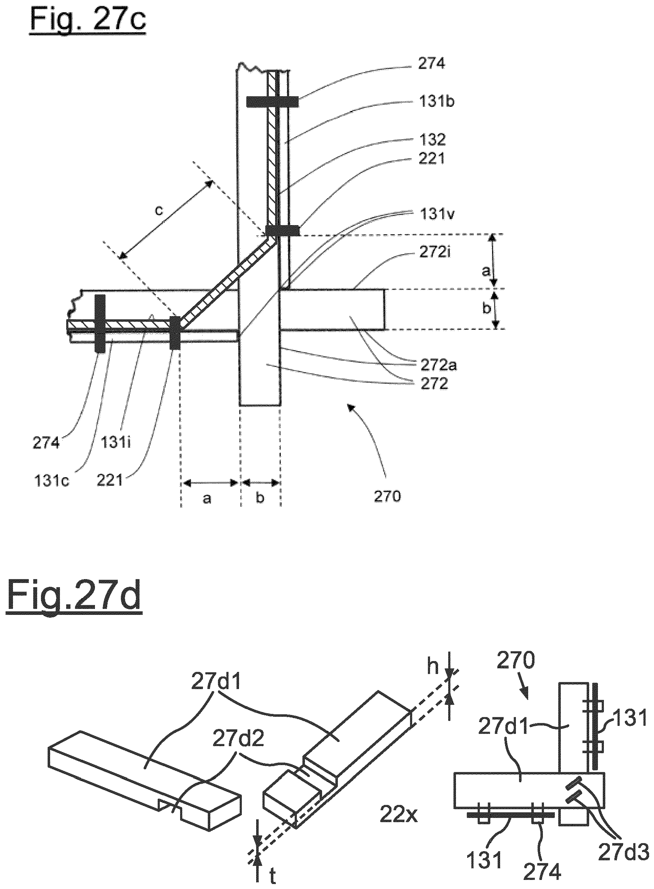

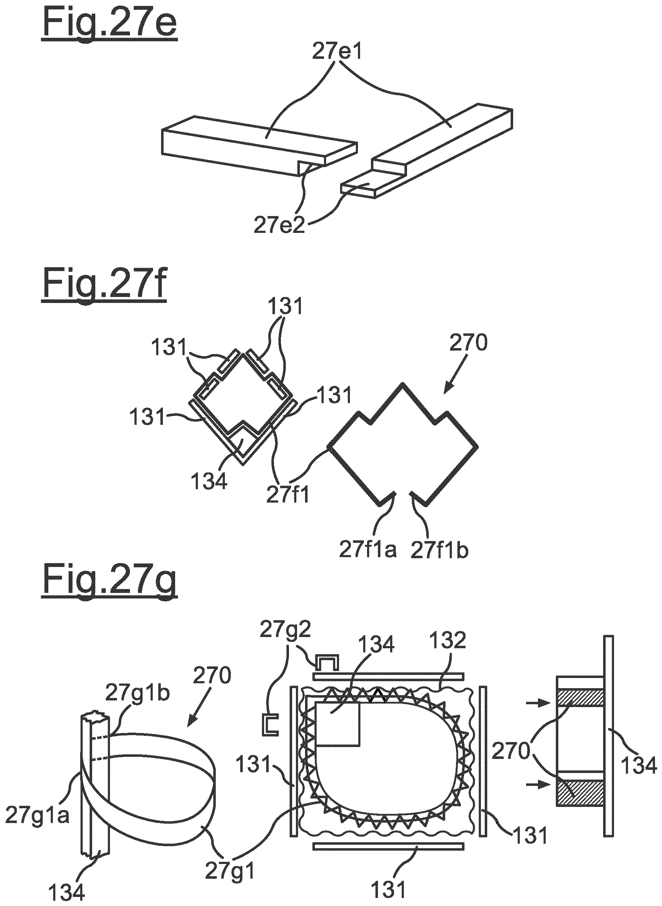

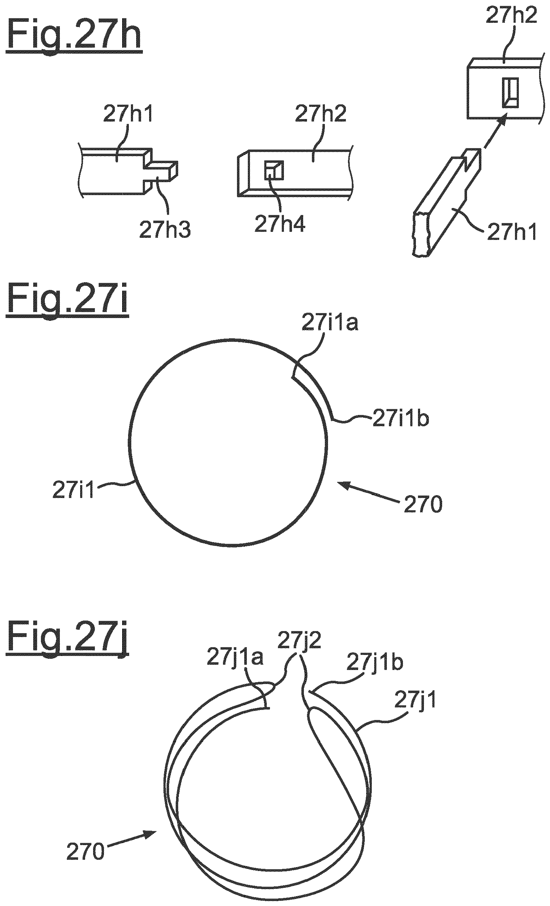

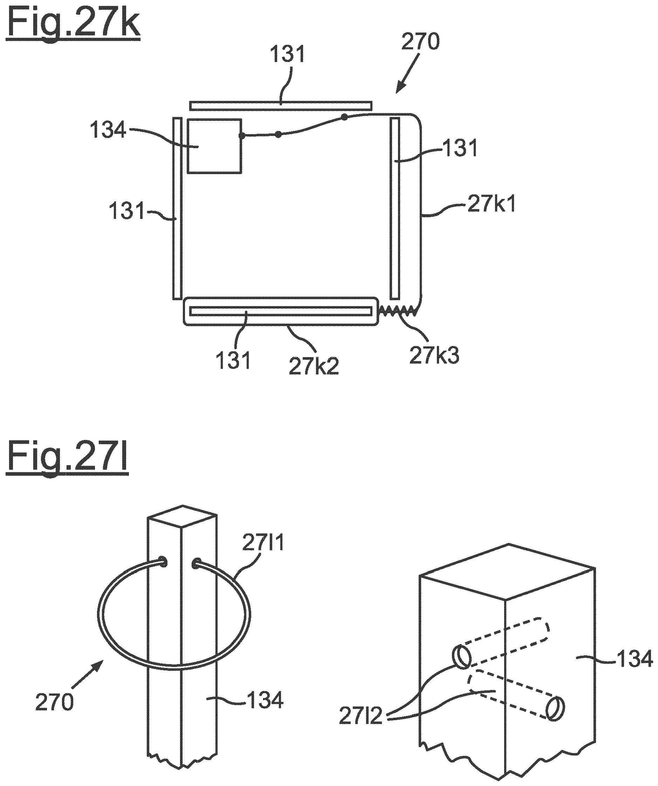

Die Figuren 1 bis 26 und deren Beschreibung entstammen der EP 3957163 A1. Diese Inhalte sollen als beliebig und weitestmöglich kombinierbar mit den Merkmalen der Erfindung verstanden werden, die Bezug nehmend auf die Figuren 27 bis 32 beschrieben wird.

Fig. 1 zeigt schematisch perspektivisch ein Flachmaterial 10. Es hat eine Breite b, eine Länge l und eine Dicke d. Die Dicke d kann kleiner als 5 oder 4 oder 3 oder 2 mm sein. Die Breite b kann über 40 oder über 50 oder über 60 oder über 80 cm liegen. Die Länge l kann größer als die Breite b sein. Für Einzelstücke des Flachmaterials kann sie der gewünschten Höhe des aufzustellenden Verbissschutzes entsprechen. Für Rollenmaterial kann die Länge l beliebig lang bzw. unter praktischen Gesichtspunkten gewählt werden und kann beispielsweise über 2 oder über 5 oder über 10 m 5 oder über 20 m liegen. Das Flachmaterial 10 weist die eigentlichen Materialbereiche 11 auf. Darin können regelmäßige oder unregelmäßige Öffnungen 12 eingeformt sein.

Mit 11a und 11b sind die gegenüberliegenden Kanten des Flachmaterials bezeichnet.

Das Flachmaterial ist biologisch bzw. natürlich abbaubar. Es kann zu einem großen Teil aus nachwachsenden Rohstoffen gefertigt sein und kann insbesondere Holz und/oder Holzspäne und/oder Holzschindeln und/oder Bambus und/oder Bambusspäne und/oder Bambusfurnier und/oder Fasern (z. B. Holzwolle, Sisal o. ä.) aufweisen. Es kann darüber hinaus ein Bindemittel aufweisen, das seinerseits biologisch/natürlich abbaubar ist. Es kann sich hier um Leim und/oder Harz und/oder Ähnliches handeln. Gleiches kann für das beschriebene Verbundmaterial gelten.

Wenn die Länge l des Flachmaterials sehr lang ist, ist es vorzugsweise dazu ausgelegt, dass bei Verwendung Einzelstücke davon abgeschnitten werden, die dann zu Verbissschutzvorrichtungen verarbeitet werden. Das Abschneiden kann mittels eines Messers, einer Schere oder einer Säge erfolgen. Wenn die Breite b des Flachmaterials 10 der gewünschten Höhe der Verbissschutzvorrichtung entspricht, ist die abzuschneidende Länge entsprechend dem Umfang der Verbissschutzvorrichtung 40 gegebenenfalls zuzüglich eines Überlapps 43 zu wählen, wenn aus dem Stück eine einzige Verbissschutzvorrichtung gefertigt werden soll. Es kann aber auch die Breite b des Flachmaterials dem Umfang gegebenenfalls zuzüglich Überlapp entsprechen, und die abzuschneidende Länge entspricht dann der gewünschten Höhe der Verbissschutzvorrichtung 40. Gleiches kann für das beschriebene Verbundmaterial gelten.

Fig. 2 zeigt aufgerolltes Flachmaterial 10. Es bildet eine Rolle 20, wie sie herstellerseitig erzeugt und in den Handel gebracht werden kann. Die Länge l des aufgerollten Flachmaterials kann dann unter praktischen Gesichtspunkten wie Gesamtgewicht, Gesamtabmessung, Anwenderbedarf und Ähnliches gewählt werden und kann über 2 oder 5 oder 10 oder 20 oder 50 m liegen. Gleiches kann für das beschriebene Verbundmaterial gelten.

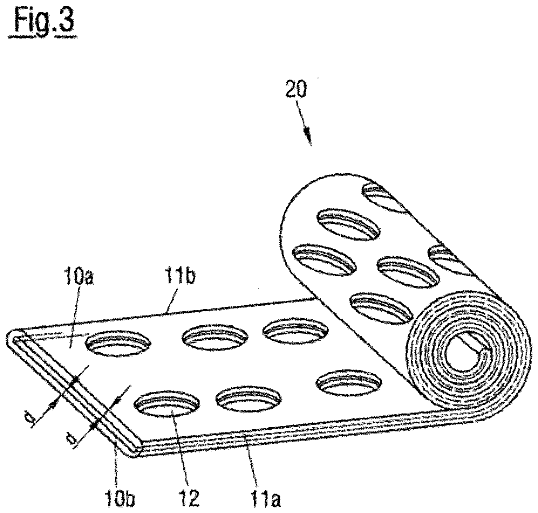

Während in Fig. 2 das Flachmaterial einlagig aufgerollt ist, zeigt Fig. 3 eine Ausführungsform, bei der das Flachmaterial 10 zweilagig gefertigt ist und so auch aufgerollt sein kann. Jede Lage 10a, 10b ist wie das Flachmaterial der Fig. 1 geformt. Die zwei Lagen 10a und 10b können längs der Längskanten 11a und 11b miteinander verbunden sein und bilden so ein schlauchartiges oder röhrenartiges oder hüllenartiges Gebilde. Wenn die Materialeigenschaften es zulassen, kann auch dieses Flachmaterial wie in Fig. 3 gezeigt zu einer Rolle 20 aufgerollt sein. Bei Benutzung wird das zweilagig liegende Material aufgespreizt und bildet dann so die die zu schützende Pflanze umgebende Verbissschutzvorrichtung 40. Gleiches kann für das beschriebene Verbundmaterial gelten.

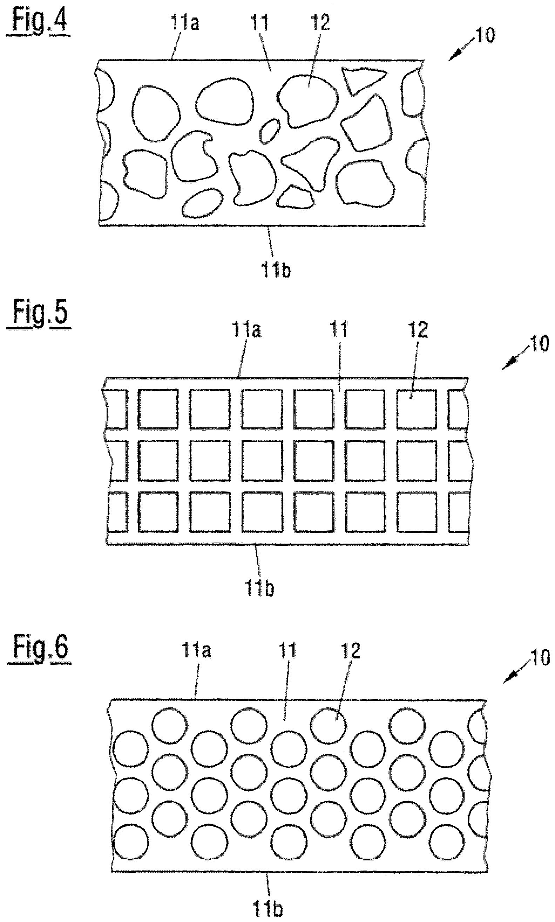

Fig. 4 zeigt ein Flachmaterial 10 mit regelmäßigen Kanten 11a, 11b, in das unregelmäßige Öffnungen 12 in das eigentliche Material 11 eingeformt sind. Die Größe und/oder die Lage der Öffnungen 12 kann unregelmäßig sein.

Allgemein können die Öffnungen 12 eine ganz oder bereichsweise eckige oder runde oder zackige Kontur haben. Die Kontur kann durch die Kontur von Spänen (z. B. Grobspänen) bestimmt sein.

Die Öffnungen können nachträglich in das eigentliche Material 11 des Flachmaterials 10 eingearbeitet werden, etwa eingestanzt oder eingeschnitten werden. Dies bietet sich insbesondere bei Verwendung von Schindelholz (ggf. auch Bambusfurnier) an. Die Öffnungen können aber auch gleich anfänglich in das Material eingeformt sein, beispielsweise dann, wenn es aus Spänen, insbesondere Feinspänen entsprechend MDF oder Grobspänen entsprechend OSB gebildet ist.

Fig. 5 zeigt eine Ausführungsform mit regelmäßig angeordneten Öffnungen 12, die auch regelmäßige, vorzugsweise gleiche Größe untereinander haben. Die Öffnungen können kantig begrenzt sein, etwa rechteckig, quadratisch, dreieckig, hexagonal oder Ähnliches.

Fig. 6 zeigt ein Flachmaterial 10 mit vorzugsweise regelmäßig angeordneten, verrundeten Öffnungen 12. Die Öffnungen 12 können kreisförmig oder oval geformt sein. Sie können regelmäßig angeordnet sein, etwa mit Mittelpunkten auf einem Dreiecksraster oder auf einem rechtwinkligen oder quadratischen Raster.

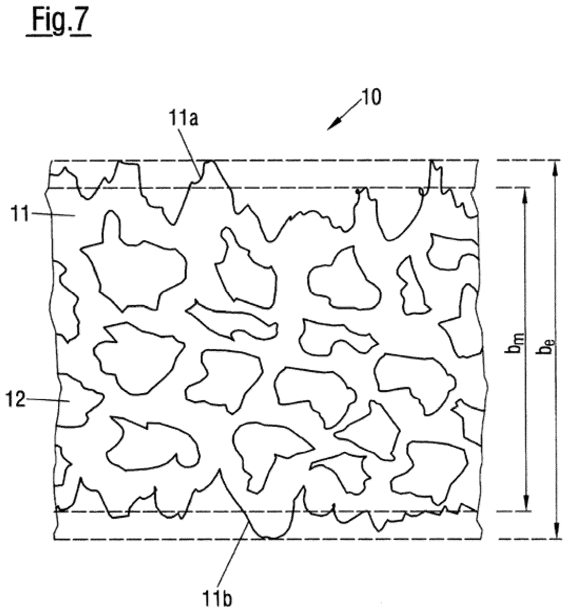

Fig. 7 zeigt Flachmaterial 10 mit unregelmäßigen Kanten 11a, 11b. Sie kann sich herstellungsbedingt ergeben, wenn das Flachmaterial 10 beispielsweise aus Holzgrobspänen gefertigt wird. Sie kann auch dann entstehen, wenn Öffnungen 12 eine Kante 11a, 11b überlappend eingearbeitet werden. Als Breite b eines solchen Materials kann das Maß bm zwischen Mittenlagen der Kanten verstanden werden oder das Maß be zwischen Extremlagen der Kanten 11a, 11b. Die Extremlage kann eine äußere Extremlage wie in Fig. 7 angedeutet sein oder eine innere Extremlage, bei der die am weitesten einwärts liegenden Stellen der Kanten 11a, 11b maßgebend sind.

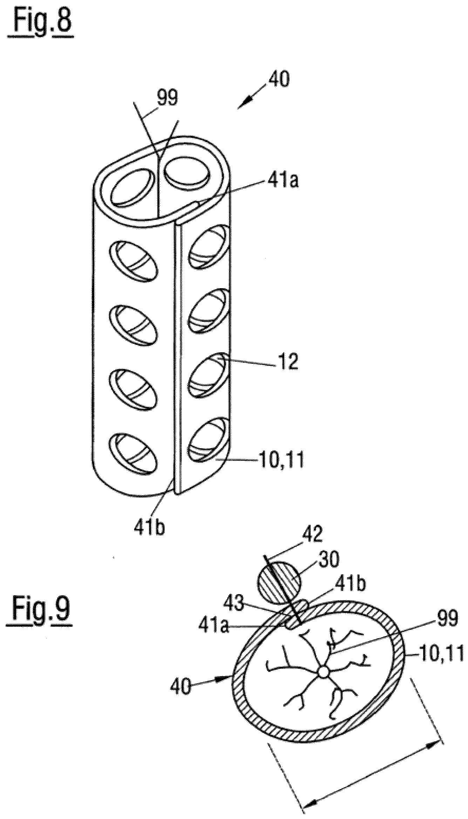

Fig. 8 zeigt eine Ausführungsform der Verbissschutzvorrichtung 40. Ein geeignet dimensioniertes Stück des Flachmaterials 10 ist rohrartig oder hüllenartig zusammengefasst und kann in dieser Weise eine Pflanze 99 umgeben und wenigstens anfänglich auch nach oben überragen. Die Öffnungen 12 im eigentlichen Material 11 sorgen dafür, dass die Pflanze 99 im Wesentlichen herkömmliche klimatische Bedingungen erfährt. Gleiches kann für das beschriebene Verbundmaterial gelten.

Die Öffnungen sind ihrer Größe nach vorzugsweise so dimensioniert, dass sie mindestens 50 % oder mindestens 60 % oder mindestens 70 oder 80 oder 90 % der Gesamtfläche des Flachmaterials 10 ausmachen, wobei die Gesamtfläche als durch die Maße der Außenkanten des Flachmaterials bzw. durch seine Nennmaße definiert verstanden werden kann.

Fig. 9 zeigt eine Verbissschutzvorrichtung 40 im Schnitt. Zusätzlich zu der in Fig. 8 gezeigten Ausführungsform weist sie einen Stützpfosten 30 auf, der vorzugsweise an der Außenseite der Hülle steht und in den Boden eingerammt werden kann. Mit 31 ist das angespitzte Ende des Stützpfostens 30 bezeichnet. Der Stützpfosten kann länger sein als die Höhe h der Verbissschutzvorrichtung 40, um nach Einrammen in den Boden eine etwa entsprechende Höhe zu haben.

Das Flachmaterial 10 ist mit Überlapp 43 längs zweier paralleler Kanten 41a, 41b zusammengefasst. Sie können den Kanten 11a, 11b in Fig. 1 entsprechen oder rechtwinklig dazu liegenden Kanten. Eine Befestigungsvorrichtung 42 hält einerseits die Kanten 41a, 41b beieinander und kann andererseits auch die Befestigung der Hülle am Stützpfosten 30 bewerkstelligen.

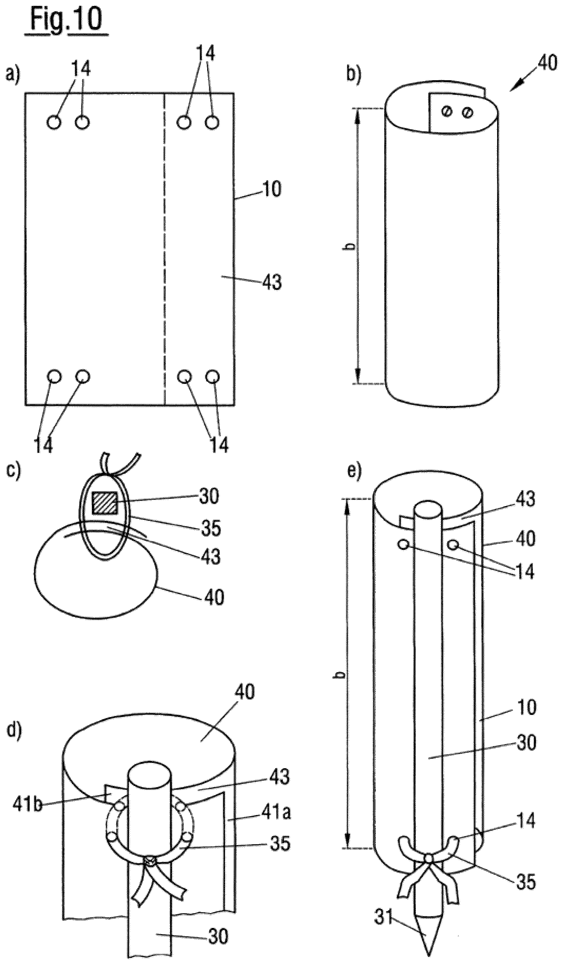

Fig. 10 zeigt verschiedene Aspekte einer Verbissschutzvorrichtung 40. Fig. 10a zeigt noch flach liegend das Flachmaterial 10, bevor es zu der in Fig. 10b gezeigten rohrartigen oder hüllenartigen Struktur zusammengefasst wird. Es sei in diesem Zusammenhang darauf verwiesen, dass auch diese und alle Ausführungsformen Öffnungen 12 wie beschrieben aufweisen können. Sie sind lediglich der Übersichtlichkeit der Darstellung halber manchmal nicht oder nicht vollständig eingezeichnet.

Der Bereich 43 rechts der gestrichelten Linie ist der Überlapp, der beim Zusammenfassen des Flachmaterials 10 entsteht. Mit 14 sind eingearbeitete Löcher bezeichnet, mittels derer das Flachmaterial zusammengefasst werden kann.

Fig. 10c zeigt schematisch im Schnitt eine Möglichkeit des Zusammenfassens des Flachmaterials 10 und der Verbindung mit dem Stützpfosten 30. Es können beispielsweise Schnüre an zwei oder mehreren Positionen in vertikaler Richtung längs des Stützpfostens einerseits durch die Öffnungen 14, die dann überlappend gelegt werden, gezogen werden. Sie können dann ggf. auch noch um den Stützpfosten 30 herum geführt und dann verknotet werden.

Die Fig. 10d und 10e zeigen das entstehende Konstrukt schematisch perspektivisch. Die Schnur 35 hält im Überlapp 43 die beiden Kanten 41a, 41b beieinander und umfasst auch den Stützpfosten 30. Das Flachmaterial 10 ist so hüllenartig zusammengefasst und wird mit Schnüren 35 an mindestens zwei Positionen längs der Höhe h der Verbissschutzvorrichtung zusammengehalten. Die Positionen können vorzugsweise am oberen und am unteren Ende der Verbissschutzvorrichtung 40 liegen. Es können aber auch an mehr als zwei Positionen Halteeinrichtungen entsprechend den Schnüren 35 vorgesehen sein. Die Fig. 10d und 10e zeigen Ausführungsformen ohne Öffnungen 12. Sie können aber die beschriebenen Öffnungen 12 aufweisen.

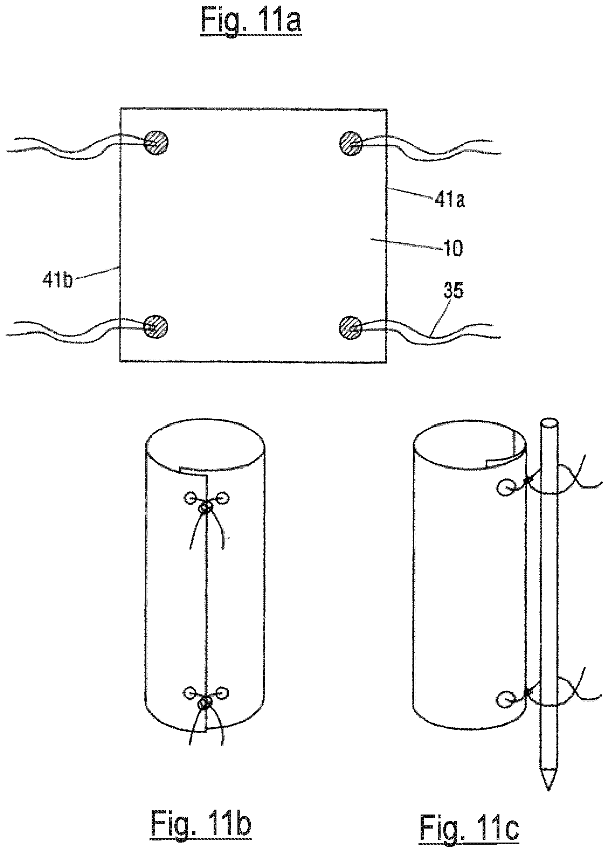

Fig. 11a bis 11c zeigen eine weitere Ausführungsform. Hier sind an gegenüberliegenden Kanten 41a Schnüre 35 auf das Flachmaterial 10 aufgeklebt. Mit ihnen kann das Flachmaterial 10 dann zur Verbissschutzvorrichtung 40 zusammengefasst werden, wie in Fig. 11b gezeigt, und kann auch am Stützpfosten 35 befestigt sein, wie in Fig. 11c gezeigt.

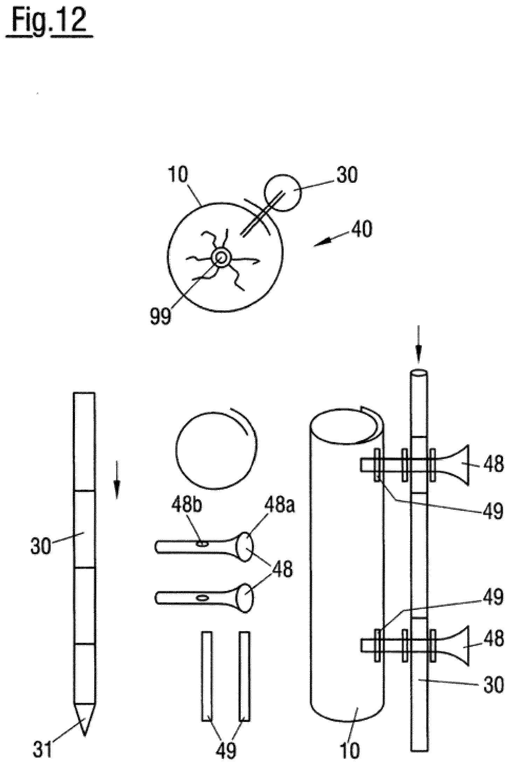

Fig. 12 zeigt eine weitere Ausführungsform der Verbissschutzvorrichtung 40. Der Stützpfosten 30 wird mit seinem spitzen Ende 31 in den Boden eingerammt. Danach wird das Flachmaterial 10 längs zweier Kanten zusammengefasst, um eine rohrartige oder hüllenartige Struktur um die Pflanze 99 herum zu bilden. Mittels eines Stifts 48, der eine Öffnung im Stützpfosten 30 durchdringt und auch Öffnungen im Überlapp 43 des Flachmaterials 10 durchdringt oder bei seinem Einfügen schafft, werden die Kanten des Flachmaterials zusammengehalten und die Hülle am Stützpfosten 30 befestigt. Mittels Sicherungsstiften 49, die in Öffnungen 48b der Stifte eingeschoben werden, wird der Verbau gesichert. Die Stifte 48 weisen einen verbreiterten Kopf 48a auf.

Das Flachmaterial und dem folgend auch die Verbissschutzvorrichtung 40 können mit einem die Haltbarkeit beeinflussenden Material ganz oder teilweise bestrichen oder durchtränkt sein. Es kann sich um Leinölfirnis oder Ähnliches handeln. Das tränkende oder zum Bestreichen verwendete Material ist vorzugsweise auch biologisch bzw. natürlich abbaubar. Insbesondere kann es so beschaffen sein, dass es die biologische Abbaubarkeit des unbehandelten Materials verlangsamt, um diese auf einen gewünschten Wert einzustellen. Das Fasermaterial kann Kokosfasern sein oder aufweisen. Das Fasermaterial, insbesondere Kokosfasern, kann mit Natur-Latex bzw. Kautschuk vermengt oder überzogen sein.

Das Flachmaterial und dem folgend auch die Verbissschutzvorrichtung 40 können mit einem mit einem Tiere vergrämenden Material ganz oder teilweise bestrichen oder durchtränkt sein. Das tränkende oder zum Bestreichen verwendete Material ist vorzugsweise ungiftig und auch biologisch bzw. natürlich abbaubar.

Die "Geschwindigkeit" des biologischen bzw. natürlichen Abbaus ist so, dass über einen gewünschten Zeitraum hinweg die Verbissschutzvorrichtung 40 den gewünschten Zweck erreicht und insbesondere deshalb die dafür notwendige Materialhaftigkeit und Materialfestigkeit aufweist. Die Auslegung kann so sein, dass bis zu dem Zeitpunkt, zu dem eine Pflanze ungeschützt stehen kann, eine einzige Verbissschutzvorrichtung ausreicht und dementsprechend für den gewünschten Zeitraum die nötige Standfestigkeit aufweist. Es kann sich hier beispielsweise um drei Jahre oder vier Jahre oder fünf Jahre oder sechs Jahre handeln. Die Auslegung kann aber auch so sein, dass davon ausgegangen wird, dass im Zeitraum, während dessen die Pflanze schutzbedürftig ist, zweimal oder mehrmals Verbissschutzvorrichtungen angebracht werden. Die Einzelstanddauern sind dann dementsprechend kürzer. Bei der Abbaugeschwindigkeit kann von mittleren klimatischen Bedingungen ausgegangen werden, wie sie am Einsatzort herrschen. Schwankungen zwischen einzelnen Exemplaren der Verbissschutzvorrichtung betreffend die Haltbarkeit können durch statistische bzw. summarisch gemittelte Betrachtungen aufgefangen werden. Gleiches kann für die Verwendung des beschriebenen Verbundmaterials gelten.

Die gewünschte Standzeit kann mittelbar durch Größen wie Standfestigkeit und/oder Scherfestigkeit und/oder Zugfestigkeit und/oder Biegesteifigkeit beschrieben werden. Die Gesamtauslegung kann so sein, dass das Material, wenn es verbaut ist, innerhalb eines bestimmten Zeitraums, beispielsweise ein Jahr oder zwei Jahre, bestimmte Änderungen durchläuft, etwa dahingehend, dass es zwischen 20 % und 50 % seines ursprünglichen Materialgewichts und/oder seiner ursprünglichen Standfestigkeit und/oder seiner Scherfestigkeit und/oder seiner Zugfestigkeit und/oder seiner Biegesteifigkeit verloren hat. Der Verlust kann über 10 % oder über 15 % oder über 20 % oder über 30 % des Ausgangswerts liegen. Er kann unter 50 % oder unter 40 % oder unter 30 % liegen. Gleiches kann für die Verwendung des beschriebenen Verbundmaterials gelten.

Eine nicht abschließende, nicht vollständige Darstellung möglicher Merkmalskombinationen ist:

Ein Flachmaterial 10 für eine Verbissschutzvorrichtung 40 ist netz- oder gitterartig ausgebildet und kann regelmäßig und/oder unregelmäßig geformte und/oder angeordnete Öffnungen 12 aufweisen, und ist natürlich und/oder biologisch abbaubar. Das Flachmaterial 10 wie beschrieben kann bis zum vollständigen Abbau zum Verbleib an der mit ihm verbissgeschützten Pflanze geeignet und bestimmt sein. Das Flachmaterial 10 wie beschrieben kann einen oder mehrere nachwachsende Rohstoffe aufweisen, insbesondere Holz und/oder Schälschindelholz und/oder Sägeschindelholz und/oder Holzfeinspäne MDF oder Holzspäne und/oder Holzgrobspäne OSB und/oder Bambus. Das Flachmaterial 10 wie beschrieben kann miteinander verbundene, insbesondere verleimte und/oder verklebte und/oder verwobene Einzelteile aufweisen, insbesondere Späne und/oder Fasern. Das Flachmaterial 10 wie beschrieben kann Nadelholz und/oder Laubholz und/oder Bambusmaterial und/oder Fasern aufweisen, und vorzugsweise nicht Buche. Das Flachmaterial 10 wie beschrieben kann ganz oder bereichsweise mit einem die biologische Abbaubarkeit beeinflussenden Material getränkt oder bestrichen sein. Das Flachmaterial 10 wie beschrieben kann ein Dicke d kleiner 3 mm und/oder eine Breite b größer 400 mm und/oder eine Länge l größer oder gleich der Breite aufweisen. Das Flachmaterial 10 wie beschrieben kann doppellagig liegen, wobei die zwei Lagen 10a, 10b längs beider sich in Richtung der Länge des Materials erstreckenden Kanten 11a, 11b miteinander verbunden sind. Das Flachmaterial 10 wie beschrieben kann wie beschrieben kann eine Länge l >= 2 m aufweisen und in Längsrichtung aufgerollt sein, wobei das Flachmaterial von der Rolle abrollbar und ablängbar bzw. abschneidbar ist. Bei dem Flachmaterial 10 wie beschrieben kann das Material so ausgelegt sein, dass es unter durchschnittlichen klimatischen Bedingungen am Einsatzort eine Standzeit über 4 Jahre und vorzugsweise unter 10 Jahre hat, und/oder so ausgelegt sein, dass es nach einem oder nach zwei Jahren Zeit am Einsatzort zwischen 20% und 50% seines ursprünglichen Materialgewichts und/oder zwischen 20% und 50 % seiner ursprünglichen Standfestigkeit und/oder Scherfestigkeit und/oder Zugfestigkeit und/oder Biegesteifigkeit verloren hat. Das Flachmaterial 10 wie beschrieben kanns zu mindestens 70 oder 80 oder 90 Vol.-% aus nachwachsendem Material bestehen.

Das Flachmaterial 10 wie beschrieben kann Öffnungen 12 einen Flächenanteil von mindestens 50 oder 60 oder 70 oder 80 oder 90% der Gesamtfläche des Flachmaterials aufweisen. Bei dem Flachmaterial 10 wie beschrieben können Öffnungen 12 in das vorher vollflächige Material gestanzt oder geschnitten sein, und/oder es können Öffnungen 12 ursprünglich in das Material eingeformt sein.

Eine Verbissschutzvorrichtung 40 für Pflanzen, insbesondere für den Setzling 99 eines Baums, weist Flachmaterial 10 wie beschrieben auf. Bei einer Verbissschutzvorrichtung 40 wie beschrieben kann das Flachmaterial 10 rohrförmig oder hüllenartige strukturiert sein, insbesondere dadurch, dass zwei sich gegenüber liegenden Kanten 11a, 11b des Flachmaterials 10 zu einer den Setzling 99 umfangenden rohrartigen oder hüllenartige Struktur mit Überlapp 43 bei den Kanten oder ohne Überlapp zusammengefasst sind. Bei einer Verbissschutzvorrichtung 40 wie beschrieben können sich ursprünglich gegenüber liegenden Kanten 11a, 11b des Flachmaterials 10 mit einer oder mehreren Schnüren und/oder mit einer oder mehreren Klammern und/oder mit einem oder mehreren Stiften zusammengehalten sein. Eine Verbissschutzvorrichtung 40 wie beschrieben kann einen in den Boden einschlagbaren Stützpfosten 41 aufweisen, an dem die mit dem Flachmaterial 10 gebildete rohrförmig oder hüllenartige Struktur befestigbar ist, insbesondere längs der sich ursprünglich gegenüber liegenden Kanten 11a, 11b des Flachmaterials 10.

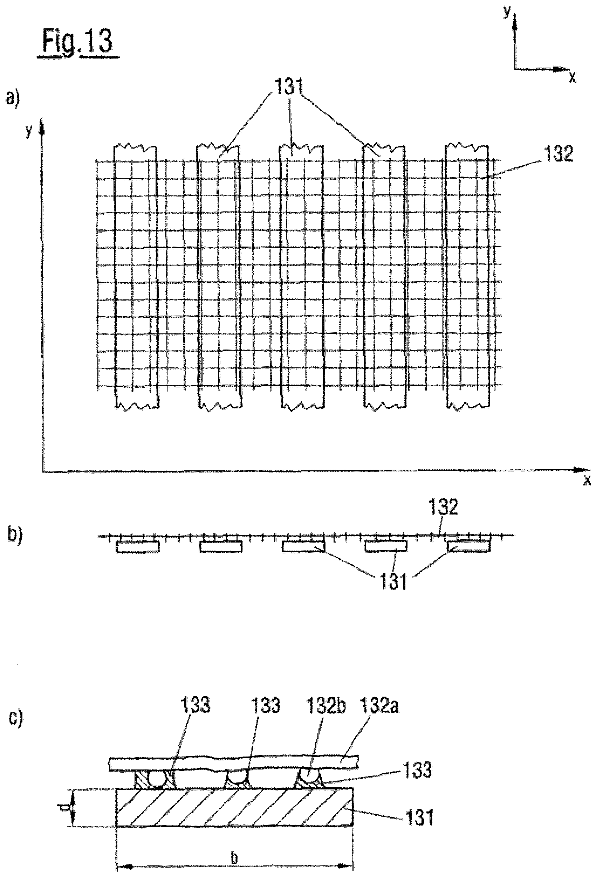

Nachfolgend werden Bezug nehmend auf die Fig. 13 bis 20 weitere Merkmale und/oder Möglichkeiten und/oder Ausführungsformen beschrieben. Merkmale, die bisher Bezug nehmend auf Fig. 1 bis 12 beschrieben wurden, sind als mit den nun zu beschreibenden Ausführungsformen kombinierbar zu verstehen, soweit sie technisch kombinierbar sind und nicht im Widerspruch dazu stehen. Es sind Verweisungen zwischen den Ausführungsformen der Figuren 1 bis 12 und der Figuren 13 ff angegeben. Sie sind nicht abschließend zu verstehen. Die kreuzweise Kombinierbarkeit soll nicht auf die expliziten Verweise beschränkt sein.

Fig. 13 zeigt ein Verbundmaterial 130, das für den Bau einer Verbissschutzvorrichtung 180 geeignet ist. Mit einem schematischen Koordinatensystem x-y sind Orientierungen angedeutet. Die Richtungen x und y sind senkrecht zueinander. Im verbauten Zustand kann die y-Richtung vertikal sein und die x-Richtung horizontal bzw. zuletzt in Umfangsrichtung der Verbissschutzvorrichtung.

Das Verbundmaterial 130 weist mehrere längliche, nebeneinander angeordnete Holzelemente 131 auf. Die Holzelemente können sich längs der y-Richtung erstrecken, im Verbau also in etwa vertikal stehen, und können längs der x-Richtung, im Verbau die Umfangsrichtung, beabstandet nebeneinander liegen.

Das Verbundmaterial weist außerdem einen mehr oder minder breiten Streifen Fasermaterial 132 auf. Die Figur 13 zeigt eine Bauweise, bei der der Streifen die Holzelemente kreuzend angeordnet ist. Die Breite des Streifens (in y-Richtung) kann der Länge der Holzelemente entsprechen oder kleiner sein. Da, wo der Streifen des Fasermaterials 132 die Holzelemente überdeckt, sind Verbindungen zwischen dem jeweiligen Holzelement und dem Fasermaterial vorgesehen.

Sowohl die Holzelemente wie auch das Fasermaterial wie auch die Verbindungen zwischen ihnen sind natürlich und/oder biologisch abbaubar. Insoweit gilt das Gleiche wie das, was schon früher in dieser Beschreibung zur natürlichen und/oder biologischen Abbaubarkeit gesagt wurde. Das Verbundmaterial weist vorzugsweise keine Bestandteile auf, die nicht natürlichen Ursprungs sind und/oder die nicht natürlich und/oder biologisch abbaubar sind.

Das Verbundmaterial kann, wie in Fig. 2 gezeigt, als "Endlosware" im Handel gehandelt werden. Es kann in Fig. 13 längs der x-Richtung aufgerollt werden. Der Streifen des Fasermaterials hat eine natürliche Nachgiebigkeit entsprechend einem Seil oder einem Gewebe oder einem verfilzten Stoff und gibt somit dem Verbundmaterial eine Nachgiebigkeit für Abwinklungen um eine Achse parallel zur y-Achse in Fig. 3 herum. Auf diese Weise kann das Material in x-Richtung aufgerollt werden und kann im Verbau um eine Pflanze 99 herum gelegt werden.

Die Holzelemente 131 können flach ausgebildet sein und können eine mittlere oder maximale Dicke haben, die unter 10 oder 5 oder 2 oder 1 mm liegt und die über 0,5 mm oder über 1 mm liegen kann. Sie können eine Breite b und eine Länge L haben. Es können auch Holzelemente unterschiedlicher Längen L1 und L2 vorgesehen sein. Die Holzelemente können in x-Richtung einen Abstand A haben. Fig. 13b zeigt das Verbundmaterial in schematischer Seitenansicht. Unten sind stirnseitig die Holzelemente 131 zu sehen. Darüber erstreckt sich in x-Richtung der Streifen des Fasermaterials 132. Dort, wo der Streifen die Holzelemente überdeckt, sind beide miteinander verbunden.

Zum Holzmaterial gilt das, was schon weiter oben gesagt wurde. Bambus sei hier auch als Holz verstanden. Die Holzelemente können Holzbretter und/oder Spankistenholz und/oder Schindelholz und/oder Spanplatten und/oder Schwartenteile und/oder Produktionsabfälle sein oder aufweisen.

Der Abstand A zwischen nebeneinander liegenden Holzelementen 131 kann wenigstens 5 oder 10 oder 20 oder 50 mm sein. Der Abstand A kann untern 100 oder 50 oder 20 mm liegen. Wenn eine allmähliche Dimensionsänderung des die Holzelemente 131 verbindenden Fasermaterials 132 zu erwarten ist, etwa ein Schrumpfen um 20%, kann die anfängliche Breite dementsprechend vorab kompensierend gefertigt werden, etwa entsprechend der erwarteten Schrumpfung größer, z. B. um 25% größer. Der Abstand kann kleiner als das Dreifache oder das Doppelte oder Einfache der Breite b eines Holzelements sein. Die Breite b eines Holzelements kann größer als 10 oder 20 oder 30 oder 50 oder 70 mm sein. Sie kann kleiner als 150 oder 120 oder 100 oder 50 oder 20 mm sein. Die Holzelemente können regelmäßig definierte Formen haben. Sie können rechteckigen Grundriss haben. Sie können aber auch beispielsweise aus Produktionsabfällen hergestellt sein und dann beispielsweise eine definierte Länge L haben, aber ungleichmäßige und auch innerhalb eines Holzelements nicht konstante Breiten b. Als Breite b, wie sie hier angesprochen ist, gilt dann eine mittlere Breite eines Holzelements oder aller Holzelemente einer Verbissschutzvorrichtung. Das Gleiche gilt hinsichtlich der Dicke d.

Das Fasermaterial 132 besteht aus Naturfasern. Es können insbesondere Fasern von Jute und/oder Sisal und/oder Kokos und/oder Hanf und/oder Bast und/oder Wolle und/oder Rindenstreifen und/oder Produktionsabfällen sein. Das Fasermaterial kann, soweit möglich, verwoben und/oder versponnen und/oder verknotet sein. Es kann zu Seilen (gegebenenfalls mit einzelnen Kardeelen) versponnen sein. Es kann zu einem Gewebe verwoben oder verknotet sein. Es kann beispielsweise netzartig ausgebildet sein. Das Netz kann Gitteröffnungen einer Größe (Diagonale) von über 10 oder 20 oder 30 oder 50 mm aufweisen. Sie können unter 100 oder unter 50 mm liegen.

Das Fasermaterial kann aber auch unversponnen verwendet werden. Es kann verfilzt verwendet werden bzw. sein. Auch dann kann das Fasermaterial wenig füllig vorliegen. Es kann einem "chaotischen Netz" gleichen und muss nicht blickdicht sein. Es kann flachgedrückt sein, so dass es eine flache Matte bildet. Ihre Dicke, wenn sie nicht weiter komprimiert gehalten wird, kann unter 10 oder 5 mm liegen.

Fig. 13b deutet ein netzartiges Fasermaterial 132 an mit längslaufenden Fäden (x-Richtung) und quer dazu laufenden Fäden (senkrecht zur Zeichenebene), längs der Länge der Holzelemente.

Fig. 13c zeigt in größerem Detail eine Verbindung zwischen Fasermaterial 132 und Holzelement 131. Mit 132a und 132b sind längs- und querlaufende Fäden eines netzartigen Fasermaterials gezeigt. Die Verbindung hin zum Holzelement 131 wird durch eine Verklebung 133 hergestellt. Die Verklebung 133 ist vorzugsweise ein natürlicher Klebstoff, insbesondere ein natürlicher oder naturidentischer Leim oder ein Harz. Der Klebstoff ist natürlich/biologisch abbaubar.

Zur Haltbarkeit, Festigkeit, Standfestigkeit, Zugfestigkeit, Scherfestigkeit und Biegesteifheit der Holzelemente und/oder des Fasermaterials und/oder der Verbindung gilt das, was weiter oben schon zu den entsprechenden Werten der beschriebenen Materialien gesagt wurde.

Ein oder mehrere Holzelemente 131, 141 und/oder das Fasermaterial 132, 142 und/oder die Verbindungen 133 können mit einem die Verwitterung beeinflussenden, insbesondere verlangsamenden Stoff und/oder mit einem Vergrämungsmittel bearbeitet und/oder bestrichen und/oder getränkt sein. Diese Stoffe sind vorzugsweise natürliche oder naturidentische Stoffe oder Stoffgemische und/oder sind natürlich und/oder biologisch abbaubar.

Das Fasermaterial bzw. eine damit gefertigte Matte kann mit einem seine Steifheit beeinflussenden, insbesondere erhöhenden Stoff bearbeitet und/oder bestrichen und/oder getränkt und/oder vermischt sein. Dieser Stoff ist vorzugsweise ein natürlicher oder naturidentischer Stoff oder Stoffgemisch und/oder ist natürlich und/oder biologisch abbaubar.

Verschiedene Teile des Verbundmaterials können unterschiedlich schnell verrotten bzw. abbaubar sein, bspw. schon als Materialeigenschaft oder wegen unterschiedlicher Nähen verschiedener Teile zum Boden. Z. B. kann das Fasermaterial, auch wenn ggf. behandelt, schneller verwittern als die Holzelemente, auch wenn behandelt. Die genannten Werte können dann für die schneller bzw. am schnellsten verwitternden Teile gelten.

Die Holzelemente 131 und/oder einschlagbaren Stützen 134 können Nadelholz und/oder Laubholz und/oder Bambusmaterial aufweisen, insbesondere als Schindelholz und/oder Spanmaterial. Vorzugsweise weist es Nadelholz (Kiefer, Fichte, Lärche, Tanne oder Gemisch daraus) auf, da deren Harzgehalt der Standzeit zuträglich ist. Es kann Robinie aufweisen. Vorzugsweise weist es nicht Buche auf. Diese Hölzer haben eine vergleichsweise geringe Witterungsbeständigkeit.

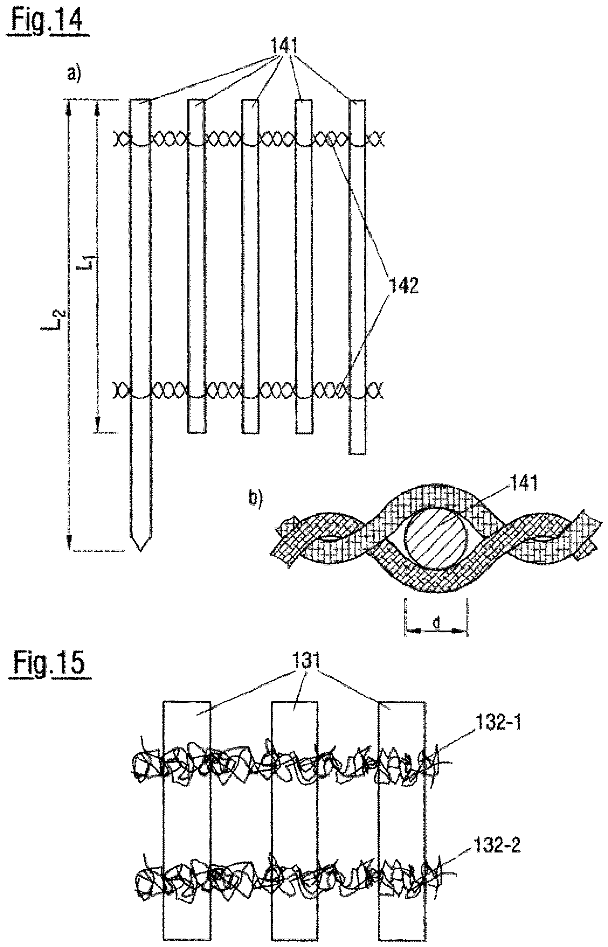

Die Verbissschutzvorrichtung fördert wegen ihres natürlichen Materials auf der Fläche die Entstehung eines Geflechts von Beikraut, das Böcke vom Verfegen abhält. Auch das Verwachsen der Schutzeinrichtung führt dazu, dass das Terrain um die geschützte Pflanze nicht mehr attraktiv ist für einen Fegeangriff des Rehbocks. Ein Terminaltrieb kann dann nach drei bis vier Jahren über den Äser des Rehwildes hinausgewachsen sei Fig. 14a zeigt ein Verbundmaterial, bei dem die Holzelemente 141 Holzstäbe oder Holzruten sind oder aufweisen. Es können verarbeitete oder natürlich gewachsene Stäbe und/oder Ruten und/oder Äste sein. Ihr jeweils größter Durchmesser kann unter 30 oder 20 oder 15 oder 10 mm liegen. Er kann über 10 oder 5 mm liegen. Bei nicht kreisförmigen Querschnittsformen ist der Durchmesser eines Kreises mit gleicher Fläche zum größten Flächenquerschnitt zu nehmen. Die Stäbe oder Ruten können Weidenruten und/oder Haselruten und/oder Astwerk und/oder Produktionsabfälle sein oder aufweisen. Zum konkreten Material gilt das, was schon weiter oben gesagt wurde.

Die Verbindung der Holzelemente 141 untereinander kann wie in Fig. 13b und 13c gezeigt sein. Sie kann aber auch wie in Fig. 14b gezeigt sein. Das Fasermaterial umfasst hier miteinander verschlungene Einzelseile oder Fasern. In geeigneten Abständen sind die Holzelemente 141 zwischen die einzelnen Seile/Kardeele/Fasern geschoben und können nur so gehalten sein. Ergänzend kann aber auch wieder Klebstoff wie beschrieben vorhanden sein. Die Verbindung wie in Fig. 14b gezeigt, kann auch bei der Bauweise der Fig. 13a vorgesehen sein.

Die Fig. 15 zeigt mehrere Holzelemente 131, die mit mehreren Streifen 132-1, 132-2 von Fasermaterial zusammengehalten werden. Die Breite der einzelnen Streifen (in y-Richtung) ist kleiner als die Länge L der Holzelemente. Sie kann unter 40 oder 30 oder 20 oder 15 cm liegen. Sie kann über 2 oder 5 oder 10 cm liegen. Je nach Dimensionierung können mehrere solcher Streifen vorgesehen sein, beispielsweise zwei oder drei oder vier. Sie werden dann in geeignetem Abstand zueinander in y-Richtung beabstandet aufgebracht und mit den Holzelementen 131 verbunden.

Fig. 15 deutet an, dass ein nicht versponnenes, verfilztes, "chaotisches" Fasermaterial verwendet wird. Die Verbindung zu den Holzelementen 131 oder auch 141 (Fig. 14) kann wie in Fig. 13c gezeigt oder wie in Fig. 14b gezeigt erfolgt sein.

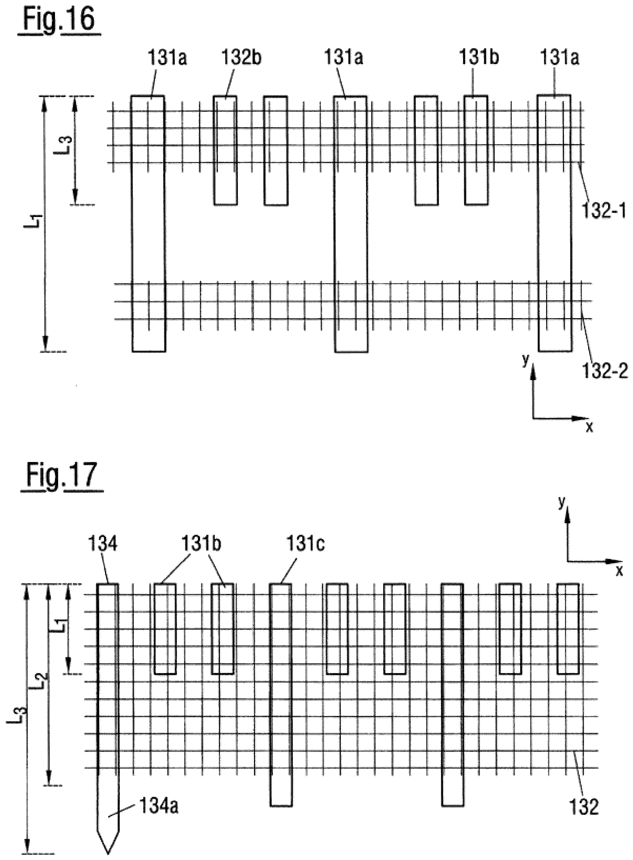

Die Fig. 16 und 17 zeigen, dass die Holzelemente unterschiedliche Längen L1, L2 und L3 haben können. Die Länge L1 kann dabei eine Länge sein, die der gewünschten Standhöhe der Verbissschutzvorrichtung entspricht. Es wird insoweit auf das verwiesen, was dazu zu den Ausführungsformen der Fig. 1 bis 12 gesagt wurde. Sie kann über 50 oder 80 oder 100 cm liegen. Sie kann unter 150 cm oder unter 100 cm liegen. Neben Holzelementen 131, 141 der Länge L1 können auch kürzere Holzelemente 131b (und ähnlich bei Fig. 14 zu Holzelementen 141) vorliegen. Sie können mit dem Fasermaterial auf geeigneter Höhe gehalten werden. Insbesondere können sie weitestmöglich oben gehalten werden, so dass die Oberkanten der kurzen Holzelemente 131b auf Höhe der Oberkanten der langen Holzelemente 131a liegen. Die Längen der kurzen Holzelemente 131b (in y-Richtung) ist mit L3 bezeichnet. Sie kann unter 50 oder 40 oder 30 oder 20 cm liegen. Sie kann über 5 oder 10 cm liegen.

Im Verbundmaterial kann die Anbringung so sein, dass einem bestimmten Muster folgend lange und kurze Holzelemente vorgesehen sind, beispielsweise nach jeweils einem langen Holzelement 131, 141 der Länge L1 eine Anzahl n kurzer Holzelemente 131b der Länge L3, mit n = 1, 2, 3, 4, 5 oder mehr.

Fig. 16 zeigt eine Ausführungsform, bei der zwei Streifen 132-1 und 132-2 von Fasermaterial verwendet werden. Ein oberer Streifen überdeckt sowohl die langen als auch die kurzen Holzelemente 131a, 131b. Ein unterer Streifen 132-2 kreuzt nur die langen Holzelemente 131a.

Fig. 17 zeigt eine Ausführungsform, bei der ein einziger breiter Streifen des Fasermaterials 132 verwendet wird. Er hat eine Breite entsprechend der Länge L1,

Darüber hinaus sind in Fig. 17 noch längere Holzelemente 134 einer Länge L2 vorgesehen. Sie können die langen Holzelemente 131a der Länge L1 nach unten überragen. Der Überstand ist dazu ausgelegt, in den Boden eingeschlagen zu werden. Er kann hierzu eine Spitze 134a aufweisen. Der Überstand nach unten kann größer als 5 oder 10 oder 20 cm sein. Er kann unter 50 oder 30 oder 20 cm sein.

Die Fig. 16 und 17 deuten verwobenes Fasermaterial 132 an. Es kann aber auch unversponnenes bzw. verfilztes, chaotisches Fasermaterial verwendet werden.

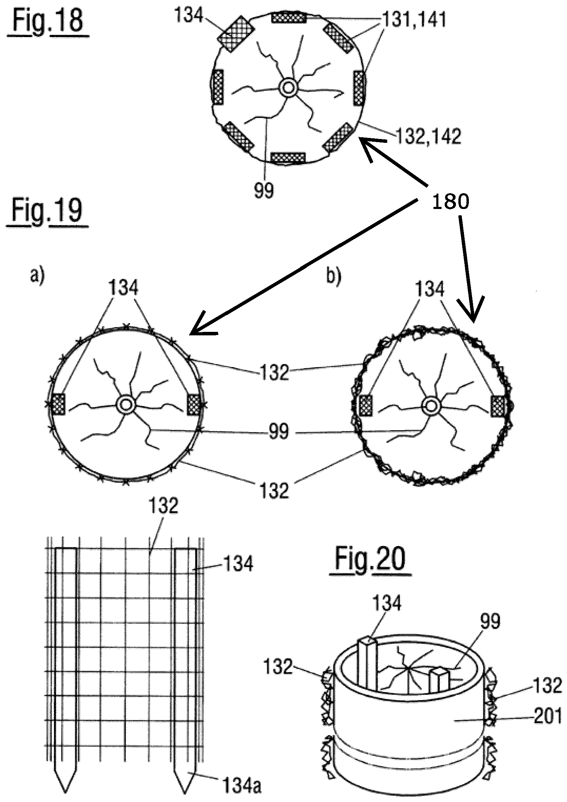

Fig. 18 zeigt in Draufsicht eine mit dem beschriebenen Verbundmaterial gefertigte Verbissschutzvorrichtung 180. Der Verbau kann in der Weise geschehen, dass Verbundmaterial wie bisher beschrieben einer gewünschten Länge in x-Richtung genommen und gegebenenfalls von einem gewerblichen Gebinde, etwa einer Rolle, abgelängt wird, also abgeschnitten wird. Die Länge wird so gewählt, dass sich mit ihr unter Einrechnung eines womöglich vorhandenen Überlapps 43 ein gewünschter Durchmesser ergibt. Zum Überlapp wird auf Ziffer 43 in den früheren Figuren verwiesen.

Je nachdem, wie die Holzelemente und ihre Abstände zueinander dimensioniert sind, wird dann eine bestimmte Anzahl von Holzelementen in einem abgelängten Stück des Verbundmaterials vorhanden sein. Wenn dieses dann wie in Fig. 18 gezeigt zu einer mehr oder minder luft- und lichtdurchlässigen Hülle zusammengenommen wird, ergibt sich eine etwas eckige Grundform, die entsprechend der Anzahl n der Holzelemente 131 einen in etwa n-eckigen Grundriss hat. Die Holzelemente 131, 141 stehen in etwa senkrecht und umfangen den Schössling 99. Sie werden vom Fasermaterial 132, 142 zusammengehalten. Das Fasermaterial 132 kann innen oder außen liegen. Keines oder eines oder mehrere der Holzelemente 131 können im Verbau auf dem Boden aufstehen.

Es können eine oder mehrere einschlagbare Stützen 134 vorgesehen sein. Sie können schon in das Verbundmaterial eingearbeitet sein oder separat mitgebracht werden. Sie können die in Fig. 17 gezeigte Länge L2 haben und werden beim Verbau mit einem Hammer in den Boden eingeschlagen. Dann wird das Verbundmaterial daran befestigt, soweit es nicht schon befestigt ist, also z. B. an einem freien Ende in x-Richtung des Verbundmaterials oder auch irgendwo zwischen dessen Enden in x-Richtung. Das Befestigen kann durch Verknoten des Fasermaterials erfolgen oder durch Antackern des Fasermaterials an der Stütze 134 oder durch Antackern des Holzelements 131, 141 an der Stütze 134. Das Antackern geschieht vorzugsweise mit nicht verzinkten Metallklammern, also z. B. Klammern aus rostendem Eisen, z. B. Schwarzeisen. Auch wenn Drähte verwendet werden, können diese aus Schwarzeisen bestehen.

Das Zusammenfassen des Verbundmaterials zu einer schützenden, die Pflanze 99 umgebenden Hülle kann in einer oder mehreren der folgenden Weisen geschehen:

- Auftackern oder Vernageln der in x-Richtung äußersten Holzelemente 131 aufeinander und/oder auf eine separate einschlagbare Stütze 134,
- Verknoten oder sonstiges Verbinden freier Enden in x-Richtung des Fasermaterials,
- Separates Zusammenfassen mittels eines oder mehrerer Seilringe oder Drahtringe außen um den Umfang herum,
- Gemeinsam mit dem Antackern oder Annageln oder Anbinden an einer Einschlagstütze,
- Wie weiter oben zum Flachmaterial beschrieben.

Fig. 19 zeigt Ausführungsformen, bei denen Holzelemente nur als einschlagbare Stützen 134 vorgesehen sind und das Umfangen des Schösslings 99 ausschließlich mit dem Fasermaterial 132 als mehr oder minder luft- und lichtdurchlässigen Hülle geschieht. Diese Bauart kann gewählt werden, wenn das Fasermaterial 132 in seiner Verarbeitung zu einer Matte steif genug ist, um den gewünschten Schutz über die gewünschte Dauer zu liefern. Fig. 19a deutet eine Bauweise an, bei der das Fasermaterial versponnen und zu einem Gitter- oder Netzgewebe verarbeitet ist. Es kann verwebt oder verstrickt sein. Es kann flach gewebt oder gestrickt sein. Es kann auch hüllenartig "rund" gewebt oder gestrickt sein mit einem Innenumfang der Hülle entsprechend dem gewünschten Innenumfang einer Verbissschutzvorrichtung. Es kann als aufgerolltes "Endlosmaterial" geliefert werden, von dem Stücke entsprechend einzelnen Verbissschutzvorrichtungen abgelängt werden können.

Es können zwei Einschlagstützen 134 vorgesehen sein, um die herum das Fasermaterial 132 geführt wird. Es kann aber auch nur eine Stütze 134 vorgesehen sein. Fig. 19b deutet die Verwendung eines nicht versponnenen, verfilzten, chaotischen Fasermaterials 132 an, das auch wieder wie in Fig. 19a an einer einschlagbaren Stütze 134 oder an zwei oder drei oder mehreren davon angebracht sein kann.

Das Fasermaterial in den Ausführungsformen der Fig. 19a und 19b kann eine Höhe (y-Richtung) entsprechend L1 in Fig. 16 und 17 haben. Es kann aber auch insoweit kürzer sein und beispielsweise zum Boden hin einen Bereich freilassen und nur einen oberen Bereich einer Pflanze 99 umfangen.

Als Handelsware kann das Fasermaterial 132, wie es in den Fig. 19a und 19b beschrieben ist, schon schlauchartig flach vorgefertigt sein, wie es auch in Fig. 3 angedeutet und dazu beschrieben ist. Es kann dann in dieser Weise aufgerollt werden. Die Wickelrichtung entspricht dann der vertikalen Richtung im verbauten Zustand. Die Ablängung erfolgt dann entsprechend der gewünschten Höhe des Fasermaterial-Schlauchs.

Merkmalskombinationen zu dieser Ausführungsform können die folgenden sein:

> MK1. Matte für eine Verbissschutzvorrichtung 180, mit einem Fasermaterial 132, das natürlich und/oder biologisch abbaubar ist.
> MK2. Matte 132 nach MK1, das versponnen und/oder verwebt und/oder verknotet ist und/oder das unversponnen und/oder verfilzt ist.
> MK3. Matte 132 nach MK1 oder MK2, die schlauchartig zusammengefasst ist, wobei der Innenumfang des Schlauchs dem Innenumfang der zu fertigenden Verbissschutzvorrichtung 180 entspricht.
> MK4. Verbissschutzvorrichtung 180 mit einer einschlagbaren Stütze und mit einer schlauchartig aufgespannten Matte 132 und wenigstens einem um die Matte 132 umlaufenden und daran befestigten Haltering 211.

Fig. 20 deutet ein Verfahren zum Verbauen des Fasermaterials bzw. einer damit gebildeten Matte zur Ausführungsform der Fig. 19a und 19b an und zeigt eine Hilfseinrichtung 201 hierfür an. Die Hilfseinrichtung 201 ist ein vergleichsweise starres Rohr beispielsweise aus Kunststoff oder Blech mit einer vergleichsweise glatten Außenoberfläche. Sein Außenumfang entspricht dem Innenumfang der zu fertigenden Verbissschutzvorrichtung. Die Länge kann mindestens die gewünschte Höhe der Verbissschutzvorrichtung sein.

Der Schlauch des Fasermaterials 132 wird außen auf das Hilfsrohr 201 aufgezogen. Es kann eine Skalierung von einem Ende her aufweisen, wenn die Ablängung des Schlauchs nach dem Aufziehen erfolgen soll. Dann, oder schon vor dem Aufziehen, wird das Hilfsrohr 201 mittig über den Schössling 99 gestellt. Als Nächstes werden die einschlagbaren Stützen 134 auf der Innenseite des Rohrs nahe an dessen Innenwand in den Boden eingeschlagen. Dann wird das Hilfsrohr 201 nach oben herausgezogen, wobei das Fasermaterial 132 festgehalten wird. Wenn das Hilfsrohr 201 entfernt ist, kann das Fasermaterial 132 geeignet an den einschlagbaren Stützen 134 befestigt werden, etwa wie oben beschrieben durch Antackern. Aber auch Verkleben ist möglich. In Fig. 20 ist das Fasermaterial 232 nur seitlich am Hilfsrohr 201 angedeutet, tatsächlich aber läuft es vollständig um dessen Umfang herum.

Alternativ kann die einschlagbare Stütze 134 auch längs der Außenwand des Hilfsrohrs 201 zwischen dieser und dem Innenumfang des Schlauchs des Fasermaterials 132 nach unten geführt und dann in den Boden eingeschlagen werden. Es kann dann das Fasermaterial 132 bzw. die Matte an der einschlagbaren Stütze 134 befestigt werden, bevor das Hilfsrohr nach oben herausgezogen wird. Das Hilfsrohr kann dann wieder als Montagehilfe beim nächsten Schössling verwendet werden.

Fig. 21 zeigt eine Bauweise einer Verbissschutzvorrichtung, bei der ein Haltering 211 an das schlauchartige Fasermaterial 132 umlaufend um es angebracht ist. Mit 132a ist eine womöglich vorhandene Naht des Fasermaterial-Schlauchs 212 angedeutet. Der Ringdurchmesser entspricht in etwa dem Durchmesser des rund aufgespannten Schlauchs 212. Der Ring kann innen oder außen angebracht sein. Bei Anbringung innen kann der Ringaußendurchmesser in etwa dem Innendurchmesser des rund aufgespannten Schlauchs 212 entsprechen. Bei Anbringung außen kann der Ringinnendurchmesser in etwa dem Außendurchmesser des rund aufgespannten Schlauchs 212 entsprechen. Der Ring hält den Schlauch 212 offen.

Das Fasermaterial 132 und/oder der/die Ring/e 211 können an wenigstens einer einschlagbaren Stütze 134 befestigt sein. Die Befestigung insbesondere des Fasermaterials 132 kann mit einer der beschriebenen Befestigungseinrichtungen bzw. -techniken (Kleben, Klammern, Einflechten) erfolgen.

Auf geeigneter Höhe L der Verbissschutzvorrichtung kann ein Ring 211 vorgesehen sein, dann vorzugsweise oben oder im oberen Fünftel. Es können auch mehrere in Höhenrichtung beabstandete Ringe 211 vorgesehen sein, z. B. ein zweiter in etwa auf "halber Höhe" wie in Fig. 21 angedeutet.

Der Haltering 211 besteht aus natürlich/biologisch abbaubarem Material. Es können natürlich gewachsene Ruten, z. B. Weidenruten sein. Eine einzelne lange Rute (Länge = mehrfacher Umfang) kann mit sich selbst verschlagen werden.

Diese Bauweise kann mit nur wenigen senkrechten Holzelementen 131, 134 gewählt werden. Das Fasermaterial 132 wird dann von dem Ring 211 offengehalten. Wenigstens eines kann als einschlagbare Stütze 134 vorhanden sein. Davon können auch zwei oder drei oder vier oder mehr über den Umfang verteilt sein. Es können auch zwei oder drei oder vier oder mehr nicht einschlagbare Holzelemente 131 über den Umfang verteilt vorhanden sein. Fig. 21 deutet chaotisch/verfilztes Fasermaterial 132 an. Es kann aber auch versponnen und/oder verwoben und/oder verknotet sein.

In einer weiteren Ausführungsform kann der Ring 211 oben auf der Stirnfläche von zwei oder mehreren einschlagbaren Pfosten 134 aufliegen. Die schlauchartig zusammengefasste Matte wird von unten innen nach oben, dann außen und wieder unten um den Ring herum geführt. Es kann an den einschlagbaren Pfosten 134 befestigt werden. Weiter kann es an dem Stützring 211 befestigt werden, bspw. Durch Anbinden mit einem verrottenden Material, etwa Kokosseil.

Fig. 22 zeigt eine mögliche Verbindung, die umgangssprachlich als Klammern oder Tackern bezeichnet wird. Sie kann zwischen zwei Holzelementen 131 (auch einschlagbare Stütze 134, Ring 211) oder zwischen Fasermaterial 132 gleich welcher Aufbereitung (geflochten, geschlagen, verknotet, unaufbereitet, chaotisch, verfilzt) und Holzelement 131, einschlagbarer Stütze 134, Ring 211 vorhanden sein. Eine Klammer 221 mit zwei Schenkeln 221a und einem Querbügel 221b ist wenigstens durch Holzelement 131 oder einschlagbarer Stütze 134 oder Ring 211 und das Fasermaterial getrieben. Die Schenkelenden 221c können herausragen und zurückgebogen sein. Die Länge der Schenkel 221a kann über 5 oder 10 mm liegen. Sie kann unter 30 oder 20 mm liegen. Die Breite des Querbügels kann über 5 oder 10 mm liegen. Sie kann unter 20 oder 15 mm liegen. Statt Klammern mit zwei Schenkeln können aber auch Klammern mit nur einem Schenkel oder Nägel verwendet werden. Nägel können Köpfe haben, die ähnlich Dachpappenägeln verglichen zum Schaft vergleichsweise breit sind, z. B. mit Kopfdurchmesser mindestens 4 oder 7 oder 10 oder 20 mm größer als Schaftdurchmesser. Eine Verleimung kann entfallen, wenn Klammern oder Nägel verwendet werden oder kann zusätzlich vorgesehen sein.

Wenn Fasermaterial 132 - verfilzt oder geflochten oder geschlagen oder vernetzt - befestigt werden soll, kann außerdem ein Konterholzstück 222 auf der anderen Seite des Fasermaterials 132 vorgesehen sein, das auch noch von den Schenkeln 221a oder dem Nagel durchdrungen und dann gehalten wird und so das Fasermaterial flächig einklemmt und hält. Anders als gezeigt kann der Querbügel 221b der Klammer 221 auf Seiten des Fasermaterials 132 bzw. des Konterholzes 222 liegen, die Schenkel 221a laufen in Richtung Holzelement 221. Es können auch zwei Klammern oder Nägel von gegenüber liegenden Seiten eingetrieben werden. Die Klammern oder Nägel bestehen aus natürlich abbaubarem Material, z. B. Eisen ohne Verzinkung. Das Konterholzstück kann deutlich kleiner als das gegenüberliegende Holzelement sein und wird nach Festigkeitsaspekten gewählt. Mögliche Maße sind 10 mm * 40 mm * 100 mm, jeweils ± 50%.

Eine Verbissschutzvorrichtung kann bspw. als Holzelemente vier oder fünf oder sechs Schindeln/Dünnbretter etwa rechteckiger Form in der Länge zwischen 90 und130 cm mit Materialstärke zwischen 1 und 4 mm aufweisen. Die Breite der Schindeln/Dünnbretter kann nach Maßgabe des gewünschten Durchmessers der fertigen Verbissschutzvorrichtung und der Zahl der verwendeten Schindeln/Dünnbretter gewählt sein. Sie kann zwischen 5 und 15 cm liegen. Sie können im Abstand zueinander von zwischen 4 und 15 mm von zwei oder drei oder vier Kokos- oder Sisalschnüren mit einer Materialstärke von zwischen 4 und 15 mm mechanisch zusammengehalten werden. Statt Schnüren können auch Streifen Fasermaterials verwendet werden, die gewebt oder geknotet oder verfilzt/chaotisch sein können und die z. B. zwei oder drei Streifen einer Breite von zwischen 2 und 12 cm umfassen können, die jeweils alle Schindeln/Dünnbretter kreuzend angeordnet und an allen Kreuzungen mit den Schindeln/Dünnbrettern verbunden sind, vorzugsweise durch Klammern oder Nägel wie beschrieben.

Beim Verbau kann das Verbundmaterial an eine separat vorgesehene einschlagbare Stütze 134 angeklammert (getackert) oder angenagelt werden. Es kann mittels verrottender Schnüre oder Draht zusammengehalten werden. Es kann wie anhand der Figuren 9 bis 12 beschrieben erfolgen. Es können auch freie Enden des Fasermaterials zum rohrartigen Zusammenhalten verwendet werden, etwa indem diese an eine einschlagbare Stütze 134 angeklammert (getackert) oder angenagelt oder miteinander oder mit einem Holzelement 131 verbunden werden. Beim Verbau können einige der Holzelemente 131 mit Abstand zum Boden gehalten sein, etwa mit Abstand größer als 2 oder 5 oder 10 cm.

Die einschlagbare Stütze 134 steht in der nördlichen Hemisphäre vorzugsweise im nördlichen Quadranten der zu schützenden Pflanze, also im Winkelbereich zwischen Nordwest und Nordost, um Abschattungen weitgehend zu vermeiden. In der südlichen Hemisphäre steht sie vorzugsweise im südlichen Quadranten.

Es können mehrere Klammern und/oder Nägel, auch als "Verbinder" angesprochen, etwa vier oder fünf oder sechs, an jeder Kreuzung von Fasermaterial und Holzelement eingetrieben werden. Schnur oder Faserstreifen können im verbauten Zustand an der Innenseite der Verbissschutzvorrichtung oder an ihrer Außenseite liegen.

Fig. 23 zeigt ein Verbundmaterial mit mehreren in x-Richtung beabstandeten Streifen Fasermaterials 132, von denen jeder den Freiraum zwischen je zwei benachbarten Holzelementen 131, 134 überbrückt und diese Holzelemente 131, 134 selbst an ihren Rändern, aber nicht über deren gesamte Breite in x-Richtung überdeckt. An den überdeckten Rändern werden Holzelemente 131, 134 und Fasermaterial 132 miteinander verbunden. Auch eine einschlagbare Stütze 134 kann so angebunden werden. Fig. 23 deutet versponnenes und/oder verwobenes und/oder verknotetes Fasermaterial 132 an. Es kann aber auch chaotisch/verfilzt sein.

Im Folgenden werden anhand Fig. 24 eine Verbindevorrichtung 241 und anhand Fig. 25 eine Fertigungsvorrichtung 250 für das Verbundmaterial beschrieben. Die Verbindevorrichtung dient dem Verbinden von Holzelement 131, 134 und Fasermaterial132 und ggf. Konterholz 222 miteinander, wie es allgemein oben beschrieben ist. Sie benützt zum Verbinden Klammern 221 und/oder Nägel. Sie hat vorzugsweise als mechanisch feste Baueinheit mehrere Köpfe 241, die als schwarze Kreisscheiben symbolisiert sind und die gemeinsam und vorzugsweise automatisch angesteuert werden und dazu ausgelegt sind, in eine Kreuzung 242 von Holzelement 131, 134 und Fasermaterial 132 und ggf. Konterholz 222 gleichzeitig je einen Verbinder (Nagel oder Klammer 221) einzutreiben. Dies kann elektrisch oder pneumatisch angetrieben geschehen. Über einer Kreuzung 242 können also beispielsweise zwei oder drei oder vier oder fünf oder sechs Köpfe 241 stehen bzw. positioniert werden, die dann gleichzeitig über die Kreuzung 242 geeignet verteilt sechs Nägel oder Klammern anbringen und eintreiben. Die Verbindevorrichtung kann ein nicht gezeigtes geeignetes Widerlager auf der anderen Seite des zu fertigenden Verbundmaterials aufweisen, das auch die Schenkelenden 221 c wie in Fig. 22 gezeigt zurückbiegen kann. Wenn ein Holzelement 131, 134 mehrere Streifen Fasermaterials 132 kreuzt, kann die Verbindevorrichtung über jeder Kreuzung 242 mehrere Köpfe 241 aufweisen, die dann alle gemeinsam automatisch angesteuert werden.

Kurz und knapp kann die Verbindevorrichtung als mit mehreren Köpfen, die dazu ausgelegt sind, in eine Kreuzung von Holzelement und Fasermaterial und ggf. Konterholz gleichzeitig je einen Verbinder einzutreiben, ausgestattet beschrieben werden.

Eine Fertigungsvorrichtung 250 ist für ein Verbundmaterial vorzugsweise wie oben beschrieben vorgesehen. Sie hat eine erste Zuführvorrichtung 251 zum Zuführen länglicher Holzelemente 131, 134 aus einem Vorrat oder Magazin zu einer Arbeitsstelle 259 derart, dass die Holzelemente 131, 134 in Querrichtung (x-Richtung in Fig. 13) quer zu ihrer Längsrichtung (y-Richtung in Fig. 13) voneinander beabstandet sind.

Eine zweiten Zuführvorrichtung 252 dient dem Zuführen eines oder mehrerer Streifen Fasermaterials 132 zu der Arbeitsstelle 259 derart, dass die Streifen sich, wenn sie zugeführt sind, in Querrichtung (y-Richtung in Fig. 13) erstrecken und ggf. voneinander in Längsrichtung (x-Richtung in Fig. 13) beabstandet sind und die zugeführten Holzelemente 131, 134 kreuzen und vorzugsweise dort aufliegen. Die zweite Zuführvorrichtung 252 kann z. B. geeignet positionierte Rollen von Fasermaterialstreifen aufweisen, von denen das Fasermaterial im Arbeitsfortgang heruntergezogen wird.

Eine weitere, nicht gezeigte Zuführvorrichtung kann vorgesehen sein, um Konterhölzer 222 geeignet zuzuführen. In Fig. 25 kann sie die Konterhölzer 222 von oben auflegen.

An der Arbeitsstelle 259 ist eine Verbindevorrichtung 253 ggf. auch mit Widerlager 253a zum Verbinden von Holzelement 131, 134 und Fasermaterial 132 an ihrer Kreuzung 242 vorgesehen, um so das Verbundmaterial herzustellen. Die Verbindevorrichtung 253 ist vorzugsweise wie oben beschrieben ausgebildet und kann mehrere Köpfe 241 als Baueinheit aufweisen. Sie kann beweglich sein, etwa reversierend, so dass sie beim Eintreiben der Verbinder zeitweise mit dem Material gleich schnell mitgeführt und dann wieder zurückbewegt werden kann.

Eine Transportvorrichtung 254 dient dem Transportieren der zugeführten Holzelemente und Fasermaterialstreifen über die Arbeitsstelle 259 hinweg und von ihr fort, wenn sie miteinander verbunden sind. Die Pfeile deuten die Transportrichtung an. Der Transport kann durch Ziehen weg von der Arbeitsstelle erfolgen. Das Ziehen kann das Abwickeln des Fasermaterials von den Vorratsrollen bewirken. Die Transportvorrichtung 254 kann auch ein oder mehrere angetriebene oder passiv mitlaufende Förderbänder aufweisen.

Die Fertigungsvorrichtung kann zur Arbeit im Quasi-Endlosbetrieb ausgelegt sein, indem fortlaufend Holzelemente 131, 1134 und Fasermaterialstreifen 132 zugeführt, miteinander verbunden und im Verbund als Endlos-Verbundmaterial abtransportiert werden.

Es kann eine Konfektioniervorrichtung 255 vorgesehen sein, die das Verbundmaterial nach seinem Abtransport von der Arbeitsstelle geeignet konfektioniert. Sie kann eine angetriebene Wickelvorrichtung aufweisen, die das Quasi-Endlos-Verbundmaterial zu Rollen aufwickelt, oder eine Schneid- und Stapelvorrichtung, die das Endlos-Verbundmaterial geeignet ablängt (z. B. nach jeweils vier oder fünf oder sechs Holzelementen 131, 134) und die Einzelteile in gewünschten Mengen stapelt.

Die Fertigungsvorrichtung 250 kann Verbundmaterial wie bspw. in den Figuren 15 bis 17 gezeigt fertigen. Es können Holzelemente unterschiedlicher Länge eingebunden werden, etwa indem sie entsprechend dem gewünschten Muster in dem der ersten Zuführvorrichtung zugänglichen Vorrat eingelegt sind. Beispielsweise kann jedes vierte oder fünfte oder sechste Holzelement länger als die übrigen Holzelemente sein und am die anderen Holzelemente überragenden Ende mit einer Spitze versehen sein, so dass es beim Verbau in den Boden eingeschlagen werden kann.

Die beschriebenen Komponenten können elektrisch und/oder pneumatisch angetrieben sein. Sie können elektrisch, elektronisch und digital zueinander synchronisiert und aufeinander abgestimmt steuerbar bzw. regelbar sein. Sie können eine gemeinsame überlagerte, nicht gezeigte Steuerung aufweisen, die mit geeigneter Sensorik und Aktorik verbunden ist. Die Ansteuerung und Dimensionierung ist so, dass das Verbundmaterial mit den gewünschten Dimensionen entsteht.

Kurz und knapp kann die Fertigungsvorrichtung 250 so beschrieben werden: Sie ist für das beschriebene Verbundmaterial vorgesehen und hat eine ersten Zuführvorrichtung zum Zuführen länglicher Holzelemente zu einer Arbeitsstelle derart, dass die Holzelemente in Querrichtung quer zu ihrer Längsrichtung voneinander beabstandet sind, eine zweiten Zuführvorrichtung zum Zuführen mehrerer Streifen Fasermaterials zu der Arbeitsstelle derart, dass sie sich in Querrichtung erstrecken und in Längsrichtung voneinander beabstandet sind und die zugeführten Holzelemente kreuzen, an der Arbeitsstelle eine Verbindevorrichtung zum Verbinden von Holzelement und Fasermaterial an ihrer Kreuzungsstelle, und eine Transportvorrichtung zum Transportieren der zugeführten Holzelemente und Fasermaterialstreifen über die Arbeitsstelle hinweg und von ihr fort.

Fig. 26 zeigt links im Schnitt und rechts in Draufsicht schematisch kombiniert mehrere weitere Merkmale zum Verbissschutz, die aber nicht notwendig in der gezeigten Kombination verwirklicht sein müssen, sondern auch jeweils separat und ggf. kombiniert mit anderen kombinierbaren Merkmalen, die in dieser Beschreibung dargestellt sind, verwirklicht sein können. Die Zeichnung ist nicht maßstäblich.

Die Holzelemente 131 können brettartig bzw. schindelartig ausgebildet sein. Sie können jeweils, wie schon gesagt, Dimensionen entsprechend Dicke d, Breite b und Höhe L, L1, L2, L3 aufweisen. Sie können so als "Schindeln" angesprochen werden. Allerdings muss es sich bei ihnen nicht um präzise definierte Bretter handeln. Sie müssen nicht strikt eben sein, sondern können wellig oder gebogen sein. Die Kanten und Oberflächen können ganz oder teilweise natürlichen Strukturen folgen, etwa der Holzmaserung, bspw. auch als Bruch- oder Risskanten. Angaben von Dicke d, Breite b, Höhe L, L1, L2, L3 und Abstand A können dann nur ungefähre Maße bzw. statistisch richtige Maße sein und müssen auch innerhalb einer Schindel bzw. zwischen zwei Schindeln nicht konstant sein.

Das Verbundmaterial für eine Verbissschutzvorrichtung kann Schindeln unterschiedlicher Breite b (in Umfangsrichtung gesehen) aufweisen, insbesondere solche einer ersten Breite b1 und solche einer kleineren zweiten Breite b2. Herstellungstechnisch können vor dem Verbinden der Schindeln breite Schindeln der Breite b1 der Länge nach in je zwei schmale Schindeln der Breite b2 halbiert oder je drei schmale Schindeln der Breite b3 gedrittelt werden, bspw. durch Sägen, Stanzen, Schneiden, Brechen, Lasern o.ä.. Die Breite bs der schmaleren Schindeln kann unter 70 oder 60 oder 52 oder 40% der Breite b1 der breiteren Schindeln liegen. Sie kann über 30 oder 40 oder 47 oder 60% der Breite b1 der breiteren Schindeln liegen. In Fig. 26 sind die Maße b, b1, b2 schematisch angedeutet.

Die Anzahl der breiten Schindeln B und der schmalen Schindeln S im Verbundmaterial für eine Verbissschutzvorrichtung kann 3, 4 oder mehr sein. Sie kann 10, 8 oder weniger sein. Sie kann 4 oder 5 oder 6 sein. Die Folge der breiten Schindeln B und der schmalen Schindeln S im Verbundmaterial für eine Verbissschutzvorrichtung kann z. B. abwechselnd B-S-B-S oder B-S-B-S-B-S sein oder kann z. B. B-S-S-S-S-B oder B-S-S-B-S-S sein. Allgemein können die außenliegenden - d.h. in den obigen Schemen ganz links und ganz rechts - liegenden Schindel die breiteren sein, die anderen die schmaleren. Die außenliegenden Schindeln können beim Verbau an einer Einschlagstütze 134 befestigt werden. Wenn breitere und schmalere Schindeln vorgesehen sind, können die weiter oben bezifferten Maßbereiche für die breiteren von ihnen gelten.

Die Einschlagstütze 134 kann ein Rundholz oder ein Pfosten oder ein Kantholz sein. Die Größe der Querschnittsfläche der Einschlagstütze 134 kann über 3 oder 6 oder 10 cm$^2$ liegen. Sie kann unter 80 oder 40 oder 20 cm$^2$ liegen. Es kann aber auch eine der im Verbundmaterial eingebundenen Schindeln 131 als Einschlagstütze 134 ausgebildet sein. Sie ist dann länger als die übrigen Schindeln 131 und am Unterende womöglich spitz zulaufend geformt.

Es ist auch möglich, ein Verbundmaterial 130 wie beschrieben gleich anfänglich vor dem Verbau an der zu schützenden Pflanze mit einer Einschlagstütze 134 zu verbinden, etwa indem eine der Schindeln 131, z. B. eine der außenliegenden, oder ein freies Ende des die Schindeln verbindenden Fasermaterials 132 mit der Einschlagstütze 134 verbunden wird, etwa durch Antackern.

Im Hinblick auf eine gute Kombination aus Belichtung der geschützten Pflanzen, Stabilität des Aufbaus und Schutzwirkung hat sich die obige Kombination B-S-S-S-S-B breiter und schmaler Schindeln als vorteilhaft erwiesen. Mit den breiten Schindeln wird das Verbundmaterial an eine Einschlagstütze angebracht, bspw. durch Tackern, und die schmaleren schützen und lassen zwischen sich genügend Raum für Licht.

Ein Verfahren zum Schützen einer Pflanze umfasst das Bereitstellen eines Flachmaterials 10 oder eines Verbundmaterials 130 wie beschrieben, das Einschlagen einer Einschlagstütze 134 im Boden in der Nähe der zu schützenden Pflanze, und das Anbringen des Flachmaterials 10 oder des Verbundmaterials 130 mit beiden Enden vor oder nach dem Einschlagen der Einschlagstütze 134 so, dass es die zu schützenden Pflanze umgibt. Die Einschlagtiefe kann über 5 oder 10 oder 20 cm liegen. Der Abstand der Einschlagstütze 134 von der zu schützenden Pflanze kann über 2 oder 3 oder 4 cm liegen. Er kann unter 10 oder 7 cm liegen. Das Einschlagen der Einschlagstütze 134 im Boden geschieht in der nördlichen Hemisphäre vorzugsweise im nördlichen Quadranten der Pflanze, also im Winkelbereich zwischen Nordwest und Nordost, um keine weitere Abschattung zu bewirken. In der südlichen Hemisphäre erfolgt es im südlichen Quadranten.

In einzelnen, mehreren oder allen Schindeln, insbesondere nur in den breiteren, können jeweils eine oder mehrere Öffnungen 12 vorgesehen sein, die durch Sägen, Stanzen, Schneiden, Lasern o.ä. gefertigt sein können. Ihre Fläche kann über 5 oder 10 oder 20 oder 25 cm$^2$ liegen. Sie kann unter 100 oder 70 oder 50 oder 30 cm$^2$ liegen. Ihre Form kann rund oder oval oder eckig oder schlitzartig länglich sein. Pro Schindel können mehr als 1, 2 oder 5 Öffnungen vorgesehen sein. Es können weniger als 20 oder 10 oder 5 sein. Die Öffnungen 12 bewirken eine bessere Belichtung der geschützten Pflanzen.

Eine Verbissschutzvorrichtung mit dem beschriebenen Verbundmaterial kann eine "weiche Oberkante" aufweisen. Der Sinn dieser Konstruktion ist es, das Aufscheuern junger Triebe, die nach oben aus der Verbissschutzvorrichtung herausragen, an deren Oberkante zu vermeiden, etwa wenn Wind oft oder regelmäßig solches Scheuern bewirken würde. Die weiche Oberkante kann dadurch gefertigt werden, dass oben an ein Holzelement 131 ein Stück oder oben über mehrere Holzelemente 131 hinweg ein Streifen 132 nachgiebigen Materials, bspw. des die Schindeln 131 verbindenden Fasermaterials 132 , vorzugsweise im Verbau auf der Innenseite 131i und vorzugsweise umlaufend so angebracht wird, dass das nachgiebige Material, insbesondere also das Fasermaterial 132, die Oberkante 131k der Holzelemente 131 bzw. Schindeln nach oben überragt. Es kann aber auch an der Außenseite 131a angebracht sein.

Die Länge lue des Überstands 132ue nach oben über die Oberkante 131k eines Holzelements 131 hinaus kann mehr als 5 oder 10 oder 20 mm sein. Er kann unter 50 oder 20 mm sein. Das Anbringen kann durch Tackern oder Kleben erfolgen. Auf diese Weise kommen Pflanzenteile mit dem nachgiebigen Fasermaterial 131 in Kontakt und nicht oder jedenfalls weniger mit der Oberkante 131k der Verbissschutzvorrichtung, so dass das Aufscheuern deutlich reduziert ist. Das Verbundmaterial kann dann insbesondere zwei oder drei umlaufende Streifen 132 aufweisen, deren oberer nach oben den Überstand 132ue aufweist.

In Breitenrichtung können pro "Kreuzung" von Fasermaterialstreifen 132 und Holzelement 131 nur zwei Klammerpositionen für Klammern 221 vorgesehen sein, die jeweils näher an der Kante der Schindel 131 als an deren Mittenlinie liegen, wie in fig. 26 rechts oben angedeutet. Die hat sich als günstig im Hinblick auf Ausdehnungs- und Schrumpfungsverhalten bei wechselnder Nässe bzw. Feuchte der Materialien erwiesen.

Die in dieser Beschreibung und in den Ansprüchen beschriebenen oder in einer Abbildung dargestellten Merkmale sollen auch dann als untereinander kombinierbar gelten, wenn ihre Kombination nicht ausdrücklich beschrieben ist, soweit die Kombination technisch möglich ist. Merkmale, die in einer/m bestimmten Kontext, Ausführungsform, Figur oder Anspruch beschrieben sind, sollen auch als von diesem Anspruch, Kontext, Ausführungsform oder Figur trennbar und als mit jeder anderen Figur, Anspruch, Ausführungsform oder Kontext kombinierbar angesehen werden, soweit dies technisch möglich ist. Ausführungsformen und Figuren sollen nicht als notwendigerweise ausschließlich gegeneinander verstanden werden. Beschreibungen eines Verfahrens oder eines Ablaufs oder eines Verfahrensschritts oder eines Ablaufschritts sind auch als Beschreibung von Einrichtungen und/oder Gegenständen zu verstehen, die für die Implementierung des Verfahrens oder des Ablaufs geeignet sind, und umgekehrt.

Eine nicht abschließende, nicht vollständige Darstellung möglicher Merkmalskombinationen ist:
Ein Verbundmaterial 130 für eine Verbissschutzvorrichtung 180 hat mehrere längliche, nebeneinander angeordnete Holzelemente 131, 134, 141, mindestens einen Streifen Fasermaterial 132, 142, der wenigstens zwischen zwei Holzelementen 131, 134, 141 und diese zwei Holzelemente wenigstens teilweise überdeckend angeordnet ist, und Verbindungen 133 an den Überdeckungen der Holzelemente 131, 134, 141 und des Fasermaterials 132, 142, wobei die Holzelemente und das Fasermaterial und die Verbindungen natürlich und/oder biologisch abbaubar sind. Bei dem Verbundmaterial 130 wie oben können die Holzelemente 131 flach ausgebildet sein und eine Dicke haben, die unter 5 oder 4 oder 3 mm liegt und die über 0,5 oder 1 mm liegt, und rechteckigen Grundriss haben können. Bei dem Verbundmaterial 130 wie oben können die Holzelemente 131 Holzbretter und/oder Spankistenholz und/oder Schindelholz und/oder Spanplatten sein oder aufweisen. Bei dem Verbundmaterial 130 wie oben können die Holzelemente voneinander einen Abstand A haben, der wenigstens 5 oder 10 oder 20 oder 50 mm ist und der höchstens das Dreifache oder das Doppelte oder das Einfache der Breite b eines Holzelements 131, 134, 141 sein kann. Bei dem Verbundmaterial 130 wie oben kann das Fasermaterial 132, 142 Naturfasern sein oder aufweisen, insbesondere Fasern von Jute und/oder Sisal und/oder Kokos und/oder Hanf und/oder Bast und/oder Wolle und/oder Rindenstreifen und/oder Produktionsabfällen, wobei das Fasermaterial 132, 142 verwoben und/oder versponnen und/oder verknotet sein kann, insbesondere zu einem Seil 142 und/oder zu einem Gewebe 132, insbesondere einem Netz 132a, 132b, oder wobei das Fasermaterial 132, 142 unversponnen und/oder verfilzt verwendet ist. Das Verbundmaterial 130 wie oben kann mehreren Streifen des Fasermaterials 132, 142 haben, die beabstandet voneinander liegen und jeweils eine Breite kleiner als die Länge eines Holzelements 131, 134, 141 haben.

Bei dem Verbundmaterial 130 wie oben kann die Verbindungen 133 ein Klebstoff sein oder ihn aufweisen und/oder Klammern 221 sein oder aufweisen. Bei dem Verbundmaterial 130 wie oben kann ein Holzelemente 131, 134, 141 und/oder Fasermaterial 132, 142 und/oder eine Verbindung 133 mit einem die Verwitterung beeinflussenden Stoff bearbeitet und/oder bestrichen und/oder getränkt sein. Bei einem Verbundmaterial 130 wie oben kann ein Holzelemente 131, 134, 141 und/oder Fasermaterial 132, 142 und/oder eine Verbindung 133 mit einem Vergrämungsmittel bearbeitet und/oder bestrichen und/oder getränkt sind. Bei dem Verbundmaterial 130 wie oben kann wenigstens ein Streifen Fasermaterial 132, 142 mehrere Holzelemente 131, 134, 141 überkreuzend angeordnet sein. Bei dem Verbundmaterial 130 wie oben kann ein Streifen Fasermaterial 132, 142 den Freiraum zwischen zwei benachbarten Holzelementen 131, 134, 141 überbrücken und diese Holzelemente selbst an ihren Rändern überdecken. Bei einem Verbundmaterial 130 wie oben kann wenigstens ein Stück oder ein Streifen Fasermaterial 132, 142 mit einem die Oberkante 131k eines oder mehrerer Holzelemente 131, 134, 141 überragenden Überstand 132ue versehen sein. Ein Verbundmaterial 130 wie oben kann eine oder mehrere Öffnungen 12 in einem oder mehreren oder jedem der Holzelemente 131 aufweisen. Ein Verbundmaterial 130 wie oben kann mehrere voneinander beabstandete Schindeln als Holzelemente 131 aufweisen, die unterschiedliche Breiten b, b1, b2 haben können.

Eine Verbissschutzvorrichtung kann ein Verbundmaterial wie oben aufweisen und einen oder zwei oder drei oder mehrere einschlagbare Stützpfosten 134.

Die Fig. 27a bis n zeigen schematisch Verbissschutzvorrichtungen 180 mit Aufhaltern 270 und/oder Details dazu. Gleiche Bezugsziffern wie vorher sollen gleiche Merkmale bedeuten.

Gezeigt ist schematisch und nicht maßstäblich die Draufsicht auf eine aufgestellte Verbissschutzvorrichtung. Im Inneren ist schematisch eine Pflanze 99 dargestellt. Die Verbissschutzvorrichtung 180 weist vier Holzelemente 131 auf, die als Bretter oder Schindeln oder Spankistenholz ausgebildet sein können. Sie können vergleichsweise regelmäßige Konturen haben. 134 ist ein einschlagbarer Stützpfosten. Er besteht wie die Holzelemente aus natürlich und/oder biologisch abbaubarem Material und ist vorzugsweise ein Holzpfosten. Der Querschnitt kann, wie in Fig. 27 gezeigt, rechtwinklig oder quadratisch sein. Er kann auch rund sein. Unten kann der Stützpfosten 134 angespitzt sein. Beim Aufstellen der Verbissschutzvorrichtung 180 kann er mit einem Hammer, etwa einem Fäustel oder einem Vorschlaghammer, oder mit einer Einschlaghülse in den Waldboden eingeschlagen werden. In seiner Länge ist er so dimensioniert, dass er nach dem Einschlagen noch ausreichend weit aus dem Boden hervorsteht, beispielsweise so, dass er die gleiche Höhe aufweist wie die Oberkante der Holzelemente des Verbundmaterials. Es sind aber auch Ausführungsformen denkbar, bei denen ein Stützpfosten nur auf dem Boden aufsteht, nicht in ihn eingeschlagen wird. Dies kann z. B. der Fall sein, wenn mehrere Stützpfosten vorgesehen sind, beispielsweise drei oder mehr.

Das Verbundmaterial besteht in der gezeigten Ausführungsform aus den vier Holzelementen 131a bis 131d. Im noch nicht aufgestellten Zustand kann das Verbundmaterial flach ausgebreitet liegen. Es bilden dann die Holzelemente 131a und 131d die äußersten der vier miteinander verbundenen Holzelemente, während die übrigen Holzelemente, insbesondere 131b und 131c, innenliegende Holzelemente bilden. Ein Streifen Fasermaterial 132 ist in Fig. 27a schematisch gezeigt. Er beginnt bei einem äußeren Holzelement 131a, läuft dann über die innenliegenden Holzelemente 131b und 131c hinweg und endet beim anderen außenliegenden Holzelement 131d. Wie schon weiter oben beschrieben kann der Streifen 132 des Fasermaterials mit Klammern 221 an den Holzelementen 131 jeweils befestigt sein.

Das Verbundmaterial ist oder wird in geeigneter Weise an den Stützpfosten 134 befestigt. Beispielsweise können (nicht gezeigt) freie Enden des Fasermaterialstreifens am Stützpfosten 134 befestigt werden, etwa mit Klammern, etwa durch Tackern. Oder es können die außenliegenden Kanten der außenliegenden Holzelemente 131a und 131d an dem Stützpfosten 134 befestigt werden, etwa durch Klammern, etwa durch Tackern, oder durch Nägel oder Ähnliches. Über die Höhe der Verbissschutzvorrichtung 180 verteilt, also senkrecht zur Zeichnungsebene der Fig. 27a, können mehrere Verbindungen, etwa Klammern, Nägel oder ähnliches, gesetzt werden, etwa zwei oder drei oder vier oder mehr. Auch nebeneinander können mehrere gesetzt werden.

So am Stützpfosten 134 befestigte Holzelemente 131stehen vergleichsweise stabil in der einmal getroffenen Aufstellung. Die innenliegenden Holzelemente 131b und 131c sind dementgegen weniger stabil positioniert. Es besteht die Möglichkeit, dass sie durch äußere Kräfte, in Fig. 27a mit Pfeil Fa symbolisiert, aus einer einmal getroffenen Aufstellung heraus verschoben werden und dort womöglich dauerhaft verbleiben. Für eine zu schützende Pflanze 99 ist dies nachteilig, weil dann der für ihre Entwicklung notwendige Raum verlorengegangen ist. Eine störende äußere Kraft ist in Fig. 27a von unten rechts kommend symbolisiert. Es kann sich hierbei beispielsweise um Winddruck handeln oder bei schräger Aufstellung der Verbissschutzvorrichtung 180 schlicht um eine Komponente der Gewichtskraft. Es kann auch die mechanische Einwirkung von Tieren sein, die hier störend auftreten kann. Eine Kraft gemäß Fa würde dazu führen, dass das untere Holzelement 131c und das rechte Holzelement 131b nach links oben geschoben werden und dort womöglich verbleiben. Um dies zu behindern bzw. die Aufstellung zu stabilisieren, ist ein Aufhalter 270 vorgesehen, die sich von innen in und zwischen die Holzelemente 131a bis 131d hineinspreizt. In der Ausführungsform der Fig. 27a ist der Aufhalter ein elastisches Element, das in Fig. 27a zweimal gezeigt ist, nämlich ganz rechts einmal entspannt und links elastisch gespannt und verformt in das Innere der aufgestellten Verbissschutzvorrichtung 180 hineingespreizt.

Beim Aufstellen der Verbissschutzvorrichtung 180 würde diese also zunächst entsprechend der gewünschten Aufstellung in etwa ausgebracht und aufgestellt werden. Als nächstes kann dann der Aufhalter 270 elastisch zu einem ringartigen Gebilde verformt werden, das einen Außendurchmesser hat, der kleiner ist als die Innendimension der aufgestellten Verbissschutzvorrichtung. So kann sie in das Innere eingebracht und dann losgelassen werden. Sie dehnt sich dann elastisch wieder aus und liegt dann von innen an den Holzelementen 131 an. Sie kann dabei direkt am Inneren der Holzelemente 131 oder am Inneren des Streifens 132 des Fasermaterials anliegen. Vorzugsweise sind das Einbringen und die Dimensionen so, dass die Enden 270a und 270b des Aufhalters 270 in der Nähe des Stützpfostens 134 zu liegen kommen, ohne diese zu überlappen. Über die Höhe verteilt können ein oder mehrere solcher Aufhalter 270 eingebracht werden.

Nach der Aufstellung können dann zwar nach wie vor Kräfte Fa wie gezeigt auf die Verbissschutzvorrichtung 180 einwirken. Je nach Stärke können sie sogar ein momentanes Verdrücken der Aufstellung der Verbissschutzvorrichtung 180 bewirken. Der elastische Aufhalter wird aber zum Teil der äußeren Kraft Fa entgegenwirken und ggf. eine zeitweise verdrückte Aufstellung der Verbissschutzvorrichtung 180 in die ursprüngliche Aufstellung weitgehend zurückschieben.

Anders als in Fig. 27a gezeigt kann eines oder können beide Enden 270a, b des Aufhalters 270 zwischen dem Stützpfosten 134 und einem daran angebrachten Holzelement 131a oder 131d liegen, in Fig. 27a also links oben, und das Ende kann so zusammen mit dem Holzelement befestigt, z. B. angetackert werden.

Fig. 27b zeigt eine andere Ausführungsform des Aufhalters. Hier weist der Aufhalter eine oder zwei oder mehrere Leisten 272 auf, die in etwa horizontal liegend in einem Außeninnen-außen-Muster zwischen benachbarte Holzelemente geklemmt werden. Fig. 27b zeigt dies schematisch mit zwei Leisten 272. In Draufsicht erscheinen sie sich kreuzend. Real liegen sie auf unterschiedlichen Höhen der Verbissschutzvorrichtung, können aber in Höhenrichtung nahe beieinander liegen und können sich berühren. Die Holzelemente haben jeweils eine Außenseite 272a, die an einer jeweiligen Innenseite 131i eines jeweiligen Holzelements 131 anliegt. Die Leisten 272 haben auch eine Innenseite 272i, die an den vertikalen Kanten 131v der benachbarten Holzelemente 131 anliegt. Auf diese Weise entsteht ein Klemmeffekt, der der Aussteifung und Stabilisierung der Aufstellung der Verbissschutzvorrichtung 180 zuträglich ist. Dies ist insbesondere dann der Fall, wenn an beiden innenliegenden Holzelementen 131b und 131c jeweils innen eine Leiste 272 anliegt.

Die Leisten 272 können ihrerseits wieder an den Holzelementen befestigt werden, etwa mittels von außen angebrachten Klammern 274, etwa durch Tackern. Verschrauben oder Vernageln oder Verkleben ist ebenso denkbar. Die Leisten 272 bestehen aus natürlich und/oder biologisch abbaubarem Material. Sie können Holzleisten sein. Ihre Länge ist so, dass sie in der Aufstellung in horizontaler Richtung beidseits etwas über die jeweilige vertikale Kante 131v der anliegenden Holzelemente 131 hinausragen, beispielsweise um wenigstens 0,5 oder 1 oder 2 cm. Holzleisten 272 wie in Fig. 27b gezeigt können an allen innenliegenden Holzelementen (also Holzelemente, die nicht am Stützpfosten 134 befestigt sind) angebracht werden. Die Verbindungsmittel, Klammern 274, Schrauben, Nägel, Leim, sind vorzugsweise auch natürlich oder biologisch abbaubar, etwa durch Verrosten.

Der Verbau der Leisten geschieht derart, dass zunächst die Verbissschutzvorrichtung 180 wie gewünscht aufgestellt wird. Danach werden dann die Leisten 272 in die Schlitze zwischen benachbarten Holzelementen hineingeschoben und aus ihnen wieder herausgeführt, wie in Fig. 27b schematisch gezeigt. In Höhenrichtung geschieht dies vorzugsweise in der Nähe eines Bands 132 des Fasermaterial, das nach Einbringen der Leisten 272 einigermaßen straff sitzen soll, um die gewünschte Klemmung zu bewirken.

Es sei darauf hingewiesen, dass die verwendeten Materialien natürliche Materialien sind mit Toleranzen und hingenommenen Fertigungsvarianzen und Nachgiebigkeiten. Die Einfügung muss deshalb nicht in jedem Fall enganliegend wie in Fig. 27b gezeigt sein. Fig. 27c gibt der Ordnung halber trotzdem Erläuterungen zur Bemaßung. 221 sind die jeweils kantennächsten Klammern, mit denen das Band 132 von Fasermaterial an der jeweiligen Holzschindel 131 gehalten ist. Zur Kante 131v hin liegt dann ein Abstand a vor. Die Holzelemente 272 sind selbst mit einer Breite b angenommen. Nimmt man an, dass bei benachbarten Holzelementen bzw. Schindeln bzw. Brettern 131 gleiche Verhältnisse vorliegen, sind die Dimensionen so gewählt, dass gem. Pythagoras folgende Gleichung gilt:

$$2*(a + b)^2 = c^2$$

wobei a der schon genannte Abstand ist, b die Breite der Leisten 272 in Draufsicht und c die freie Länge des Bands 131 des Fasermaterials. Alle Dimensionen sind bei der Herstellung des Verbundmaterials bzw. der Leisten einstellbar. Beispielsweise kann a 1 cm sein, b kann 2 cm sein, c wäre dann etwa 4,2 cm. Flach liegend wäre der Abstand zwischen benachbarten Holzelementen (Abstand zwischen den benachbarten vertikalen Kanten 131v dann etwa 2,2 cm.

Die Holzleisten 272 können außerdem miteinander verbunden sein. Sie können an ihrem Überkreuzungspunkt - in Figur 27b rechts unten - allgemein mit Verbindungsmitteln vernagelt oder verdübelt oder verschraubt oder verklebt sein. Das Verbindungsmittel kann auch wieder biologisch oder natürlich abbaubar sein. Dies gilt auch für nachfolgend beschriebene Verbindungsmittel. Die womöglich vorhandene Verbindung der Holzleisten 272 kann direkt und/oder indirekt sein. Eine direkte Verbindung ist ihre Verklammerung oder Verdübelung oder Verleimung an den sich kreuzenden Endbereichen der Leisten 272. Die indirekte Verbindung kann über miteinander verbundene Holzelemente 131 erfolgen, mit denen die Holzleisten 272 jeweils über Klammern 274 oder Nägel oder Schrauben oder Leim verbunden sind.

Figur 27d zeigt zwei Holzleisten 27d1 zur Bildung eines Aufhalters 270. Etwas von ihren Enden beabstandet weisen die Leisten zueinander komplementäre bzw. formschlüssige Einkerbungen auf. Ihre tiefe t kann die halbe Höhe h der Leisten 27d1 sein. Sie können dann wie in Figur 27d rechts gezeigt ineinander gelegt werden. Sie können dann mit Klammern 27d3 oder mindestens einem Holzdübel oder Leim noch miteinander verklammert oder verdübelt oder verleimt werden. Im Verbau können sie mit Klammern 274 an Holzelementen 131 festgeklammert werden. Der Verbauort kann wie in Figur 27b gezeigt lokalisiert sein, insbesondere abseits bzw. gegenüber eines Stützpfostens 134.

Figur 27e zeigt zwei Holzleisten 27e1 zur Bildung eines Aufhalters 270. Die Einkerbungen liegen am Ende der Leisten 271, so dass Zungen entstehen, deren Höhe analog zu Figur 27d jeweils die halbe Leistenhöhe sein kann. Sie können dann aufeinandergelegt und untereinander verklammert werden und auch an Holzelementen festgeklammert werden. Der Verbauort kann wie in Figur 27b gezeigt lokalisiert sein, insbesondere abseits bzw. gegenüber eines Stützpfostens 134.

Figur 27f zeigt einen mit einem Draht 27f1 gebildeten Aufhalter 270. Der Draht ist biegsam und ist so gebogen, dass er in gewünschter Weise an den Holzelementen 131 anliegt. Der Draht 27f1 kann an zwei oder mehreren Holzelementen bzw. an zwei oder mehreren oder allen Seiten der Verbissschutzvorrichtung 180 anliegen. Er kann an einigen Holzelementen außen anliegen und/oder kann an einigen oder allen Holzelementen innen anliegen und kann dementsprechend zwischen benachbarten Holzelementen von innen nach außen laufen und umgekehrt. Der Draht oder Blechstreifen kann aus rostendem Eisen gefertigt und so dimensioniert sein, dass er hinreichend lange - einige Jahre - ausreichend kräftig Gegenkräfte gegen Verformungskräfte erzeugen, bevor das Rosten so weit fortgeschritten ist, dass Gegenkräfte nachlassen bzw. das Material bricht. Die Form kann offen sein. Die Enden 27f1 und 27f2 des Drahtes können, müssen aber nicht miteinander verbunden sein. Die Drahtenden 27f1a, 27f1b können nach dem Verbau nahe beieinander liegen und können beim Stützpfosten 134 liegen. Diese Art der Aufhalter ist besonders für Verbissschutzvorrichtung 180 mit sechs oder mehr Holzelementen/Schindeln 131 geeignet.

Figur 27g zeigt einen mit einem flachen hölzernen Span oder einem verrostenden Blech 27g1 gebildeten Aufhalter 270. Der Span bzw. das Blech 27g1 ist mit seinen Enden 27g1a, 27g1b am Stützpfosten 134 befestigt, bspw. mit Klammern. Er bildet eine elastisch verformbare Schlaufe, an der außen die Holzelemente 131 der Verbissschutzvorrichtung 180 anliegen können. Im Verbau kann die Schlaufe auf Höhe eines Streifens 132 gelegt werden und dann zusammen mit diesem und einem Holzelement 131 am Stützpfosten 134 mit Klammern 27g2 angeklammert, insbesondere festgetackert werden. Sie kann aber auch auf einer anderen Höhe liegen.

Figur 27h zeigt zwei Holzleisten 27h1, 27h2 mit komplementär geformten Endbereichen zur Bildung eines Aufhalters 270. Eine weist einen Zapfen 27h3 auf, der in eine entsprechende komplementär geformte Öffnung 27h4 der anderen geschoben werden kann. Die

Grundrisse von Zapfen 27h3 und Öffnung 27h4 können komplementär rund oder rechteckig sein. Der Verbund kann ggf. vertackert werden. Der Verbauort kann wie in Figur 27b gezeigt lokalisiert sein, insbesondere abseits bzw. gegenüber eines Stützpfostens 134.

Figur 27i zeigt einen mit einem Draht 27i1 gebildeten Aufhalter 270. Der Draht ist biegsam und hat Enden 27i1a und 27i1b. Der Draht kann O- oder U-förmig gebogen sein und entspannt eine größere Außenkontur haben als die Innenabmessung der Verbissschutzvorrichtung. Er kann dann innen in die Verbissschutzvorrichtung 180 eingespreizt werden und kann auch geeignet weiter befestigt werden. Der Draht ist rostend und ist im Hinblick auf Biegesteifigkeit und Rostgeschwindigkeit geeignet gewählt. Sein Durchmesser kann größer als 1mm sein. Er kann kleiner als 3 mm sein. Statt komplementär können die Endbereiche auch so geformt sein, dass der Zapfen rechteckigen und die Bohrung runden Querschnitt haben und so dimensioniert sind, dass die Länge der Diagonale des Zapfenquerschnitts dem Durchmesser der Bohrung entspricht oder etwas größer ist (mehr als +1 oder + 2%, weniger als +10 oder + 5%). Sie sind dann jeweils durch Fräsen und Bohren leicht herstellbar und ggf. mit leichter Klemmung verfügbar.

Figur 27j zeigt einen weiteren mit einem Draht 27j1 gebildeten Aufhalter 270. Der Draht ist biegsam und hat Enden 27j1a und 27j1b. Der Draht 27j1 kann mehrfach, z. B. zweimal oder dreimal oder viermal oder öfter hin- und herlaufen und an jeweiligen Umkehrstellen 27j2 in Umkehrrichtung gebogen sein. Insgesamt kann der Draht O- oder U-förmig gebogen sein und entspannt eine größere Außenkontur haben als die Innenabmessung der Verbissschutzvorrichtung. Er kann dann innen in die Verbissschutzvorrichtung 180 eingespreizt werden und kann auch geeignet weiter befestigt werden. Der Draht ist rostend und ist im Hinblick auf Biegesteifigkeit und Rostgeschwindigkeit geeignet gewählt. Sein Durchmesser kann größer als 0,5 oder 1mm sein. Er kann kleiner als 3 oder 2 mm sein.

Figur 27k zeigt einen weiteren mit einem Draht 27k1 gebildeten Aufhalter 270. Der Draht 27k1 ist biegsam und ist am einen Ende zu einer Schlaufe 27k2 gebogen und bei 27k3 verdrillt. Die Schlaufe 27k2 wird über ein Holzelement 131 geschoben. Das freie Drahtende kann dann so gebogen werden, dass es an einem oder zwei oder mehreren anderen Holzelementen 131 innen und ggf. auch außen anliegt. Der Draht 27k1 kann hier auch mehrfach, z. B. zweimal oder dreimal oder viermal oder öfter hin- und herlaufen, analog zu Figur 27j. Der Draht ist rostend und ist im Hinblick auf Biegesteifigkeit und Rostgeschwindigkeit geeignet gewählt. Sein Durchmesser kann größer als 0,5 oder 1mm sein. Er kann kleiner als 3 oder 2 mm sein.

Figur 27l zeigt einen weiteren mit einem biegsamen länglichen Element 27l1 gebildeten Aufhalter 270. Das biegsame längliche Element 27l1 kann ein oder mehrere Drähte sein wie oben beschrieben oder kann hölzern sein, z. B. eine biegsame Rute, etwa eine Weidenrute. Der Stützpfosten 134 weist zwei vorzugsweise über Kreuz laufende Bohrungen 27l2 auf, die in Höhenrichtung leicht gegeneinander versetzt sein können und in die das Element 27l1 eingeschoben werden kann. Die Bohrungen können durchgehend sein oder können Sacklöcher sein. Das biegsame längliche Element 27l1 wird dann in die Bohrungen 27l2 eingeschoben und bildet dann eine Schlaufe, die so dimensioniert ist, dass Holzelementen innen und ggf. auch außen anliegen können. Das biegsame längliche Element 27l kann in den Bohrungen 27l2 fixiert werden, bspw. durch Klammern/Tackern.

Fig. 27m zeigt einen durch einen Holzquader 27m1 gebildeten Aufhalter 270. Der Quader 27m1 weist an zwei vorzugsweise benachbarten Seiten Schlitze 27m2 mit auf diesen Seiten parallel laufenden Schlitzöffnungen auf, in die je ein Holzelemente 131 eingeschoben werden kann. Nach dem Einschub des Holzelements 131 in den Schlitz 27m2 kann der Verbund mit Klammern 27m3 gesichert werden. Der Verbauort kann wie in Figur 27b gezeigt lokalisiert sein, insbesondere abseits bzw. gegenüber eines Stützpfostens 134. Die Höhe h des Quaders in Längsrichtung eines Holzelements 131 kann mehr als 1 oder 2 cm sein. Sie kann kleiner als 5 oder 4 oder 3 cm sein. Gleiches gilt für die anderen Quaderabmessungen.

Ein Holzquader kann auch ohne Schlitze einen Aufhalter 270 bilden. Er ist geeignet dimensioniert und wird dann an den Innenseiten zweier über Eck stehender Holzelemente 131 angebracht, etwa durch Klammer bzw. mittels Tackern. In Draufsicht entspricht dies dann der Anbringung eines Stützpfostens 134 an Holzelementen 131, nur dass der Aufhalter deutlich kürzer ist und insbesondere nicht bis zum Boden reicht. Er kann aus Weichholz gebildet sein. Die Holzelemente 131 können an dem als Aufhalter 270 dienenden Quader über Eck Kante an Kante oder mit Abstand zueinander angebracht sein.

Die Länge eines solchen Quaders kann im Verbau in vertikaler Richtung länger als 3 oder 5 oder 7 cm sein. Sie kann kürzer als 15 oder 10 oder 7 cm sein. Der Querschnitt kann an einem Eck einen Winkel aufweisen, der der gewünschten Winkelstellung der angebrachten Holzelemente 131 entspricht, also z. B. in etwa 90°. Querschnittskanten können länger als 2 oder 3 cm sein. Sie können kürzer als 6 oder 4 cm sein.

Figur 27n zeigt Vorprodukte für Aufhalter 270. 27n1 ist ein geeignet dimensioniertes Holzbrett. Es bekommt mit etwas Abstand von der Kante eine Nut 27n2 in Längsrichtung eingefräst, die in ihrer Dimension der Nut 27d2 in Fig. 27d entspricht. Von dem so genuteten Brett 27n1 können dann einzelne Leisten 27d1 der Figur 27d abgesägt werden. Analog kann für die Leisten 27e1 der Figur 27e gearbeitet werden. 27n3 ist ein geeignet dimensioniertes Kantholz. Es bekommt auf benachbarten Seiten in Längsrichtung Nuten oder Schlitze 27n4 eingefräst oder eingesägt, die in ihrer Dimension den Schlitzen 27m2 in Fig. 27m entsprechen. Von dem so geschlitzten Kantholz 27n3 können dann einzelne Quader 27m1 der Figur 27m abgesägt werden.

Die Figuren 27a - m zeigen jeweils einen Aufhalter. In Höhenrichtung kann er im Verbau in etwa mittig eines Holzelements 131 liegen, etwa im Bereich 40 bis 60% seiner Länge. Er kann aber auch im oberen Viertelliegen, von oben etwa im Bereich 10 bis 30% der Länge. Es können für eine Verbissschutzvorrichtung 180 aber auch mehrere gleiche oder unterschiedliche Aufhalter 270 vorgesehen sein. Sie können an unterschiedlichen Positionen in Höhenrichtung der Verbissschutzvorrichtung 180 angebracht sein. Wenn zwei Aufhalter 270 vorgesehen sind, kann verbaut eine oberhalb und eine unterhalb der Mitte eines Holzelements 131 liegen. Die Dimensionierungen können, wie gesagt, so sein, dass normalerweise Holzelemente 131 an Aufhaltern 270 anliegen und ggf. auch daran befestigt sind. Die Aufhalter der Figuren 27g und 27l können aber auch so dimensioniert sein, dass Holzelemente 131 an Aufhaltern 270 normalerweise nicht anliegen, dass also die gebildeten Schlaufen vergleichsweise klein dimensioniert sind und Holzelemente 131 nur beim Einwirken äußerer Kräfte zur Anlage am Aufhalter 270 kommen und dann gegenhaltende Kräfte erfahren.

Die Figuren 27a - m zeigen jeweils rechteckige bzw. quadratische Aufstellungen bzw. Grundrisse mit dementsprechend etwa 90°-Ecken der Verbissschutzvorrichtungen 180. Die Grundrissform kann aber auch anders sein, etwa dreieckig oder fünf- oder sechseckig oder allgemein mehreckig. Aufhalter 270 können dann ggf. andere Winkelstellungen als gezeigt haben bzw. für Holzelemente relativ zueinander bilden, z. B. in etwa 60° oder 108° oder 120°. Die Innenwinkel können auch ungleich bzw. unregelmäßig sein. Sie können aber alle kleiner 180° sein.

Fig. 28 zeigt eine Aufstellung einer Verbissschutzvorrichtung 180. Wie in Fig. 27 ist die Darstellung nicht maßstäblich, sondern nur schematisch zu verstehen. Die Aufstellung der Verbissschutzvorrichtung 180 umfasst das Einschlagen des Stützpfostens 134 in den Boden, vorher - womöglich schon lange vorher bei der Produktion - oder nachher das Befestigen des Verbundmaterials am Stützpfosten 134 und ggf. das Einbringen des Aufhalters 270, 272 wie in Fig. 27 beschrieben.

Fig. 28 zeigt den Fall, dass die Holzelemente 131 nicht auf dem Boden aufstehen, sondern vom Boden einen Abstand d haben. Der Abstand d vom Boden kann größer als 5 oder 10 oder 15 oder 20 cm sein. Er kann kleiner als 50 oder 30 oder 20 cm sein. Eine Beobachtung ist, dass junge Pflanzen bodennah nicht geschützt werden müssen, weil dort signifikanter Verbiss nicht stattfindet. Dementsprechend kann der Abstand vom Boden wie beschrieben gewählt werden. Dies trägt zur Materialersparnis bei, weil bei gleicher Höhe oben kürzere Holzelemente verbaut werden.

Darüber hinaus hat der Abstand der Holzelemente 131 vom Boden die Wirkung, dass die Holzelemente nicht in der Feuchte stehen und nicht Feuchtigkeit ziehen können. Sie sind deshalb im Schnitt trockener und verrotten so langsamer.

Fig. 28 zeigt den Fall, dass alle Holzelemente 131 einen Abstand vom Boden 281 haben. Wenn gewünscht, können aber auch ein oder mehrere oder alle Holzelemente 131 auf dem Boden aufstehen, etwa ein dem Stützpfosten 134 gegenüberliegendes Holzelement 131. Die Holzelemente können dann unterschiedliche Längen haben, wie auch in Fig. 16 und 17 gezeigt. Ein auf dem Boden aufstehendes Holzelement 131 kann über den Umfang betrachtet dem Stützpfosten weitestmöglich gegenüber liegen

Fig. 28 zeigt den Fall, dass nur ein Stützpfosten 134 vorgesehen ist. Es können aber auch zwei Stützpfosten oder mehr Stützpfosten vorgesehen sein. Fig. 28 deutet gestrichelt einen zweiten Stützpfosten an. Zwei Stützpfosten können sich in der Aufstellung in etwa gegenüber liegen. In den Grundrissen der Fig. 27a und 27b können sie beispielsweise an diagonal gegenüberliegenden Ecken liegen.

Zur Erinnerung zeigt Fig. 28, dass die Holzelemente 131 Öffnungen 12 aufweisen können. Diese können zusätzlich zu den Schlitzen zwischen benachbarten Holzelementen 131 vorgesehen sein. Fig. 28 zeigt außerdem angedeutet drei Bänder 132 von Fasermaterial, nämlich eines relativ weit oben, eines relativ weit unten und eines etwa in der Mitte jeweils in Höhenrichtung betrachtet. Schematisch angedeutet sind auch die Leisten 272, wie sie zwischen Holzelementen 131 klemmen und wie sie in Figuren 27a bis 27c gezeigt sind. 275 sind die Befestigungen eines Holzelements am Stützpfosten 134. Auch hier sind mehrere über die Höhe verteilt gezeigt. 221 ist demgegenüber die Verbindung des Streifens 132 von Fasermaterial mit dem Holzelement 131.

Wie schon kurz angesprochen, kann der Stützpfosten oder können die Stützpfosten 134 schon bei der Herstellung des Verbundmaterials in das Verbundmaterial eingearbeitet werden, etwa indem gleich dort wenigstens eines der Holzelemente am Stützpfosten 134 angebracht wird oder indem die Streifen des Fasermaterials 132 an einem Stützpfosten 134 befestigt werden, was beispielsweise durch Klammern erfolgen kann, etwa durch Tackern. Es kann beispielsweise nach jeweils 2 oder 3 oder 4 oder 5 oder 6 oder allgemein n Holzelementen 131 ein Stützpfosten 134 in das Verbundmaterial eingearbeitet werden, indem er wie Holzelemente auch an dem fortlaufenden Fasermaterialstreifen 132 angebracht wird. Stattdessen können die Stützpfosten 134 aber auch separat gehandhabt werden und separat in den Boden eingeschlagen werden. Erst danach erfolgt dann die Befestigung der Holzelemente 131 am Stützpfosten 134.

Bezug nehmend auf Fig. 29a - h werden nachfolgend Ausführungsformen von Verbissschutzvorrichtungen 180 beschrieben. Sie eignen sich insbesondere für Verbissschutzvorrichtungen mit Hüllen mit geringer Eigensteifigkeit, insbesondere also mit Hüllen aus Flachmaterial wie beschrieben, insbesondere aus gewebtem oder verstrickten Flachmaterial, z. B. Matten wie Bezug nehmend auf Figuren 1 bis 12 als Flachmaterial oder 19 bis 21 beschrieben. Die Hüllen können natürliches Fasermaterial und/oder Metalldrähte aufweisen, die verstrickt oder verwebt sein können.

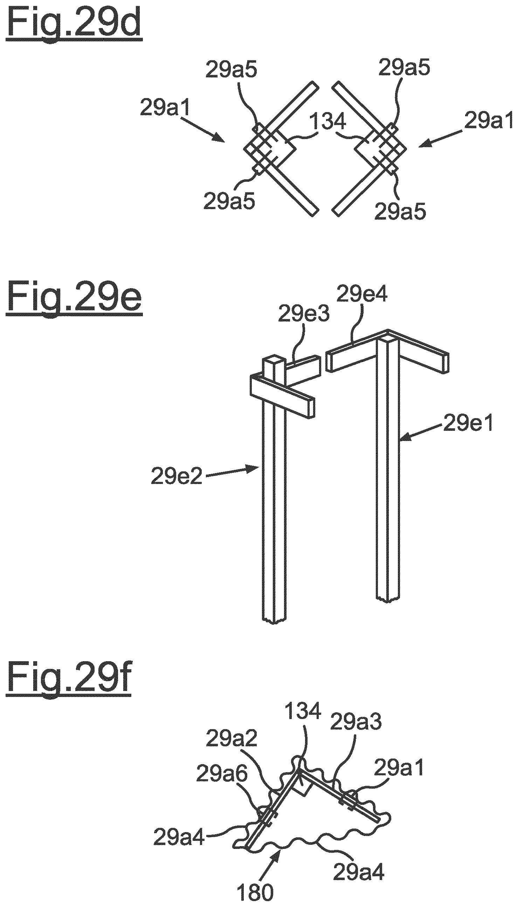

Figur 29a und f zeigen eine Halterung 29a1 mit einem Stützpfosten 134, an dem im Verbau oben zwei Aufhalterleisten 29a2, 29a3 angebracht sind, bspw. durch jeweils eine oder mehrere Klammern 29a5 bzw. Antackern, die etwa horizontal abstehen und miteinander einen Winkel einschließen, der vorzugsweise zwischen 45 und 110° liegt. Er kann durch die Winkel der Querschnittecken des Stützpfostens 134 vorgegeben sein. Dessen Querschnitt kann rechteckig bzw. quadratisch sein.

Die Aufhalterleisten 29a1, 29a2 sind so dimensioniert, dass an ihnen, vorzugsweise au-ßen, der obere Rand einer schlauch- bzw. röhrenartigen Hülle 29a4 (siehe Fig. 29f) einer Verbissschutzvorrichtung angebracht werden kann, bspw. durch Klammern 29a6 bzw. Antackern. Figur 29f zeigt dies schematisch. Die Aufhalterleisten 29a2, 29a3 spannen so den äußeren oberen Rand der Hülle 29a4 auf, die dann oben festhängend von oben nach unten herabfällt. Weiter unten längs des Stützpfostens können ggf. weitere Aufhalterleisten 29a1, 29a2 quer abstehend angebracht sein, sei es paarweise unter einem Winkel wie für das obere Ende gezeigt oder in nur eine Richtung.

Beim Verbau können zuerst die schlauchartige Hülle 29a4 an der Halterung 29a1, insbesondere an den Aufhalterleisten 29a2, 29a3, befestigt werden und dann der Gesamtaufbau, insbesondere der Stützpfosten 134, in den Boden eingeschlagen werden. Es können aber bspw. auch erst nur der Stützpfosten 134 in den Boden eingeschlagen werden und dann die Aufhalterleisten 29a2, 29a3 und die Hülle 29a4 angebracht werden.

Die Dimensionen des Stützpfostens 134 können wie beschrieben sein. Die Aufhalterleisten 29a2, 29a3 können in horizontaler Richtung (im Verbau) länger als 5 oder 8 oder 10 oder 12 cm sein. Sie können kürzer als 20 oder 15 oder 12 cm sein. Se 29a2, 29a3 können in vertikaler Richtung (im Verbau) höher als 2 oder 3 oder 4 oder 6 cm sein. Sie können niedriger als 10 oder 8 oder 6 cm sein. Sie können dicker als 3 oder 5 mm sein. Sie können dünner als 10 oder 8 mm sein.

Fig. 29b zeigt eine Ausführungsform, bei der eine weitere Aufhalterleiste 29b1 die distalen Enden der am Stützpfosten 134 angebrachten Aufhalterleisten 29a2, 29a3 verbindet. Die Verbindung kann mit Fasermaterial 29b2 gemacht sein und/oder mit Klammern 29b3 bzw. durch Tackern. Die Hülle kann dann auch an der weitere Aufhalterleiste 29b1 befestigt werden. Die Länge der weitere Aufhalterleiste 29b1 ist entsprechend dem Abstand der distalen Enden gewählt. Höhe und Dicke können wie die der Aufhalterleisten 29a2, 29a3 sein.

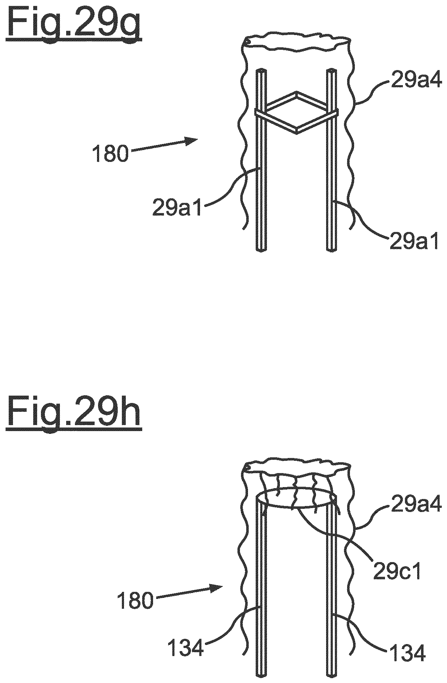

Figuren 29c und 29h zeigen eine Ausführungsform, bei der statt Aufhalterleisten 29a2, 29a3, 29b1 ein Ring 29c1 aus biegsamem Material oben am Stützpfosten angebracht wir. Der Ring kann aus Rutenmaterial, z. B. einer Weidenrute, oder aus Peddigrohr hergestellt sein. Das Material kann mit Klammern oder Drahtbindung 29c4 zu einem Ring zusammengehalten sein.

Der Außendurchmesser des Rings entspricht dem gewünschten Innendurchmesser der Hülle und kann über 6 oder 8 oder 10 oder 12 cm liegen. Er kann unter 20 oder 15 oder 12 cm liegen. Vorzugsweise sind bei dieser Ausführungsform zwei Stützpfosten 134 vorgesehen, die an unterschiedlichen Positionen längs des Ringumfangs liegen, insbesondere mindestens 90 oder 10 oder 150° beabstandet sein können. Auch hier können über die Länge des Stützpfostens 134 mehrere Ringe 29c1 vorgesehen sein. Der obere Rand der Hülle wird dann auch wieder am oberen Ring 29c1 befestigt und fällt von dort nach unten. Die Befestigung des Rings 29c1 an den Stützpfosten 134 kann mittels Jutebändern 29c2 und Klammern 29c3 erfolgen wie in Figur 29c rechts gezeigt.

Figur 29d und 29g zeigen eine Ausführungsform, bei der sich zwei Halterungen 29a1 gegenüber stehen, die gemeinsam die Hülle einer Verbissschutzvorrichtung halten. Jede Halterung 29a1 kann wie die Halterung 29a1 der Figur 29a gebildet sein.

Figuren 29e zeigt eine Ausführungsform, bei der zwei Halterungen 29e1, 29e2 nebeneinander stehen, die gemeinsam die Hülle einer Verbissschutzvorrichtung halten. Jede Halterung 29e1, 29e2 kann wie die Halterung 29a1 der Figur 29a gebildet sein. Allerdings können die aufeinander zu zeigenden Aufhalterleisten 29e3, 29e4 kürzer sein, bspw. kürzer als 10 oder 8 cm. Sie können länger als 4 oder 6 cm sein.

Die Bezug nehmend auf Fig. 29a - h beschriebenen Ausführungsformen von Verbissschutzvorrichtungen können zusätzlich Aufhalter 270 wie Bezug nehmend auf die Figuren 27a - m beschrieben aufweisen. Die Aufhalter 270 können direkt am Hüllenmaterial befestigt werden, etwa durch Klammern bzw. Antackern. Solche Aufhalter können unter dem oberen Rand angebracht sein, etwa auf halber Höhe der vertikalen Länge der Hülle, insbesondere im Bereich zwischen 40 und 60% der Hülle, oder von unten auf etwa ein Drittel der Höhe, insbesondere im Bereich zwischen 25 und 40% der vertikalen Länge der Hülle.

Das erwähnte Antackern geschieht vorzugsweise mit nicht verzinkten Metallklammern, also z. B. Klammern aus rostendem Eisen, z. B. Schwarzeisen. Auch wenn Drähte verwendet werden, können diese aus rostendem eisen, etwa Schwarzeisen bestehen.

Als biologisch abbaubare Materialien wurden bisher Materialien aus nachwachsenden Rohstoffen wie Holz, Sisal, Hanf, Jute, Bambus, Rattan oder ähnliches beschrieben. Als natürlich abbaubare Materialien wurden bisher rostende Metalle wie Eisen, insbesondere Schwarzeisen beschrieben. Statt ihrer oder kombiniert mit ihnen können aber auch biologisch abbaubare Kunststoffe verwendet werden, soweit sie in Festigkeit und Beständigkeit die hier beschriebenen Spezifikationen erfüllen. Dies gilt für die Materialien des Flachmaterials, der Matten, des Verbundmaterials und der Aufhalter. Als biologisch abbaubare Kunststoffe kommen Polycaprolacton (PCL), PBAT, PBS und ähnliches in Frage. Es kann flächig/voluminös für beschriebene Schindeln, Stäbe, Späne und Hölzer verwendet werden und kann faserig für beschriebene Gewebe, Gestricke verwendet werden.

Eine Verbissschutzvorrichtung 180 wie beschrieben kann eine oder mehrere oder alle der folgenden Maßgaben erfüllen:

- Sie weist 4 oder 5 oder 6 oder mehr Holzelemente 131 auf, die als Bretter oder Schindeln oder Spankistenholz ausgebildet sind, deren Breite (x-Richtung in Fig. 13) über 8 oder 10 cm und/oder unter 15 oder 12 cm liegen kann. Unterschiedliche Holzelemente 131 können gleiche oder unterschiedliche Breiten haben.

- Der Abstand benachbarter Holzelemente 131 voneinander liegt im nicht aufgestellten Zustand (wie z. B. in Fig. 26) über 5 oder 10 oder 15 mm und/oder unter 40 oder 30 oder 20 mm.

- Die Breite des Spaltes zwischen benachbarten Holzelemente 131 im aufgestellten Zustand (wie z. B. in Fig. 28) liegt über 5 oder 10 oder 15 mm und/oder unter 40 oder 30 oder 20 mm.

- Über die Höhe (y-Richtung in Fig. 13) eines Holzelements 131 verteilt sind 2 oder 3 oder 4 Streifen 132 des Fasermaterials vorgesehen.

- Die Breite eines Streifen 132 des Fasermaterials (y-Richtung in Fig. 13) liegt über 1 oder 2 oder 3 cm und/oder unter 12 oder 10 oder 8 oder 5 cm.

- In der Aufstellung ist die Höhe der Oberkante eines oder einiger oder aller Holzelemente 131 über dem Boden über 70 oder 80 oder 100 cm und/oder unter 150 oder 120 cm.

- Die zwei äußersten Holzelemente 131 sind an dem Stützpfosten 134 befestigt oder befestigbar, vorzugsweise mit Klammern 275, vorzugsweise durch Tackern.

- Ein Holzelement hat 2, 3, 4, 5, 6 oder mehr Öffnungen 12, die jeweils eine Fläche haben können, die über 3 oder 5 oder 7 oder 10 oder 15 cm^2 liegen kann und die unter 30 oder 20 oder 10 oder 7 cm°2 liegen kann.

- Der Stützpfosten 134 ist ein Rundholz mit Durchmesser größer 20 oder 30 mm und kleiner als 50 oder 40 oder 30 mm oder ein Kantholz mit rechteckigem Querschnitt mit einer oder beiden Seitenlängen größer 20 oder 30 mm und/oder kleiner als 50 oder 40 oder 30 mm auf.

Nachfolgend wird auf Fig. 32 und nochmals auf Fig. 19 und die dazu beschriebenen Merkmale Bezug genommen. Die Figuren 32a, 32b und 32c sind absolut und relativ zueinander nicht maßstäblich gezeichnet. In Fig. 19 sind Ausführungsformen gezeigt, bei denen Holzelemente nur als einschlagbare Stützen 134 vorgesehen sind und das Umfangen des Schösslings 99 ausschließlich mit einer schlauchartigen Matte 212, 321, 322 des Fasermaterials 132 als mehr oder minder luft- und lichtdurchlässigen Hülle geschieht. Solche Matten können die bisher zum Beispiel Bezug nehmen auf die Figuren 19 bis 22 und andere beschriebenen Merkmale von Flachmaterial und/oder die folgend beschriebenen Merkmale aufweisen.

Fig. 32a zeigt schematisch kleine Ausschnitt aus einer solchen Matte 320. Links ist eine Verstrickung angedeutet, rechts ein Gewebe oder eine Verknotung. Beide können luftig in dem Sinn sein, dass umfangen von den Garnen bzw. Fäden 321 merkliche Maschenöffnungen 322 mit einer Maschenöffnungsfläche 32MF verbleiben. Das Gewebe oder Gestrick kann aus einem Pflanzenfasergarn oder Naturfasergarn 321 hergestellt sein, etwa Garn mit oder aus Hanf- oder Jute- oder Sisal- oder Kokos- oder Bast- oder Wollfasern oder anderen Pflanzen- oder Naturfasern oder Gemischen davon oder ähnliches. Der mittlere Garndurchmesser kann über 1 oder 1,5 oder 2 mm liegen. Er kann unter 5 oder 4 oder 3 oder 2 mm liegen. Die mittlere Maschenweite kann über 4 oder 6 oder 8 oder 10 oder 15 oder 20 mm liegen. Sie kann unter 40 oder 30 oder 20 oder 10 mm liegen. Die mittlere Maschenöffnungsfläche 32MF - je einmal gestrichelt angedeutet in Figur 32a links und rechts - kann über 20 oder 40 oder 70 oder 100 oder 200 mm$^2$ liegen. Sie kann unter 1500 oder 1000 oder 500 oder 200 mm$^2$ liegen. Die Matte 320 aus Fasermaterial kann tuchartig wie in Fig. 32b angedeutet oder schlauchartig wie in Fig. 32c angedeutet versponnen oder verwoben oder verstrickt bzw. verarbeitet sein. Die Matte kann eine oder mehrere der Merkmale haben, die Bezug nehmend auf die Figuren 1 bis 7 und 19 bis 21 beschrieben wurden. Sie kann ein Flachmaterial 10 oder ein Gewebe 132 wie beschrieben sein.

Bei tuchartiger Fertigung der Matte 320 kann ihre Breite den Maßen b$_m$ aus Fig. 7, b aus Fig. 10 oder L1 aus Fig. 14 entsprechen. Sie kann der Höhe der zuletzt gewünschten Schutzhülle entsprechen. Sie kann über 80 oder 100 oder 120 cm liegen. Sie kann unter 200 oder 150 oder 120 cm liegen. Die tuchartige Matte 320 kann als aufgerolltes Endlosmaterial geliefert werden. Von der Rolle können dann beim Verbau einzelne Stücke abgelängt werden. Die tuchartige Matte 320 kann aber auch schon vorkonfektioniert geliefert werden mit einer Breite wie oben und einer Länge entsprechend dem gewünschten Umfang der zu verbauenden Verbissschutzvorrichtung. Dementsprechend wird eine Matte 320 für eine Verbissschutzvorrichtung aus dem oben beschriebenen Material mit der oben beschriebenen tuchartigen Machart und einer oder mehreren der genannten Dimensionierungen als eigenständiger und separat beanspruchbarer Teil der Erfindung gesehen. Beim Verbau der Matte 320 werden dann abgelängte Tuchstücke in geeigneter Weise zu einer schlauchartigen Hülle verbunden, etwa indem sie längs gegenüberliegenden Kanten, ggf. mit Überlapp, verheftet, vernäht oder verklammert werden.

Bei schlauchartiger Fertigung der Matte 320 entspricht der Schlauchumfang dem Umfang der gewünschten Verbissschutzvorrichtung. Er kann über 20 oder 30 oder 40 oder 50 cm liegen. Er kann unter 100 oder 70 oder 50 cm liegen. Die schlauchartige gefertigte Matte 320 kann als in Schlauchlängsrichtung aufgerolltes Endlosmaterial geliefert werden. Von der Rolle können dann beim Verbau einzelne Schlauchstücke abgelängt werden. Die Ablängung entspricht dann der Höhe der Hülle der Verbissschutzvorrichtung. Die tuchartige Matte 320 kann aber auch schon vorkonfektioniert geliefert werden, indem einzelne Schlauchstücke entsprechend der Höhe der Hülle der Verbissschutzvorrichtung geliefert werden. Dementsprechend wird eine Matte 320 für eine Verbissschutzvorrichtung aus dem oben beschriebenen Material mit der oben beschriebenen schlauchartigen Machart und einer oder mehreren der genannten Dimensionierungen als eigenständiger und separat beanspruchbarer Teil der Erfindung gesehen.

Auch für mit Matten 320 der Figur 32 gebildete Verbissschutzvorrichtungen können Aufhalter 270 wie in den Figuren 27a bis 27n oder 29a bis 29h beschrieben verwendet werden. Wo insoweit Befestigungen eines Aufhalters oder von Komponenten davon an einem Holzelement 131 beschrieben sind, kann diese Befestigung an der schlauchartigen Matte und/oder einer einschlagbaren Stütze 134 erfolgen. Die Oberkante der Matte 320 oder des Schlauchs kann von unten innen oder außen kommend oben um eine Span oder Holzleiste 272, 27d1, 27e1, 27h1, 29a2, 29e3, 29e4 oder einen Ring 29c1 oder einen Draht 27i1, 27j1, 27k1 oder einen Blechstreifen eines Aufhalters herum und dann außen oder innen wieder ein kurzes Stück, etwa mehr als 1 oder 2 cm und/oder weniger als 10 oder 5 cm, nach unten geführt werden. Die unmittelbar unter der Leiste oder dem Draht oder Ring innen und außen vertikal parallel laufenden Mattenbereiche können dann miteinander verheftet werden, etwa durch Durchschieben dünner Zweige durch die überlappenden Mattenbereiche. Oder die Matte 320 kann direkt an einer Leiste oder einem Ring oder Draht befestigt werden, etwa durch Tackern oder Kleben.

Eine weitere Möglichkeit der Verbindung der Matte 320 mit dem Aufhalter ist es, die einzelnen Leisten oder den Span oder den noch offenen Ring oder Draht oder Blechstreifen eines Aufhalters längs des Umfangs mehrfach abwechselnd von innen nach außen und von außen nach innen durch das Mattengewebe zu schieben bzw. zu fädeln und dann Span oder Leiste oder Ring oder Draht oder Blechstreifen mit darauf aufgefädelter Matte 320 weiter zu verbauen wie beschrieben.

Eine Verbissschutzvorrichtung 180 hat somit eine schlauchartig zusammengefasste Matte 212, 29a4, 320 wie beschrieben mit oder aus natürlich oder biologisch abbaubarem Material, die ein Gestrick oder Gewebe oder Geflecht mit oder aus einem Garn mit oder aus natürlich oder biologisch abbaubarem Material sein oder aufweisen kann, wenigstens einen vorzugsweise oben an der Verbissschutzvorrichtung 180 vorgesehenen Aufhalter 211, 270, der einen Körper mit einer steifen oder elastisch verformbaren Form aufweist, die so gestaltet ist, dass der Körper im verbauten Zustand in Umfangsrichtung der zusammengefassten Matte betrachtet an mehreren Stellen an der Matte anliegt und diese geöffnet hält, und wenigstens einen in den Boden einschlagbaren Stützpfosten 134, an dem die Matte 320 und/oder der Aufhalter 211, 270 befestigt oder befestigbar ist. Ein oder mehrere Aufhalter können auch nach unten beabstandet vom oberen Ende der Verbissschutzvorrichtung angebracht sein, etwa auf halber Höhe.

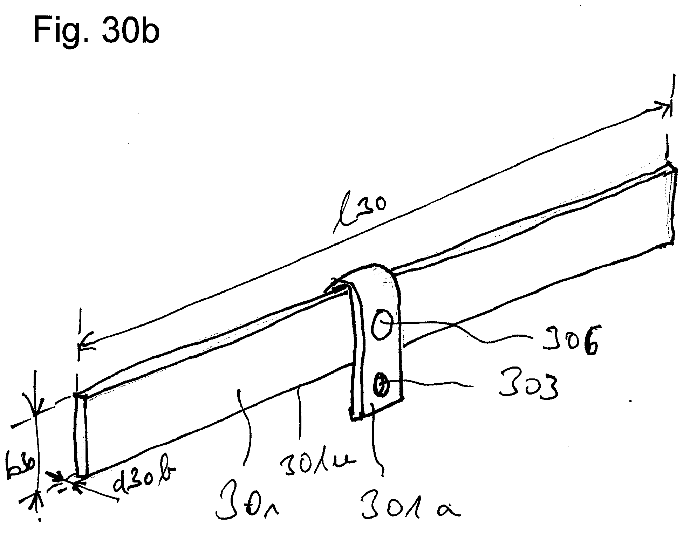

Die Figuren 30a und 30b zeigen weitere Bauarten eines Aufhalters 270. Sie können für Verbissschutzvorrichtungen mit einem mattenartigen Gewebe 320 oder mit Holzschindeln verwendet werden. Ein Aufhalter 270 kann einen länglichen Blechstreifen 301 aufweisen, dessen Länge l30 etwa dem Umfang einer Verbissschutzvorrichtung entspricht. Die Länge l30 kann über 20 oder 30 oder 40 oder 50 cm liegen. Sie kann unter 100 oder 70 oder 50 cm liegen. Vorzugsweise besteht er aus natürlich abbaubarem Material, etwa rostendem Eisen, z. B. Schwarzeisen. Der Blechstreifen kann zu einem Ring gebogen sein. Der Ring kann O-förmig fest geschlossen sein oder kann C-förmig mehr oder minder offen sein wie in Fig. 30a angedeutet. Die freien Enden können dann auch überlappen. Der Blechstreifen kann eine Breite b30 von über 5 oder 7 oder 10 oder 15 mm haben. Die Breite b30 kann unter 40 oder 30 oder 20 oder 15 mm liegen. Die Materialdicke d30b kann über 0,5 oder 1 oder 1,5 mm liegen. Sie kann unter 3 oder 2 oder 1,5 mm liegen.

Der Blechstreifen 301 kann oben an einem Stützpfostens 134 angebracht wird, z. B. indem er von oben in dessen Stirnfläche eingetrieben, z. B. eingehämmert wird, oder indem er in einen vorgefertigten Schlitz302 in der oberen Stirnfläche 134s des Stützpfostens 134 eingelegt wird. Der Streifen kann dann mit ihn überbrückenden Klammern 274 in die Stirnfläche des Stützpfostens 134 und/oder mit einem Sicherungsstift oder Nagel 305 durch mindestens eine vorgefertigte Öffnung 303 im Streifen 301 und eine geeignet positionierte Öffnung 304 im oberen Ende des Stützpfostens 134 gesichert werden. Die Dimensionierung ist dabei vorzugsweise so, dass der Streifen im gesicherten Zustand unten auf dem Boden 302b des Schlitzes aufsitzt und so in etwa waagrecht bzw. in etwa rechtwinklig zum Stützpfosten 134 gehalten ist. Die Schlitztiefe entspricht somit in etwa der Breite b30 des Blechstreifens 301. Der Blechstreifen 301 kann aber auch an der Außenseite eines Stützpfostens 134 angebracht werden, etwa durch eine Schraubverbindung.

Der geeignet zurechtgebogene Streifgen 301 kann dann entweder von innen mehr oder minder locker an Holzschindeln 131 anliegen oder kann von innen eine schlauchartige Matte bzw. ein Gewebe offenhalten. Wenn er oben an einem Stützpfosten 134 angebracht ist, kann er mit den Enden der Matte bzw. des Gewebes überworfen sein wie vorstehend beschrieben.

Fig. 30b zeigt eine Variante zu Fig. 30a dahingehend, dass in dem Bereich des Blechstreifens 301, in dem er mit dem Stützpfostens 134 verbunden ist, eine quer zu seiner Längsrichtung nach unten abstehende Lasche 301a angebracht ist, etwa durch eine Schweißung oder einen Niet 306. Diese Lasche wird mit in den Schlitz 302 im Stützpfosten eingeführt und führt zu verbesserter Stabilität des Aufbaus, indem der Blechstreifen mit seiner Lasche 301a tiefer in den Stützpfosten eingeführt ist. Der Überstand der Lasche 301a nach unten unter die Unterkante 301u des Blechstreifens 301 kann eine Länge von über 5 oder 10 oder 15 mm haben. Die Länge kann unter 30 oder 20 oder 15 mm liegen. Die Breite der Lasche 301a in Längsrichtung des Blechstreifens 301 kann über 10 oder 15 oder 20 mm liegen. Die Materialdicke kann über 0,5 oder 1 oder 1,5 mm liegen. sie kann unter 3 oder 2 oder 1 mm liegen.

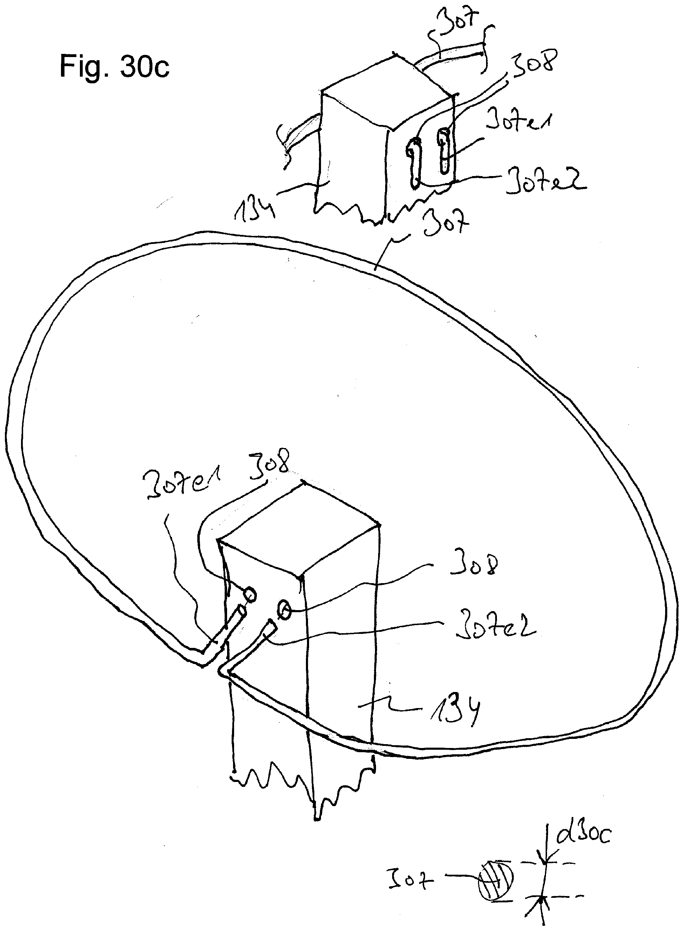

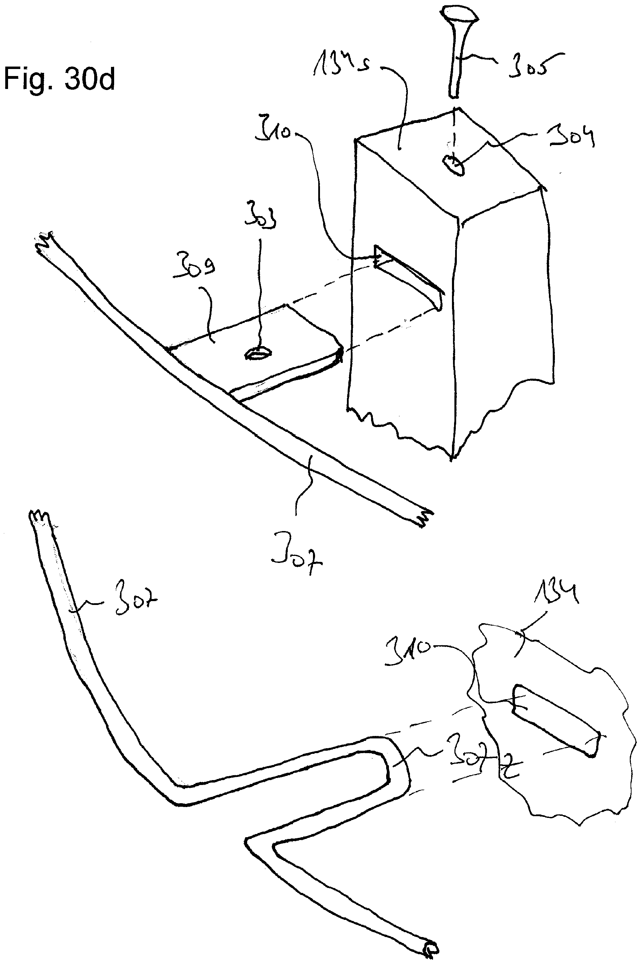

Die Figuren 30c und 30d zeigen weitere Bauarten eines Aufhalters 270. Sie können für Verbissschutzvorrichtungen mit einem mattenartigen Gewebe oder mit Holzschindeln verwendet werden.

Ein Aufhalter 270 kann einen geeignet gebogenen länglichen Draht 307 aufweisen, dessen Länge analog zu l30 etwa dem Umfang einer Verbissschutzvorrichtung entspricht. Vorzugsweise besteht er aus natürlich abbaubarem Material, etwa rostendem Eisen, z. B. Schwarzeisen. Der Draht ist zu einem Ring gebogen und hat radial abgekröpfte Enden für die Befestigung an einem Stützpfosten 134. Der Draht kann einen Durchmesser von über 2 oder 3 mm aufweisen. Der Durchmesser d30c des Drahts 307 kann unter 7 oder 5 oder 4 oder 3 mm liegen

Der Draht 307 kann oben oder an einer anderen Position an einem Stützpfostens 134 angebracht werden, indem die radial vorzugsweise einwärts gekröpften Enden 307e1, 307e2 des Drahts seitlich in vorgebohrte Löcher 308 des Stützpfostens 134 eingeschoben werden. Die abgekröpften Enden 307e1, 307e2 des Drahts sind vorzugsweise so lang, dass sie nach Verbau den Stützpfosten 134 durchlaufen, auf der anderen Seite herausragen und dort zur Sicherung abgebogen werden können, z. B. nach unten. Jenseits des Stützpfostens ist hier der Draht eine geschlossen umlaufende Schlaufe.

Fig. 30d zeigt Varianten zu Fig. 30c dahingehend, dass in dem Bereich des Drahts 307, in dem er mit dem Stützpfostens 134 verbunden ist, eine quer zu seiner Längsrichtung in radialer Richtung abstehende Lasche 309 angebracht, z. B. angeschweißt ist, die in einen entsprechend geformten seitlichen Schlitz 310 im Stützpfosten 134 einsetzbar und über einen Stift 305 von der Stirnfläche 134s her sicherbar ist. Die Lasche 309 kann natürlich abbaubarem Material sein oder aufweisen, z. B. Schwarzeisen. Alternativ zur angebrachten Lasche 309 kann der Draht 307 eine zungenartige Einbuchtung 307 aufweisen, die analog zur Lasche 309 in einen entsprechend geformten seitlichen Schlitz 310 im Stützpfosten 134 einsetzbar und über einen Stift 305 von der Stirnfläche 134s her sicherbar ist.

In den Ausführungsformen der Fig. 30d kann der Draht zu einer geschlossenen Schlaufe verarbeitet werden, indem die freien Enden verbunden, z. b. verschweißt werden. Die Schlaufe kann aber auch offen bleiben, indem die Enden des Drahts zwar aufeinander zu gebogen, aber nicht miteinander verbunden werden.

Der geeignet zurechtgebogene Draht 307 kann dann Teil einer Verbissschutzvorrichtung werden und dabei entweder von innen mehr oder minder locker an Holzschindeln 131 anliegen oder kann von innen eine schlauchartige Matte bzw. ein Gewebe offenhalten. Wenn er oben an einem Stützpfosten 134 angebracht ist, kann er mit den Enden der Matte bzw. des Gewebes überworfen sein wie vorstehend beschrieben.

Fig. 31 zeigt in verschiedenen Ansichten Elemente einer Ausführungsform, bei der der Aufhalter eine oder mehrere Holzleisten 313 mit über die Länge zumindest bereichsweise, nämlich an einem Ende, eine bestimmte Querschnittsform aufweist, die in komplementär geformte Nuten 314 eines Stützpfostens 134, z. B. an dessen oberem Ende, eingesetzt werden können. Die Querschnittsform ist so, dass die Nut 314 einen Hinterschnitt unter der seitlichen Oberfläche 134o des Stützpfostens 134 hat, der im verbauten Zustand von dem komplementär geformten Profil der Holzleiste 313 eingenommen wird.

Es wird auf diese Weise die Leiste 313 sicher und stabil im Stützpfosten 134 gehalten. Zur weiteren Sicherung können ggf. eine oder mehrere Sicherungselemente wie Klammern 274 vorgesehen sein, mit denen die Holzleiste am Stützpfosten befestigt, z. B. festgetackert wird. Die Profilierungen von Nut 314 und Holzleiste 313 können trapezförmig so sein, dass die kürzere Seite 313k der parallelen Seiten in der seitlichen Oberfläche 134o des Stützpfostens 134 liegt, während die längere Seite 313g unter der Oberfläche 134o liegt. Nut und Holzleiste können durch entsprechende Fräsen effizient gefertigt werden.

Eine Verbissschutzvorrichtung weist dann einen oder mehrere Stützpfosten 134 mit je einer oder mehreren wie beschrieben geformten Nuten 314 auf, und eine oder mehrere in diese Nuten eingesetzten Leisten 313, die vom Stützpfosten 134 dann quer abstehen und dann entweder von innen mehr oder minder locker an Holzschindeln 131 anliegen oder eine schlauchartige Matte 320 offenhalten. Im Verbau verläuft die schlauchartige Matte 320 in etwa vertikal mit den großen Öffnungen oben und unten und umgibt die die zu schützende Pflanze. Wenn die Holzleiste 313 oben an einem Stützpfosten 134 angebracht ist, kann sie mit dem Enden der Matte 320 überworfen sein wie vorstehend beschrieben. Ein Stützpfosten 134 kann z. B. zwei über Eck stehende Nuten 314 aufweisen wie in Fig. 31 angedeutet, die dann winklig zueinander stehende Holzleisten 313 halten. Der Aufbau ähnelt dann dem der Figuren 29a und 29e.

Die in dieser Beschreibung und den Ansprüchen beschriebenen oder in einer Abbildung dargestellten Merkmale sollen auch dann als untereinander kombinierbar gelten, wenn ihre Kombination nicht ausdrücklich beschrieben ist, soweit die Kombination technisch möglich ist. Merkmale, die in einem bestimmten Kontext, einer bestimmten Ausführungsform, Figur oder einem bestimmten Anspruch beschrieben werden, sollen auch als von diesem Anspruch, Kontext, Ausführungsform oder Figur trennbar und als mit jeder anderen Figur, Anspruch, Ausführungsform oder Kontext kombinierbar angesehen werden, soweit dies technisch möglich ist. Beschriebene Merkmalskombinationen sollen auch dann als optional verstanden werden, wenn dies nicht ausdrücklich gesagt ist, es sei denn, die Kombination ist aus technischen Gründen erforderlich. Ausführungsformen und Figuren sollen nicht als notwendigerweise ausschließlich gegeneinander verstanden werden. Beschreibungen eines Verfahrens oder eines Ablaufs oder eines Verfahrensschrittes oder eines Ablaufschrittes sind auch als Beschreibung von Einrichtungen und/oder eventuell Programmanweisungen von ausführbarem Code auf einem Datenträger zu verstehen, die für die Implementierung des Verfahrens oder des Ablaufs oder des Verfahrensschrittes oder des Ablaufschrittes geeignet sind, und/oder sind auch als Beschreibung eines Artefakts zu verstehen, das mit dem Verfahrens oder Ablauf oder Verfahrensschritt oder Ablaufschritt erzeugt oder bearbeitet wurde, und umgekehrt. In der vorliegenden Beschreibung wird der Begriff Erfindung als die subjektiv vom Erfinder entwickelte Lehre verstanden.

Bezugszeichenliste

| | |
|---|---|
| 10 | Flachmaterial |
| 11 | Material |
| 11a, 11b | Materialkanten |
| 12 | Öffnung |
| 14 | Löcher |
| 20 | Rolle |
| 30 | Stützpfosten |
| 35 | Schnur |
| 40 | Verbissschutzvorrichtung |
| 41a, 41b | Kanten |
| 42 | Stift |
| 43 | Überlapp |
| 99 | Pflanze |
| 130 | Verbundmaterial |
| 131, 141 | Holzelemente |
| 131i | Innenseite |
| 131k | Oberkante |
| 131v | vertikale Kante |
| 132, 142 | Fasermaterial |
| 132ue | Überstand |
| 133 | Verbindung |
| 134 | einschlagbare Stütze |
| 201 | Hilfseinrichtung |
| 211 | Haltering |
| 221 | Klammer |
| 222 | Konterholz |
| 241 | Kopf |
| 242 | Kreuzung |
| 250 | Fertigungsvorrichtung |
| 251 | erste Zuführvorrichtung |
| 252 | zweite Zuführvorrichtung |
| 253 | Verbindevorrichtung |
| 254 | Transportvorrichtung |
| 255 | Konfektioniervorrichtung |
| 270 | Aufhalter |
| 270a,b | Ende |
| 272 | Leiste |
| 272a | Außenseite |

| 272i | Innenseite |
|------|------------|
| 274,275 | Klammer |
| 281 | Boden |
| 301 | Blechstreifen |
| 302 | Schlitz |
| 303 | Loch |
| 304 | Loch |
| 305 | Sicherungsstift |
| 306 | Niet |
| 307 | Draht |
| 308 | Loch |
| 309 | Lasche |
| 310 | Schlitz |
| 313 | Leiste |
| 314 | Nut |
| 320 | Matte |
| 321 | Garn |
| 322 | Maschenöffnung |

**Patentansprüche**

1. Aufhalter (270) für eine Verbissschutzvorrichtung, die mehrere im Verbau senkrecht und nebeneinander stehende längliche Holzelemente (131, 134, 141) oder Schindeln aufweist, die mit einem oder mehreren quer zur Längsrichtung der Schindeln laufenden biegsamen Streifen (132, 142) rohrähnlich zusammengehalten werden, **dadurch gekennzeichnet, dass** der Aufhalter (270) einen Körper mit einer steifen oder elastisch verformbaren Form aufweist, die so gestaltet ist, dass der Körper im verbauten Zustand in Umfangsrichtung betrachtet an zwei oder drei oder vier oder mehreren oder allen Holzelementen oder Schindeln der Verbissschutzvorrichtung anliegt.

2. Aufhalter (270) nach Anspruch 1, der aus einem oder mehreren natürlich und/oder biologisch abbaubaren Materialien gefertigt ist, und dessen Körper C- oder O- oder L-förmig ist.

3. Aufhalter (270) nach einem der vorherigen Ansprüche, dessen Körper mehrere längliche Holzleisten aufweist, von denen je zwei an ihren Endbereichen unter einem Winkel aneinander befestigt sind, der größer als 45 oder 60 oder 80° und/oder kleiner als 135 oder 120 oder 100° sein kann, wobei zwei Holzleisten mit einem vorzugsweise aus natürlich und/oder biologisch abbaubaren Materialien gefertigten Verbindungsmittel aneinander befestigt sein können, vorzugsweise mit einer Klammer oder Schraube oder mit einem Holzdübel.

4. Aufhalter (270) nach Anspruch 4 oder 5, wobei zwei zu verbindende Endbereiche zweier Holzleisten zueinander komplementäre Formgebungen aufweisen, vorzugsweise konkav-konvexe Bereiche.

5. Aufhalter (270) nach einem der vorherigen Ansprüche, dessen Körper einen oder mehrere vorzugsweise miteinander verbundene und vorzugsweise C- oder O- oder L-förmig gebogene Drähte oder Blechstreifen oder einen oder mehrere womöglich miteinander verbundene C-förmig gebogene Holzspäne aufweist.

6. Aufhalter (270) nach einem der vorherigen Ansprüche, dessen Körper so geformt ist, dass er an der Innenseite einiger oder aller Holzelemente und/oder an der Außenseite einiger oder aller Holzelemente anliegen kann.

7. Verbissschutzvorrichtung (180) mit einem Verbundmaterial (130), das aufweist:

   mehrere längliche, nebeneinander angeordnete Holzelemente (131, 134, 141),
   mindestens einen Streifen Fasermaterial (132, 142), der wenigstens zwischen zwei Holzelementen (131, 134, 141) und diese zwei Holzelemente wenigstens teilweise überdeckend angeordnet ist,
   Verbindungen (133) an den Überdeckungen der Holzelemente (131, 134, 141) und des Fasermaterials (132, 142),
   wobei die Holzelemente und das Fasermaterial und die Verbindungen natürlich und/oder biologisch abbaubar sind und als Verbundmaterial (130) zu einer Verbissschutzvorrichtung (180) aufstellbar oder aufgestellt sind,
   und wobei die Verbissschutzvorrichtung (180) außerdem aufweist:

   wenigstens einen in den Boden einschlagbaren Stützpfosten (134), an dem das Verbundmaterial befestigt oder befestigbar ist, und
   wenigstens einen vorzugsweise nach einem oder mehreren der vorherigen Ansprüche ausgebildeten Aufhalter (270), der eine Verschiebung des Grundrisses der Aufstellung der Verbissschutzvorrichtung (180) behindert.

8. Verbissschutzvorrichtung (180) nach Anspruch 7, bei der die Aufstellung das in den Boden Einschlagen eines Stützpfosten (134) umfasst, die Befestigung (275) des Verbundmaterials (130) an dem Stützpfosten (134) und die Ausrichtung des befestigten Verbundmaterials (130) in einem gewünschten Grundriss.

9. Verbissschutzvorrichtung (180) nach Anspruch 7 oder 8, bei dem der Aufhalter (270) einen sich in den Innenumfang der Verbissschutzvorrichtung einspreizenden und etwa in Umfangsrichtung laufenden Körper aufweist, vorzugsweise ein elastisches Holzelement oder einen Draht oder Blechstreifen.

10. Verbissschutzvorrichtung (180) nach Anspruch 7 oder 8, bei dem der Aufhalter (270) eine oder zwei oder mehrere Leisten (272) vorzugsweise aus Holz aufweist, deren jeweilige Außenseite (272a) in der Aufstellung an der Innenseite (131i) eines jeweiligen Holzelements (131) anliegt und deren jeweils gegenüberliegende Innenseite (272i) an den vertikalen Kanten (131v) der jeweiligen benachbarten Holzelemente (131) anliegt.

11. Verbissschutzvorrichtung (180) nach Anspruch 10, mit mindestens vier schindelartigen Holzelementen (131-1 - 131-4), von denen zwei (131-1, 131-2) an einem einschlagbaren Stützpfosten (134) befestigt sind, wobei die jeweils eine Seite (272-1) der Leiste (272) an der Innenseite (131i) eines jeweiligen Holzelements (131) anliegt, das nicht an einem einschlagbaren Stützpfosten (41, 134) befestigt ist, wobei die Leiste (272) an dem Holzelement (132) befestigt sein kann, vorzugsweise mit einer oder mehreren Klammern (274).

12. Verbissschutzvorrichtung (180), vorzugsweise nach einem der vorherigen Ansprüche, mit einem Verbundmaterial (130), das aufweist:

mehrere längliche, nebeneinander angeordnete Holzelemente (131, 134, 141),
mindestens einen Streifen Fasermaterial (132, 142), der wenigstens zwischen zwei Holzelementen (131, 134, 141) und diese zwei Holzelemente wenigstens teilweise überdeckend angeordnet ist,
Verbindungen (133) an den Überdeckungen der Holzelemente (131, 134, 141) und des Fasermaterials (132, 142),
wobei die Holzelemente und das Fasermaterial und die Verbindungen natürlich und/oder biologisch abbaubar sind und zu einer Verbissschutzvorrichtung (180) aufgestellt sind,
und wobei die Verbissschutzvorrichtung (180) außerdem wenigstens einen bei der Aufstellung der Verbissschutzvorrichtung (180) in den Boden einschlagbaren Stützpfosten (134) aufweist, an dem das Verbundmaterial befestigt oder befestigbar ist, vorzugsweise mit einer oder mehreren Klammern (275),
wobei die Dimensionierung so ist, dass in der Aufstellung ein oder mehrere oder alle Holzelemente (132) einen Abstand vom Boden haben, der größer als 5 oder 10 oder 15 oder 20 cm ist und der kleiner als 50 oder 30 oder 20 cm ist.

13. Verbissschutzvorrichtung (180) nach Anspruch 12, bei der in der Aufstellung die Holzelemente (132) gleiche oder unterschiedliche Abstände vom Boden haben, bei unterschiedlichen insbesondere so, dass wenigstens ein Holzelement weniger als 5 oder 2 cm vom Boden beabstandet ist oder auf ihm aufsteht.

14. Verbissschutzvorrichtung (180) mit

einer schlauchartig zusammengefassten Matte (212, 29a4, 320) mit oder aus natürlich oder biologisch abbaubarem Material, die ein Gestrick oder Gewebe oder Geflecht mit oder aus einem Garn mit oder aus natürlich oder biologisch abbaubarem Material sein oder aufweisen kann,
wenigstens einem vorzugsweise oben an der Verbissschutzvorrichtung (180) vorgesehenen Aufhalter (211, 270), der einen Körper mit einer steifen oder elastisch verformbaren Form aufweist, die so gestaltet ist, dass der Körper im verbauten Zustand in Umfangsrichtung der zusammengefassten Matte betrachtet an mehreren Stellen an der Matte anliegt und diese geöffnet hält, und
wenigstens einem in den Boden einschlagbaren Stützpfosten (134), an dem die Matte (320) und/oder der Aufhalter (211, 270) befestigt oder befestigbar ist.

15. Verbissschutzvorrichtung (180) nach einem der Ansprüche 7 bis 14, mit einer oder mehreren der folgenden Maßgaben:

• 4 oder 5 oder 6 oder mehr Holzelemente (131), die als Bretter oder Schindeln oder Spankistenholz ausgebildet sind, deren Breite (x-Richtung in Fig. 13) über 8 oder 10 cm und/oder unter 15 oder 12 cm liegen kann, wobei unterschiedliche Holzelemente (131) unterschiedliche Breiten haben können,
• Abstand benachbarter Holzelemente (131) voneinander über 5 oder 10 oder 15 mm und/oder unter 40 oder 30 oder 20 mm,
• über die Höhe (y-Richtung Fig. 13) eines Holzelements (131) verteilt 2 oder 3 oder 4 Streifen (132) des Fasermaterials,
• Breite eines Streifen (132) des Fasermaterials (y-Richtung in Fig. 13) über 1 oder 2 oder 3 cm und/oder unter 12 oder 10 oder 8 oder 5 cm,
• in der Aufstellung Höhe der Oberkante eines oder einiger oder aller Holzelemente (131) über dem Boden über 70 oder 80 oder 100 cm und/oder unter 150 oder 120 cm,
• die zwei äußersten Holzelemente (131) sind an dem Stützpfosten (134) befestigt oder befestigbar, vorzugsweise mit Klammern (275),
• der Stützpfosten (134) ist ein Rundholz mit Durchmesser größer 20 oder 30 mm und kleiner als 50 oder 40 oder 30 mm, oder ein Kantholz mit rechteckigem Querschnitt mit einer oder beiden Seitenlängen größer 20 oder 30 mm und kleiner als 50 oder 40 oder 30 mm

• die Holzelemente (131) sind flach ausgebildet und haben eine Dicke, die unter 5 oder 4 oder 3 mm liegt und die über 0,5 oder 1 mm liegt, und rechteckigen Grundriss haben können, und können jeweils eine oder mehrere Öffnungen (12) aufweisen,

• das Fasermaterial (132, 142) weist Naturfasern auf, insbesondere Fasern von Jute und/oder Sisal und/oder Kokos und/oder Hanf und/oder Bast und/oder Wolle und/oder Rindenstreifen und/oder Produktionsabfällen, wobei das Fasermaterial (132, 142) verwoben und/oder versponnen und/oder verknotet sein kann, insbesondere zu einem Seil (142) und/oder zu einem Gewebe (132), insbesondere einem Netz (132a, 132b), oder wobei das Fasermaterial (132, 142) unversponnen und/oder verfilzt verwendet ist.

## Fig.1

## Fig.2

## Fig.3

Fig.4

Fig.5

Fig.6

## Fig.7

## Fig.8

## Fig.9

## Fig.10

a)

14  14

14

10

43

14  14

b)

40

b

c)

30
35
43
40

d)

40

43

41b

41a

35

30

e)

43
40
14

b

10

30

14

35

31

## Fig. 11a

## Fig. 11b

## Fig. 11c

## Fig.12

## Fig.13

a)

b)

c)

## Fig.14

a)

141

142

$L_1$

$L_2$

b)

141

d

## Fig.15

131

132-1

132-2

Fig.16

Fig.17

Fig.18

Fig.19

a)

b)

Fig.20

Fig.21

180

133

211

134

132

212

211    132a

134a

Fig.22

131,134,211    221b    221

132    222    221c    221a

Fig.23

132

132

y

x

Fig. 24

241

131, 134

132

242

241

y

x

Fig. 25

250

132

131, 134

253

241

252

251

253a

254

255

x

# Fig. 26

Fig. 27a

Fig. 27b

## Fig. 27c

## Fig.27d

# Fig.27e

27e1

27e2

# Fig.27f

131

131

131

131

270

131

134

27f1

27f1a  27f1b

# Fig.27g

27g2  134  132

270

27g1b

131

270

131

134

27g1a

134

27g1

131

131

## Fig.27h

27h2

27h1

27h3

27h2

27h4

27h2

27h1

## Fig.27i

27i1a

27i1b

27i1

270

## Fig.27j

27j1a   27j2   27j1b

27j1

270

## Fig.27k

## Fig.27l

# Fig.27m

# Fig.27n

# Fig.28

## Fig.29a

## Fig.29b

## Fig.29c

## Fig.29d

## Fig.29e

## Fig.29f

Fig.29g

180

29a4

29a1

29a1

Fig.29h

180

29a4

29c1

134

134

# Fig. 30a

# Fig. 30b

Fig. 30c

Fig. 30d

## Fig. 31

## Fig. 32a

## Fig. 32b

## Fig. 32c

Europäisches
Patentamt

European
Patent Office

Office européen
des brevets

**EUROPÄISCHER RECHERCHENBERICHT**

Nummer der Anmeldung

EP 24 18 6266

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 957 163 A1 (MEYERHUBER ALFRED [DE]; WALTHER HANS [DE]) 23. Februar 2022 (2022-02-23) | 1,2,7, 10-14 | INV. A01G13/02 |
| A | * Absätze [0001], [0104], [0089], [0122], [0086], [0088], [0040], [0072]; Abbildung 14 * | 3,4 | |
| | - - - - - | | |
| X | CH 297 306 A (KUHN ALFRED [CH]) 31. März 1954 (1954-03-31) | 1,5,6,8, 9,15 | |
| A | * Seite 1 Zeile 24-42, Seite 2 Zeile 5-19; Anspruch 1; Abbildungen 1,2 * | 3,4 | |
| | - - - - - | | |
| A | GB 21254 A A.D. 1913 (PRATT-BARLOW FRANCIS) 5. März 1914 (1914-03-05) * Zusammenfassung; Abbildungen 1-3 * | 1-15 | |
| | - - - - - | | |

**RECHERCHIERTE SACHGEBIETE (IPC)**

A01G

Der vorliegende Recherchenbericht wurde für alle Patentansprüche erstellt

| Recherchenort | Abschlußdatum der Recherche | Prüfer |
|---|---|---|
| Den Haag | 11. November 2024 | Spitz, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 6266

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-11-2024

| Im Recherchenbericht angeführtes Patentdokument | Datum der Veröffentlichung | Mitglied(er) der Patentfamilie | Datum der Veröffentlichung |
|---|---|---|---|
| EP 3957163 A1 | 23-02-2022 | DE 202021101762 U1<br>DE 202021106008 U1<br>EP 3957163 A1 | 14-04-2021<br>17-01-2022<br>23-02-2022 |
| CH 297306 A | 31-03-1954 | KEINE | |
| GB 191321254 A | 05-03-1914 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202019106087 U1
- DE 10025679 A1
- FR 2769794 A1
- US 2005172550 A1
- EP 3957163 A1

- FR 2850242 A1
- WO 03061369 A1
- US 8745920 B1
- DE 102010017773 A1